(19) Europäisches Patentamt
European Patent Office
Office européen des brevets

(11) EP 3 362 499 B1

(12) # EUROPEAN PATENT SPECIFICATION

(45) Date of publication and mention of the grant of the patent:
**22.09.2021 Bulletin 2021/38**

(21) Application number: **16787656.4**

(22) Date of filing: **11.10.2016**

(51) Int Cl.:
***C08G 18/79*** *(2006.01)* ***C08G 18/24*** *(2006.01)*
***C08G 18/42*** *(2006.01)*

(86) International application number:
**PCT/US2016/056335**

(87) International publication number:
**WO 2017/066142 (20.04.2017 Gazette 2017/16)**

(54) **SYSTEMS AND METHODS FOR FORMING POLYURETHANES**

SYSTEME UND VERFAHREN ZUR FORMUNG VON POLYURETHANEN

SYSTÈMES ET PROCÉDÉS DE FORMATION DE POLYURÉTHANNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2015 US 201562240560 P**
**10.10.2016 US 201615289271**

(43) Date of publication of application:
**22.08.2018 Bulletin 2018/34**

(73) Proprietor: **Eastman Chemical Company**
**Kingsport, TN 37660 (US)**

(72) Inventors:
- **WEBSTER, Geoffrey, Richard**
**Kingsport, TN 37664 (US)**
- **CHLODNEY, Raymond, T.**
**Hopewell Junction, NY 12533 (US)**
- **KOCHEMBA, William, Michael**
**Chursh Hill, TN 37642 (US)**
- **FENG, Linqian**
**Gray, TN 37615 (US)**

(74) Representative: **Ricker, Mathias**
**Wallinger Ricker Schlotter Tostmann**
**Patent- und Rechtsanwälte Partnerschaft mbB**
**Zweibrückenstrasse 5-7**
**80331 München (DE)**

(56) References cited:
**EP-A1- 1 178 060**
**EP-A1- 2 746 311**
**DE-A1- 4 401 544**
**US-A1- 2009 011 124**
**US-A1- 2010 204 363**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 362 499 B1

## Description

## BACKGROUND

### 1. Field of the Invention

The present invention relates generally to polyurethanes. In particular, this invention relates to reaction systems for making polyurethanes and methods of making and using the same.

### 2. Description of Related Art

Polyurethanes can have a variety of forms and may be used in many different applications. For example, polyurethanes may be utilized as components in various commercial and industrial coatings, in adhesives, in sealants, and even as starting materials for injection molding operations. Polyurethane foams may be used in various insulation, packaging, and structural applications. Polyurethanes are typically formed by reacting a polyol component with an isocyanate component. Such reactions are typically performed in the presence of a catalyst, optionally in combination with one or more other additives.

Many applications require that the polyurethane exhibit a rapid cure rate while still maintaining a sufficient level of hardness and weatherability. Often, primary alcohols are selected as the hydroxyl-functional component due to the relatively high reactivity of these compounds with isocyanates. However, polyurethanes formed using primary alcohols often exhibit lower hardness than required for many applications, and, as a result, most formulations utilizing polyurethanes formed from primary alcohols require another polyol, such as an acrylic polyol, to be included with the primary alcohol during formation of the polyurethane in order to optimize the strength and flexibility of the material.

Therefore, a need exists for a reaction system capable of forming a polyurethane that exhibits rapid cure and produces a polyurethane having a desirable balance of toughness, weatherability, and flexibility. Advantageously, the polyurethane could be used in a wide variety of applications.

EP 1 178 06 A1 discloses reactive polyester polyols on the basis of castor acid esters for the reaction with diisocyanates.

EP 2 746 311 A1 discloses a waterborne polyurethane coating composition based on an isocyanate component, 2,2,4,4-tetramethylcyclobutandiol, i. e. an monomeric polyol, a polyester polyol, i.e. a polymeric polyol, and a zinc catalyst.

DE 44 01 544 A1 discloses waterborne polyurethane resins based on a polymeric polyester polyol, i.e. component (b), and a monomeric polyol component comprising primary hydroxyl groups, i.e. ($a_1$), or tertiary hydroxyl groups, i.e. ($a_2$), and a diisocyanate component

US 2010/204363 discloses a curable polyester composition which is in one embodiment based on 2,2,4,4-tetramethyl-1,3 cyclobutandiol, a diacid residue, optionally a diisocyanate crosslinker and a catalyst for promoting the polycondensation reaction

US 2009/011124 discloses an organometallic complex catalyst from zinc(II) with substituted amidines which in one embodiments is represented by Zn (1-methylimidazole)$_2$(acetate)$_2$. The catalyst is used in a polyurethane powder composition containing a binder component A) comprising hydroxyl group and a hardener component B) comprising uretdione groups.

## SUMMARY

One embodiment of the present invention concerns a reaction system for forming a urethane and/or polyurethane. The reaction system comprises (a) at least one of a monomeric polyol having hindered secondary hydroxyl groups and a polymeric polyol comprising residues of the monomeric polyol; (b) an isocyanate; and (c) a zinc-containing catalyst.

Another embodiment of the present invention concerns a reaction system for forming a urethane and/or polyurethane. The reaction system comprises (a) a polymeric polyol comprising residues of a monomeric polyol having secondary hydroxyl groups; (b) an aliphatic isocyanate; and (c) a zinc-containing catalyst. When combined and cured at a temperature of 55°C, components (a) through (c) react at a cure rate of at least 0.045 $min^{-1}$.

Yet another embodiment of the present invention concerns a reaction system for forming a urethane and/or polyurethane. The reaction system comprises (a) at least one of a monomeric polyol selected from the group consisting of 2,2,4,4-tetramethyl-1,3-cyclobutanediol, 2,2,4-trimethyl-1,3-pentanediol, 2,4-diethyl-1,5-pentanediol, 2-butyl-2-ethyl-1,3-propanediol, 3-hydroxy-2,2,4,4-tetramethylcyclobutanone, and combinations thereof, and a polymeric polyol comprising residues of the monomeric polyol; (b) an aliphatic isocyanate; and (c) a zinc-containing catalyst that includes at least one carboxylate ligand and at least one imidazole ligand.

Still another embodiment of the present invention concerns a cured urethane- or polyurethane-containing material comprising residues of at least one of a monomeric polyol comprising hindered secondary hydroxyl groups and a polymeric polyol comprising residues of the monomeric polyol, an isocyanate, and a zinc-containing catalyst.

A further embodiment of the present invention concerns a method of forming a urethane- and/or polyurethane-containing composition. The method comprises reacting at least one of a monomeric polyol comprising secondary hydroxyl groups and a polymeric polyol comprising residues of the monomeric polyol with an isocyanate in the presence of a zinc-containing catalyst to form a urethane and/or a polyurethane. The reaction is carried out at a maximum temperature of less than 100°C and wherein the composition has a gel time, measured at 55°C, of less than 30 minutes.

A still further embodiment of the present invention concerns a method of forming a urethane- and/or polyurethane-containing composition. The method comprises reacting at least one of a monomeric polyol comprising hindered secondary hydroxyl groups and a polymeric polyol comprising residues of the monomeric polyol with an isocyanate in the presence of a zinc-containing catalyst to form a urethane and/or a polyurethane.

## BRIEF DESCRIPTION OF THE DRAWINGS

Various embodiments of the present invention are described in detail below with reference to the attached drawing Figures, wherein:

FIG. 1 is a graphical depiction of the textile test results for several coating samples prepared and tested according to the procedure described in Example 2;
FIG. 2 is a graphical depiction of the cotton free test results for several coating samples prepared and tested according to the procedure described in Example 2;
FIG. 3 is a graphical depiction of the textile test results for additional coating samples prepared and tested according to the procedure described in Example 2;
FIG. 4 is a graphical depiction of the cotton free test results for additional coating samples prepared and tested according to the procedure described in Example 2;
FIG. 5 is an FTIR spectra of the control coating composition prepared according to the procedure described in Example 3, particularly illustrating the reduction of the NCO-stretching peaks and the increase of the N-H stretching peaks, which respectively indicate the reduction of isocyanate and the appearance of polyurethane during the reaction;
FIG. 6 is graph of the reciprocal of normalized isocyanate peak area as a function of temperature and time at both 50°C and 60°C for the control formulation described in Example 3;
FIG. 7 is a graph of the storage shear modulus (G'), loss shear modulus (G") and tan delta, as a function of cure time, used to determine the gel time of coating compositions as described in Example 3;
FIG. 8 is a chart summarizing the cure rates for several coating compositions formulated as described in Example 3;
FIG. 9 is a chart summarizing the gel times for several coating compositions formulated as described in Example 3; and
FIG. 10 is a graph of the normalized concentration of NCO as a function of time for several alcohol-isocyanate systems catalyzed by various catalysts as described in Example 4.

## DETAILED DESCRIPTION

According to various embodiments of the present invention, there is provided a reaction system for forming a urethane and/or a polyurethane, said reaction system comprising:

(a) at least one of a monomeric polyol having a secondary hydroxyl group wherein said monomeric polyol is defined by the following formula (1):

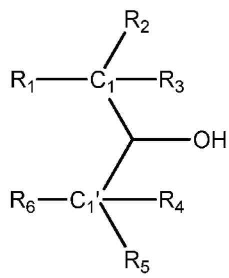

(1)

,

wherein at least three of $R_1$ through $R_6$ are not hydrogen and wherein at least one of $R_1$ through $R_6$ comprises

a hydroxyl group or a hydroxyl-substituted hydrocarbon group,
wherein when not hydrogen the groups $R_1$ through $R_6$ may each independently be an alkyl or aryl group,
wherein further compound of formula (1) may itself be cyclic, such that at least one of the groups $R_1$ through $R_3$ and at least one of the groups $R_4$ through $R_6$ are part of the same substituent, separated from each another by at least one additional carbon atom,
and a polymeric polyol comprising residues of said monomeric polyol;

(b) an isocyanate; and
(c) a zinc-containing catalyst, wherein said zinc-containing catalyst comprises at least one imidazole ligand and at least one carboxylate ligand.

When combined, the isocyanate and the polyol react to form the urethane or polyurethane polymer. The polyol may include at least one secondary hydroxyl group and, in some embodiments, the secondary hydroxyl group may be a hindered secondary hydroxyl group.

Although hindered secondary hydroxyl groups are typically less reactive than primary or unhindered secondary hydroxyl groups, embodiments of the present invention exist in which selection of a suitable zinc-containing catalyst facilitates unexpectedly enhanced reaction rates or cure rates between the isocyanate and the polyol that includes hindered secondary hydroxyl groups. It has also been found that such catalyst may, even, at times, preferentially catalyze the reaction of the isocyanate with the polyol including hindered secondary hydroxyl groups, as compared to polyol including unhindered secondary or primary hydroxyl groups. The use of such catalysts in polyurethane reaction systems permits inclusion of a wider variety of polyols, which, in turn, facilitates formation of various urethanes and polyurethanes having a wider range of and/or more an optimized set properties.

The polyurethane reaction systems of the present invention may include at least one isocyanate, at least one polyol, and at least one zinc-containing catalyst. Each of these components may be present in varying amounts, depending on the desired properties or specific end use of the resulting polyurethane. In some embodiments, the reaction systems of the present invention may include at least one isocyanate in an amount of at least about 5, at least about 10, at least about 15, at least about 20, at least about 25, at least about 30, at least about 35, at least about 40, at least about 45, at least about 50, at least about 55, at least about 60, at least about 65, at least about 70, at least about 75, at least about 80, at least about 85, at least about 90, or at least about 95 weight percent, In the some embodiments, the total amount of isocyanate in the inventive reaction systems can be not more than about 95, not more than about 90, not more than about 85, not more than about 80, not more than about 75, not more than about 70, not more than about 65, not more than about 60, not more than about 55, not more than about 50, not more than about 45, not more than about 40, not more than about 35, not more than about 30, not more than about 25, not more than about 20, or not more than about 15 weight percent, based on the total resin solids, as measured according to ASTM D-2369. As used herein, the terms "total solids content" and "total resin solids" are equivalent and both are measured according to ASTM D-2369.

The amount of isocyanate in the reaction system can be in the range of from about 5 to about 95 weight percent, about 5 to about 90 weight percent, about 5 to about 85 weight percent, about 5 to about 80 weight percent, about 5 to about 75 weight percent, about 5 to about 70 weight percent, about 5 to about 65 weight percent, about 5 to about 60 weight percent, about 5 to about 55 weight percent, about 5 to about 50 weight percent, about 5 to about 45 weight percent, about 5 to about 40 weight percent, about 5 to about 35 weight percent, about 5 to about 30 weight percent, about 5 to about 25 weight percent, about 5 to about 20 weight percent, about 5 to about 15 weight percent, about 10 to about 90 weight percent, about 10 to about 90 weight percent, about 10 to about 85 weight percent, about 10 to about 80 weight percent, about 10 to about 75 weight percent, about 10 to about 70 weight percent, about 10 to about 65 weight percent, about 10 to about 60 weight percent, about 10 to about 55 weight percent, about 10 to about 50 weight percent, about 10 to about 45 weight percent, about 10 to about 40 weight percent, about 10 to about 35 weight percent, about 10 to about 30 weight percent, about 10 to about 25 weight percent, about 10 to about 20 weight percent, about 10 to about 15 weight percent, about 15 to about 95 weight percent, about 15 to about 90 weight percent, about 15 to about 85 weight percent, about 15 to about 80 weight percent, about 15 to about 75 weight percent, about 15 to about 70 weight percent, about 15 to about 65 weight percent, about 15 to about 60 weight percent, about 15 to about 55 weight percent, about 15 to about 50 weight percent, about 15 to about 45 weight percent, about 15 to about 40 weight percent, about 15 to about 35 weight percent, about 15 to about 30 weight percent, about 15 to about 25 weight percent, about 15 to about 20 weight percent, about 20 to about 95 weight percent, about 20 to about 90 weight percent, about 20 to about 85 weight percent, about 20 to about 80 weight percent, about 20 to about 75 weight percent, about 20 to about 70 weight percent, about 20 to about 65 weight percent, about 20 to about 60 weight percent, about 20 to about 55 weight percent, about 20 to about 50 weight percent, about 20 to about 45 weight percent, about 20 to about 40 weight percent, about 20 to about 35 weight percent, about 20 to about 30 weight percent, about 20 to about 25 weight percent, about 25 to about 95 weight percent, about 25 to about 90 weight percent, about 25 to about 85 weight percent, about 25 to about 80 weight percent, about 25 to about 75 weight percent, about 25 to about 70 weight percent, about

25 to about 65 weight percent, about 25 to about 60 weight percent, about 25 to about 55 weight percent, about 25 to about 50 weight percent, about 25 to about 45 weight percent, about 25 to about 40 weight percent, about 25 to about 35 weight percent, about 25 to about 30 weight percent, about 30 to about 95 weight percent, about 30 to about 90 weight percent, about 30 to about 85 weight percent, about 30 to about 80 weight percent, about 30 to about 75 weight percent, about 30 to about 70 weight percent, about 30 to about 65 weight percent, about 30 to about 60 weight percent, about 30 to about 55 weight percent, about 30 to about 50 weight percent, about 30 to about 45 weight percent, about 30 to about 40 weight percent, about 30 to about 35 weight percent, about 35 to about 95 weight percent, about 35 to about 90 weight percent, about 35 to about 85 weight percent, about 35 to about 80 weight percent, about 35 to about 75 weight percent, about 35 to about 70 weight percent, about 35 to about 65 weight percent, about 35 to about 60 weight percent, about 35 to about 55 weight percent, about 35 to about 50 weight percent, about 35 to about 45 weight percent, about 35 to about 40 weight percent, about 40 to about 95 weight percent, about 40 to about 90 weight percent, about 40 to about 85 weight percent, about 40 to about 80 weight percent, about 40 to about 75 weight percent, about 40 to about 70 weight percent, about 40 to about 65 weight percent, about 40 to about 60 weight percent, about 40 to about 55 weight percent, about 40 to about 50 weight percent, about 40 to about 45 weight percent, about 45 to about 95 weight percent, about 45 to about 90 weight percent, about 45 to about 85 weight percent, about 45 to about 80 weight percent, about 45 to about 75 weight percent, about 45 to about 70 weight percent, about 45 to about 65 weight percent, about 45 to about 60 weight percent, about 45 to about 55 weight percent, about 45 to about 50 weight percent, about 50 to about 95 weight percent, about 50 to about 90 weight percent, about 50 to about 85 weight percent, about 50 to about 80 weight percent, about 50 to about 75 weight percent, about 50 to about 70 weight percent, about 50 to about 65 weight percent, about 50 to about 60 weight percent, about 50 to about 55 weight percent, about 55 to about 95 weight percent, about 55 to about 90 weight percent, about 55 to about 85 weight percent, about 55 to about 80 weight percent, about 55 to about 75 weight percent, about 55 to about 70 weight percent, about 55 to about 65 weight percent, about 55 to about 60 weight percent, about 60 to about 95 weight percent, about 60 to about 90 weight percent, about 60 to about 85 weight percent, about 60 to about 80 weight percent, about 60 to about 75 weight percent, about 60 to about 70 weight percent, about 60 to about 65 weight percent, about 65 to about 95 weight percent, about 65 to about 90 weight percent, about 65 to about 85 weight percent, about 65 to about 80 weight percent, about 65 to about 75 weight percent, about 65 to about 70 weight percent, about 70 to about 95 weight percent, about 70 to about 90 weight percent, about 70 to about 85 weight percent, about 70 to about 80 weight percent, about 70 to about 75 weight percent, about 75 to about 95 weight percent, about 75 to about 90 weight percent, about 75 to about 85 weight percent, about 75 to about 80 weight percent, about 80 to about 95 weight percent, about 80 to about 90 weight percent, about 80 to about 85 weight percent, about 85 to about 95 weight percent, about 85 to about 90 weight percent, or about 90 to about 95 weight percent, based on the total resin solids, measured according to ASTM D-2369.

The total amount of polyol in the reaction system according to various embodiments of the present invention can be at least about 5, at least about 10, at least about 15, at least about 20, at least about 25, at least about 30, at least about 35, at least about 40, at least about 45, at least about 50, at least about 55, at least about 60, at least about 65, at least about 70, at least about 75, at least about 80, at least about 85, at least about 90, or at least about 95 weight percent, based on the total resin solids, as measured according to ASTM D-2369. In some embodiments, the total amount of polyol in the reaction system can be not more than about 95, not more than about 90, not more than about 85, not more than about 80, not more than about 75, not more than about 70, not more than about 65, not more than about 60, not more than about 55, not more than about 50, not more than about 45, not more than about 40, not more than about 35, not more than about 30, not more than about 25, not more than about 20, or not more than about 15 weight percent, based on the total resin solids, as measured according to ASTM D-2369.

The amount of polyol in the reaction system can be in the range of from about 5 to about 95 weight percent, about 5 to about 90 weight percent, about 5 to about 85 weight percent, about 5 to about 80 weight percent, about 5 to about 75 weight percent, about 5 to about 70 weight percent, about 5 to about 65 weight percent, about 5 to about 60 weight percent, about 5 to about 55 weight percent, about 5 to about 50 weight percent, about 5 to about 45 weight percent, about 5 to about 40 weight percent, about 5 to about 35 weight percent, about 5 to about 30 weight percent, about 5 to about 25 weight percent, about 5 to about 20 weight percent, about 5 to about 15 weight percent, about 10 to about 90 weight percent, about 10 to about 90 weight percent, about 10 to about 85 weight percent, about 10 to about 80 weight percent, about 10 to about 75 weight percent, about 10 to about 70 weight percent, about 10 to about 65 weight percent, about 10 to about 60 weight percent, about 10 to about 55 weight percent, about 10 to about 50 weight percent, about 10 to about 45 weight percent, about 10 to about 40 weight percent, about 10 to about 35 weight percent, about 10 to about 30 weight percent, about 10 to about 25 weight percent, about 10 to about 20 weight percent, about 10 to about 15 weight percent, about 15 to about 95 weight percent, about 15 to about 90 weight percent, about 15 to about 85 weight percent, about 15 to about 80 weight percent, about 15 to about 75 weight percent, about 15 to about 70 weight percent, about 15 to about 65 weight percent, about 15 to about 60 weight percent, about 15 to about 55 weight percent, about 15 to about 50 weight percent, about 15 to about 45 weight percent, about 15 to about 40 weight percent, about 15 to about 35 weight percent, about 15 to about 30 weight percent, about 15 to about 25 weight percent,

about 15 to about 20 weight percent, about 20 to about 95 weight percent, about 20 to about 90 weight percent, about 20 to about 85 weight percent, about 20 to about 80 weight percent, about 20 to about 75 weight percent, about 20 to about 70 weight percent, about 20 to about 65 weight percent, about 20 to about 60 weight percent, about 20 to about 55 weight percent, about 20 to about 50 weight percent, about 20 to about 45 weight percent, about 20 to about 40 weight percent, about 20 to about 35 weight percent, about 20 to about 30 weight percent, about 20 to about 25 weight percent, about 25 to about 95 weight percent, about 25 to about 90 weight percent, about 25 to about 85 weight percent, about 25 to about 80 weight percent, about 25 to about 75 weight percent, about 25 to about 70 weight percent, about 25 to about 65 weight percent, about 25 to about 60 weight percent, about 25 to about 55 weight percent, about 25 to about 50 weight percent, about 25 to about 45 weight percent, about 25 to about 40 weight percent, about 25 to about 35 weight percent, about 25 to about 30 weight percent, about 30 to about 95 weight percent, about 30 to about 90 weight percent, about 30 to about 85 weight percent, about 30 to about 80 weight percent, about 30 to about 75 weight percent, about 30 to about 70 weight percent, about 30 to about 65 weight percent, about 30 to about 60 weight percent, about 30 to about 55 weight percent, about 30 to about 50 weight percent, about 30 to about 45 weight percent, about 30 to about 40 weight percent, about 30 to about 35 weight percent, about 35 to about 95 weight percent, about 35 to about 90 weight percent, about 35 to about 85 weight percent, about 35 to about 80 weight percent, about 35 to about 75 weight percent, about 35 to about 70 weight percent, about 35 to about 65 weight percent, about 35 to about 60 weight percent, about 35 to about 55 weight percent, about 35 to about 50 weight percent, about 35 to about 45 weight percent, about 35 to about 40 weight percent, about 40 to about 95 weight percent, about 40 to about 90 weight percent, about 40 to about 85 weight percent, about 40 to about 80 weight percent, about 40 to about 75 weight percent, about 40 to about 70 weight percent, about 40 to about 65 weight percent, about 40 to about 60 weight percent, about 40 to about 55 weight percent, about 40 to about 50 weight percent, about 40 to about 45 weight percent, about 45 to about 95 weight percent, about 45 to about 90 weight percent, about 45 to about 85 weight percent, about 45 to about 80 weight percent, about 45 to about 75 weight percent, about 45 to about 70 weight percent, about 45 to about 65 weight percent, about 45 to about 60 weight percent, about 45 to about 55 weight percent, about 45 to about 50 weight percent, about 50 to about 95 weight percent, about 50 to about 90 weight percent, about 50 to about 85 weight percent, about 50 to about 80 weight percent, about 50 to about 75 weight percent, about 50 to about 70 weight percent, about 50 to about 65 weight percent, about 50 to about 60 weight percent, about 50 to about 55 weight percent, about 55 to about 95 weight percent, about 55 to about 90 weight percent, about 55 to about 85 weight percent, about 55 to about 80 weight percent, about 55 to about 75 weight percent, about 55 to about 70 weight percent, about 55 to about 65 weight percent, about 55 to about 60 weight percent, about 60 to about 95 weight percent, about 60 to about 90 weight percent, about 60 to about 85 weight percent, about 60 to about 80 weight percent, about 60 to about 75 weight percent, about 60 to about 70 weight percent, about 60 to about 65 weight percent, about 65 to about 95 weight percent, about 65 to about 90 weight percent, about 65 to about 85 weight percent, about 65 to about 80 weight percent, about 65 to about 75 weight percent, about 65 to about 70 weight percent, about 70 to about 95 weight percent, about 70 to about 90 weight percent, about 70 to about 85 weight percent, about 70 to about 80 weight percent, about 70 to about 75 weight percent, about 75 to about 95 weight percent, about 75 to about 90 weight percent, about 75 to about 85 weight percent, about 75 to about 80 weight percent, about 80 to about 95 weight percent, about 80 to about 90 weight percent, about 80 to about 85 weight percent, about 85 to about 95 weight percent, about 85 to about 90 weight percent, or about 90 to about 95 weight percent, based on the total resin solids in the composition, measured according to ASTM D-2369.

Polyurethane reaction systems of the present invention may include at least one isocyanate. As used herein, the term "isocyanate" refers to a component that includes at least one reactive isocyanate group. Suitable types of isocyanates may include, for example, monoisocyanates, diisocyanates, polyisocyanates, oligomers thereof, and polymers thereof. The isocyanate may be blocked or unblocked. The isocyanates used in the reaction systems of the present invention have theoretical isocyanate functionality of at least about 2.25, at least about 2.40, at least about 2.5, at least about 2.75, at least about 2.80, or at least about 3 NCO equivalent grams per chain (NCO Eg/chain) and not more than about 5, not more than about 4, not more than about 3.75, not more than about 3.5, not more than about 3 NCO Eg/chain.

The isocyanate have a theoretical isocyanate functionality in the range of from about 2.25 to about 5 NCO Eg/chain, about 2.25 to about 4 NCO Eg/chain, about 2.25 to about 3.75 NCO Eg/chain, about 2.25 to about 3.5 NCO Eg/chain, about 2.25 to about 3 NCO Eg/chain, about 2.40 to about 5 NCO Eg/chain, about 2.40 to about 4 NCO Eg/chain, about 2.40 to about 3.75 NCO Eg/chain, about 2.40 to about 3.5 NCO Eg/chain, about 2.40 to about 3 NCO Eg/chain, about 2.50 to about 5 NCO Eg/chain, about 2.50 to about 4 NCO Eg/chain, about 2.50 to about 3.75 NCO Eg/chain, about 2.50 to about 3.5 NCO Eg/chain, about 2.50 to about 3 NCO Eg/chain, about 2.75 to about 5 NCO Eg/chain, about 2.75 to about 4 NCO Eg/chain, about 2.75 to about 3.75 NCO Eg/chain, about 2.75 to about 3.5 NCO Eg/chain, about 2.75 to about 3 NCO Eg/chain, about 2.80 to about 5 NCO Eg/chain, about 2.80 to about 4 NCO Eg/chain, about 2.80 to about 3.75 NCO Eg/chain, about 2.80 to about 3.5 NCO Eg/chain, about 2.80 to about 3 NCO Eg/chain, about 3 to about 5 NCO Eg/chain, about 3 to about 4 NCO Eg/chain, about 3 to about 3.75 NCO Eg/chain, or about 3 to about 3.5 NCO Eg/chain.

In some embodiments, the isocyanate or isocyanates utilized in reaction systems of the present invention may

comprise aliphatic isocyanates, substituted aliphatic isocyanates, aromatic isocyanates, substituted aromatic isocyanates, or combinations of both aliphatic and aromatic isocyanates.

Examples of suitable aromatic isocyanates can include, but are not limited to, 2,4-toluene diisocyanate; 2,6-toluene diisocyanate; 2,4'-methylene diphenyl diisocyanate; 2,6-methylene diphenyl diisocyanate; p-phenylene diisocyanate; and polymethylenepolyphenyl polyisocyanate. Examples of suitable aliphatic isocyanates can include, but are not limited to, hexamethylene diisocyanate; isophorone diisocyanate; methylene dicyclohexyl diisocyanate; ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3-diisocyanate; and cyclohexane-1,4-diisocyanate. In some embodiments, the isocyanate may be selected from the group consisting of methylene dicyclohexyl diisocyanate, hexamethylene diisocyanate, isophorone diisocyanate, and combinations thereof. In some embodiments, the isocyanate may be selected from the group consisting of 2,4-toluene diisocyanate, 2,6-toluene diisocyanate, 2,4'-methylene diphenyl diisocyanate, 2,6-methylene diphenyl diisocyanate, and combinations thereof.

Typically, the amount of aromatic isocyanates utilized in the reaction systems described herein can be not more than about 25 weight percent, based on the total amount of isocyanates in the reaction system. Aromatic isocyanates may be present in an amount of at least about 0.5, at least about 1, at least about 2, or at least about 5 weight percent and/or not more than about 20, not more than about 15, not more than about 10, not more than about 5, not more than about 2, or not more than about 1 weight percent, based on the total weight of isocyanates, or aromatic isocyanates may be present in an amount in the range of from about 0.5 to about 20 weight percent, about 0.5 to about 15 weight percent, about 0.5 to about 10 weight percent, about 0.5 to about 5 weight percent, about 0.5 to about 2 weight percent, about 0.5 to about 1, about 1 to about 20 weight percent, about 1 to about 15 weight percent, about 1 to about 10 weight percent, about 1 to about 5 weight percent, about 1 to about 2 weight percent, about 2 to about 20 weight percent, about 2 to about 15 weight percent, about 2 to about 10 weight percent, about 2 to about 5 weight percent, about 5 to about 20 weight percent, about 5 to about 15 weight percent, about 5 to about 10 weight percent, based on the total weight of isocyanates in the reaction system.

When present, the one or more aromatic isocyanates are accompanied by at least one aliphatic isocyanate. For example, the ratio of aromatic isocyanates to aliphatic isocyanates can be not more than about 4:1, not more than about 3.5:1, not more than about 3:1, not more than about 2.5:1, not more than about 2:1, not more than about 1.5:1, not more than about 1:1, not more than about 0.9:1, not more than about 0.75:1, not more than about 0.50:1, not more than about 0.40:1, not more than about 0.35:1, or not more than about 0.25:1, and may be greater than 0.

Polyurethane reaction systems of the present invention also include at least one polyol. As used herein, the term "polyol" refers to a hydroxyl-functional component that includes two or more reactive hydroxyl groups. The polyol may be a monomeric polyol, or it may be a polymeric polyol formed by reacting a hydroxyl functional monomer with one or more other monomers. Suitable types of polymeric polyols can include, for example, polyether polyols, polyester polyols, polyacrylic polyols, and combinations thereof, several examples of which are described in further detail below. The polyester, polyether, and polyacrylic polyols of the present invention are not linear, and have a functionality as described in further detail below.

According to some embodiments, the monomeric polyol used in the reaction system, or used to form the polymeric polyols used in the reaction system, may be defined by the following formula (1):

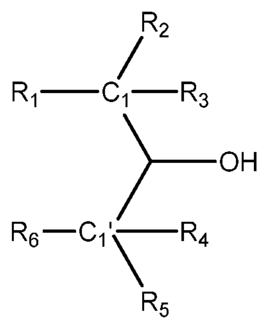

(1),

wherein at least two of the groups $R_1$ through $R_6$ are not hydrogen and at least one of the groups $R_1$ through $R_6$ comprise a hydroxyl group or a hydroxyl-substituted hydrocarbon group. In some embodiments, the non-hydrogen groups can include, for example, $C_1$ to $C_{20}$ alkyl groups, $C_4$ to $C_{20}$ cycloalkyl groups, $C_6$ to $C_{20}$ aryl groups, substitutions thereof, and combinations thereof. As used herein, the general term "$C_x$" refers to a hydrocarbon component comprising x carbon atoms per molecule and, unless otherwise noted, is intended to include all straight-chain, branched, and olefinic isomers thereof. Thus, "$C_2$" is intended to encompass both ethane and ethylene, while "$C_5$" is intended to encompass isopentane, normal pentane, and $C_5$ olefins, unless otherwise noted.

When not hydrogen, the groups $R_1$ through $R_6$ may each independently be an alkyl or aryl group having any suitable number of carbon atoms. When any of the groups $R_1$ through $R_6$ comprise an alkyl group, the alkyl group can have at least 2, at least 3, at least 4, at least 5, at least 6, at least 8, or at least 10 carbon atoms and/or not more than 20, not more than 18, not more than 16, not more than 14, not more than 12, not more than 10, not more than 8 carbon atoms. The alkyl group can have 2 to 20 carbon atoms, 2 to 18 carbon atoms, 2 to 16 carbon atoms, 2 to 14 carbon atoms, 2 to 12 carbon atoms, 2 to 10 carbon atoms, 2 to 8 carbon atoms, 3 to 20 carbon atoms, 3 to 18 carbon atoms, 3 to 16 carbon atoms, 3 to 14 carbon atoms, 3 to 12 carbon atoms, 3 to 10 carbon atoms, 3 to 8 carbon atoms, 4 to 20 carbon atoms, 4 to 18 carbon atoms, 4 to 16 carbon atoms, 4 to 14 carbon atoms, 4 to 12 carbon atoms, 4 to 10 carbon atoms, 4 to 8 carbon atoms, 5 to 20 carbon atoms, 5 to 18 carbon atoms, 5 to 16 carbon atoms, 5 to 14 carbon atoms, 5 to 12 carbon atoms, 5 to 10 carbon atoms, 5 to 8 carbon atoms, 6 to 20 carbon atoms, 6 to 18 carbon atoms, 6 to 16 carbon atoms, 6 to 14 carbon atoms, 6 to 12 carbon atoms, 6 to 10 carbon atoms, 6 to 8 carbon atoms, 8 to 20 carbon atoms, 8 to 18 carbon atoms, 8 to 16 carbon atoms, 8 to 14 carbon atoms, 8 to 12 carbon atoms, 8 to 10 carbon atoms, 10 to 20 carbon atoms, 10 to 18 carbon atoms, 10 to 16 carbon atoms, 10 to 14 carbon atoms, or 10 to 12 carbon atoms.

When the groups $R_1$ through $R_6$ comprise an aryl group, the aryl group can have at least 6, at least 8, at least 10, or at least 12 carbon atoms and/or not more than 20, not more than 18, not more than 16, not more than 14, or not more than 12 carbon atoms, or the aryl group 6 to 20 carbon atoms, 6 to 18 carbon atoms, 6 to 16 carbon atoms, 6 to 14 carbon atoms, 6 to 12 carbon atoms, 8 to 20 carbon atoms, 8 to 18 carbon atoms, 8 to 16 carbon atoms, 8 to 14 carbon atoms, 8 to 12 carbon atoms, 10 to 20 carbon atoms, 10 to 18 carbon atoms, 10 to 16 carbon atoms, 10 to 14 carbon atoms, or 10 to 12 carbon atoms.

Examples of suitable alkyl or aryl groups can include, but are not limited to, straight chain alkyl groups, branched alkyl groups, cycloalkyl groups, acyclic groups, aryl groups, substitutions thereof, and combinations thereof. In some embodiments, the compound represented by formula (1) may itself be cyclic, such that at least one of the groups $R_1$ through $R_3$ and at least one of the groups $R_4$ through $R_6$ are part of the same substituent, separated from one another by at least one additional carbon atom.

According to some embodiments, when at least three of the groups $R_1$ through $R_6$ are not hydrogen, the hydroxyl group shown in formula (1) above may be referred to as a "hindered" hydroxyl group. When only one or two of the groups R1 through R6 are not hydrogen, the hydroxyl group shown in formula (1) above may be referred to as an "unhindered" hydroxyl group. Further, because the carbon atom to which the hydroxyl group is bonded is itself bonded to two carbon atoms, the hydroxyl group shown in formula (1) is a "secondary" hydroxyl group. In some embodiments of the present invention, at least one of the monomeric polyols used in, or used to form the polymeric polyols used in, the reaction system may include at least one hindered secondary hydroxyl group. In some embodiments, at least one of the monomeric polyols used in, or used to form the polymeric polyols used in, the reaction system may include at least one unhindered secondary hydroxyl group.

For example, in some embodiments, a monomeric polyol having secondary hydroxyl groups may comprise at least about 5, at least about 10, at least about 15, at least about 20, at least about 25, at least about 30, at least about 35, at least about 40, at least about 50, at least about 55, at least about 60, at least about 65, at least about 70, at least about 75, at least about 80, at least about 85, at least about 90, or at least about 95 weight percent of the monomeric polyols used in the reaction system, or used to form the polymeric polyol used in the reaction system. In some embodiments, a monomeric polyol having secondary hydroxyl groups may comprise not more than about 95, not more than about 90, not more than about 85, not more than about 80, not more than about 75, not more than about 70, not more than about 65, not more than about 60, not more than about 55, not more than about 50, not more than about 45, not more than about 40, not more than about 35, not more than about 30, not more than about 25, not more than about 20, or not more than about 15 weight percent of the total weight of the monomeric polyols used in the reaction system, or used to form the polymeric polyol used in the reaction system.

The monomeric polyol having secondary hydroxyl groups can comprise in the range of from about 5 to about 95 weight percent, about 5 to about 95 weight percent, about 5 to about 90 weight percent, about 5 to about 85 weight percent, about 5 to about 80 weight percent, about 5 to about 75 weight percent, about 5 to about 70 weight percent, about 5 to about 65 weight percent, about 5 to about 60 weight percent, about 5 to about 55 weight percent, about 5 to about 50 weight percent, about 5 to about 45 weight percent, about 5 to about 40 weight percent, about 5 to about 35 weight percent, about 5 to about 30 weight percent, about 5 to about 25 weight percent, about 5 to about 20 weight percent, about 5 to about 15 weight percent, about 10 to about 95 weight percent, about 10 to about 90 weight percent, about 10 to about 90 weight percent, about 10 to about 85 weight percent, about 10 to about 80 weight percent, about 10 to about 75 weight percent, about 10 to about 70 weight percent, about 10 to about 65 weight percent, about 10 to about 60 weight percent, about 10 to about 55 weight percent, about 10 to about 50 weight percent, about 10 to about 45 weight percent, about 10 to about 40 weight percent, about 10 to about 35 weight percent, about 10 to about 30 weight percent, about 10 to about 25 weight percent, about 10 to about 20 weight percent, about 10 to about 15 weight percent, about 15 to about 95 weight percent, about 15 to about 90 weight percent, about 15 to about 85 weight percent, about 15 to about 80 weight percent, about 15 to about 75 weight percent, about 15 to about 70 weight percent, about

15 to about 65 weight percent, about 15 to about 60 weight percent, about 15 to about 55 weight percent, about 15 to about 50 weight percent, about 15 to about 45 weight percent, about 15 to about 40 weight percent, about 15 to about 35 weight percent, about 15 to about 30 weight percent, about 15 to about 25 weight percent, about 15 to about 20 weight percent, about 20 to about 95 weight percent, about 20 to about 90 weight percent, about 20 to about 85 weight percent, about 20 to about 80 weight percent, about 20 to about 75 weight percent, about 20 to about 70 weight percent, about 20 to about 65 weight percent, about 20 to about 60 weight percent, about 20 to about 55 weight percent, about 20 to about 50 weight percent, about 20 to about 45 weight percent, about 20 to about 40 weight percent, about 20 to about 35 weight percent, about 20 to about 30 weight percent, about 20 to about 25 weight percent, about 25 to about 95 weight percent, about 25 to about 90 weight percent, about 25 to about 85 weight percent, about 25 to about 80 weight percent, about 25 to about 75 weight percent, about 25 to about 70 weight percent, about 25 to about 65 weight percent, about 25 to about 60 weight percent, about 25 to about 55 weight percent, about 25 to about 50 weight percent, about 25 to about 45 weight percent, about 25 to about 40 weight percent, about 25 to about 35 weight percent, about 25 to about 30 weight percent, about 30 to about 95 weight percent, about 30 to about 90 weight percent, about 30 to about 85 weight percent, about 30 to about 80 weight percent, about 30 to about 75 weight percent, about 30 to about 70 weight percent, about 30 to about 65 weight percent, about 30 to about 60 weight percent, about 30 to about 55 weight percent, about 30 to about 50 weight percent, about 30 to about 45 weight percent, about 30 to about 40 weight percent, about 30 to about 35 weight percent, about 35 to about 95 weight percent, about 35 to about 90 weight percent, about 35 to about 85 weight percent, about 35 to about 80 weight percent, about 35 to about 75 weight percent, about 35 to about 70 weight percent, about 35 to about 65 weight percent, about 35 to about 60 weight percent, about 35 to about 55 weight percent, about 35 to about 50 weight percent, about 35 to about 45 weight percent, about 35 to about 40 weight percent, about 40 to about 95 weight percent, about 40 to about 90 weight percent, about 40 to about 85 weight percent, about 40 to about 80 weight percent, about 40 to about 75 weight percent, about 40 to about 70 weight percent, about 40 to about 65 weight percent, about 40 to about 60 weight percent, about 40 to about 55 weight percent, about 40 to about 50 weight percent, about 40 to about 45 weight percent, about 45 to about 95 weight percent, about 45 to about 90 weight percent, about 45 to about 85 weight percent, about 45 to about 80 weight percent, about 45 to about 75 weight percent, about 45 to about 70 weight percent, about 45 to about 65 weight percent, about 45 to about 60 weight percent, about 45 to about 55 weight percent, about 45 to about 50 weight percent, about 50 to about 95 weight percent, about 50 to about 90 weight percent, about 50 to about 85 weight percent, about 50 to about 80 weight percent, about 50 to about 75 weight percent, about 50 to about 70 weight percent, about 50 to about 65 weight percent, about 50 to about 60 weight percent, about 50 to about 55 weight percent, about 55 to about 95 weight percent, about 55 to about 90 weight percent, about 55 to about 85 weight percent, about 55 to about 80 weight percent, about 55 to about 75 weight percent, about 55 to about 70 weight percent, about 55 to about 65 weight percent, about 55 to about 60 weight percent, about 60 to about 95 weight percent, about 60 to about 90 weight percent, about 60 to about 85 weight percent, about 60 to about 80 weight percent, about 60 to about 75 weight percent, about 60 to about 70 weight percent, about 60 to about 65 weight percent, about 65 to about 95 weight percent, about 65 to about 90 weight percent, about 65 to about 85 weight percent, about 65 to about 80 weight percent, about 65 to about 75 weight percent, about 65 to about 70 weight percent, about 70 to about 95 weight percent, about 70 to about 90 weight percent, about 70 to about 85 weight percent, about 70 to about 80 weight percent, about 70 to about 75 weight percent, about 75 to about 95 weight percent, about 75 to about 90 weight percent, about 75 to about 85 weight percent, about 75 to about 80 weight percent, about 80 to about 95 weight percent, about 80 to about 90 weight percent, about 80 to about 85 weight percent, about 85 to about 95 weight percent, about 85 to about 90 weight percent, or about 90 to about 95 weight percent of the total weight of the monomeric polyols used in the reaction system, or used to form the polymeric polyol used in the reaction system.

In some embodiments, a monomeric polyol having hindered secondary hydroxyl groups may comprise at least about 5, at least about 10, at least about 15, at least about 20, at least about 25, at least about 30, at least about 35, at least about 40 weight percent and/or not more than about 75, not more than about 60, not more than about 50, not more than about 40, not more than about 35, not more than about 30 weight percent of the total weight of the monomeric polyols used in the reaction system, or used to form the polymeric polyol used in the reaction system, or it may comprise in the range of from about 5 to about 75 weight percent, about 5 to about 60 weight percent, about 5 to about 50 weight percent, about 5 to about 40 weight percent, about 5 to about 35 weight percent, about 5 to about 30 weight percent, about 10 to about 60 weight percent, about 10 to about 50 weight percent, about 10 to about 40 weight percent, about 10 to about 35 weight percent, about 10 to about 30 weight percent, about 15 to about 60 weight percent, about 15 to about 50 weight percent, about 15 to about 40 weight percent, about 15 to about 35 weight percent, about 15 to about 30 weight percent, about 20 to about 60 weight percent, about 20 to about 50 weight percent, about 20 to about 40 weight percent, about 20 to about 35 weight percent, about 20 to about 30 weight percent, about 25 to about 60 weight percent, about 25 to about 50 weight percent, about 25 to about 40 weight percent, about 25 to about 35 weight percent, about 25 to about 30 weight percent, about 30 to about 60 weight percent, about 30 to about 50 weight percent, about 30 to about 40 weight percent, about 30 to about 35 weight percent, about 30 to about 30 weight percent, about 35 to

about 60 weight percent, about 35 to about 50 weight percent, about 35 to about 40 weight percent, about 40 to about 60 weight percent, or about 40 to about 50 weight percent of the total weight of the monomeric polyols used in the reaction system, or used to form the polymeric polyol used in the reaction system.

In some embodiments, the monomeric polyol having hindered secondary hydroxyl groups may comprise at least about 50, at least about 60, at least about 70, at least about 75, at least about 80, at least about 85, at least about 90, at least about 95, or at least about 97 weight percent and/or not more than about 99, not more than about 95, not more than about 90, or not more than about 85 weight percent of the monomeric polyols used in the reaction system, or used to form the polymeric polyol used in the reaction system.

**The** monomeric polyol having hindered secondary hydroxyl groups may comprise in the range of from about 50 to about 99 weight percent, about 50 to about 95 weight percent, about 50 to about 90 weight percent, about 50 to about 85 weight percent, about 60 to about 99 weight percent, about 60 to about 95 weight percent, about 60 to about 90 weight percent, about 60 to about 85 weight percent, about 70 to about 99 weight percent, about 70 to about 95 weight percent, about 70 to about 90 weight percent, about 70 to about 85 weight percent, about 80 to about 99 weight percent, about 80 to about 95 weight percent, about 80 to about 90 weight percent, about 80 to about 85 weight percent, about 90 to about 99 weight percent, about 90 to about 95 weight percent, about 95 to about 99 weight percent, or about 97 to about 99 weight percent of the monomeric polyols used in the reaction system, or used to form the polymeric polyol used in the reaction system.

Reaction systems of the present invention may include a combination of at least one monomeric polyol and at least one polymeric polyol. Examples of suitable monomeric polyols include, but are not limited to, 2,2,4,4-tetramethyl-1,3-cyclobutanediol and 2,2,4-trimethyl-1,3-pentanediol, 2,4-dimethyl-2-ethyl-hexane-1,3-diol, 2,2,4-trimethyl 1,3-pentanediol, and combinations thereof. When the polyol is a polymeric polyol, it may include residues of one or more of the above-listed monomeric polyols, as described in further detail shortly.

When the reaction system utilizes a polymeric polyol, the polymeric polyol may comprise a polyether polyol formed from at least one multifunctional monomer. In some embodiments, the multifunctional monomer used to form the polyether polyol can have at least two, at least three, at least four, at least five, or six or more reactive functional groups. Examples of multifunctional monomers can include, but are not limited to, polyethylene glycol, polypropylene glycol, poly(tetramethylene ether) glycol, glycerin, sucrose, sorbitol, toluenediamine, Mannich bases, and combinations thereof. Polyether polyols may be formed by reacting one or more multifunctional initiators with propylene oxide and/or ethylene oxide in the presence of a catalyst. Examples of suitable catalysts can include, but are not limited, to strong bases such as potassium hydroxide and sodium hydroxide, or metallic complexes such as hexacyanocobaltate-t-butanol.

When the polymeric polyol comprises a polyester polyol, the polyester polyol can include residues of at least one carboxylic acid and residues of at least one multi-hydroxyl functional compound, such as, for example, a monomeric polyol. The carboxylic acid residues of the polyester polyol may include residues of at least one dicarboxylic acid, optionally, in combination residues of at least one monocarboxylic acid and/or at least one polycarboxylic acid, while the residues of the multi-hydroxyl functional compound may comprise residues of at least one monomeric polyol having at least two, or at least three, reactive hydroxyl groups.

As used herein, the term "residue" refers to any organic structure incorporated into a polymeric material through a polycondensation or ring opening reaction involving the corresponding monomer. It should also be understood that residues associated with various polymeric materials, including polymeric polyols, described herein may be derived from the parent monomer compound itself or any suitable derivative thereof. For example, a polyester polyol comprising residues of a dicarboxylic acid may be derived from a dicarboxylic acid monomer or its associated acid halides, esters, half-esters, salts, half-salts, anhydrides, mixed anhydrides, or mixtures thereof. As used herein, use of the generic name of the parent monomer, such as, for example, "dicarboxylic acid," is intended to include the parent monomer and its derivatives, unless otherwise noted.

The polyester polyol may include residues of any suitable type of dicarboxylic acid including, for example, at least one aromatic dicarboxylic acid, at least one acyclic aliphatic dicarboxylic acid, at least one cyclic aliphatic dicarboxylic acid, or various combinations thereof. In some embodiments, the polyester polyol can include at least about 10, at least about 20, at least about 30, at least about 40, at least about 50 and/or not more than about 90, not more than about 80, not more than about 70, not more than about 60, or not more than about 50 mole percent of residues of an aromatic dicarboxylic acid, based on the total moles of acid residues.

The polyester polyol can include residues of an aromatic dicarboxylic acid in an amount in the range of from about 10 to about 90 mole percent, about 10 to about 80 mole percent, about 10 to about 70 mole percent, about 10 to about 60 mole percent, or about 10 to about 50 mole percent, about 20 to about 90 mole percent, about 20 to about 80 mole percent, about 20 to about 70 mole percent, about 20 to about 60 mole percent, or about 20 to about 50 mole percent, about 30 to about 90 mole percent, about 30 to about 80 mole percent, about 30 to about 70 mole percent, about 30 to about 60 mole percent, or about 30 to about 50 mole percent, about 40 to about 90 mole percent, about 40 to about 80 mole percent, about 40 to about 70 mole percent, about 40 to about 60 mole percent, or about 40 to about 50 mole percent, about 50 to about 90 mole percent, about 50 to about 80 mole percent, about 50 to about 70 mole

percent, or about 50 to about 60 mole percent, based on the total moles of acid residues.

In other embodiments, the polyester polyol can include at least about 60, at least about 70, at least about 80, at least about 90, at least about 95, at least about 97, or at least about 99 mole percent of residues of an aromatic dicarboxylic acid, based on the total moles of acid residues. In some embodiments, all of the acid residues of the polyester polyol can be residues of at least one aromatic dicarboxylic acid.

In some embodiments, the polyester polyol can include at least about 10, at least about 20, at least about 30, at least about 40, at least about 50 and/or not more than about 90, not more than about 80, not more than about 70, not more than about 60, or not more than about 50 mole percent of residues of an aliphatic dicarboxylic acid, based on the total moles of acid residues.

The polyester polyol can include residues of an aliphatic dicarboxylic acid in an amount in the range of from about 10 to about 90 mole percent, about 10 to about 80 mole percent, about 10 to about 70 mole percent, about 10 to about 60 mole percent, or about 10 to about 50 mole percent, about 20 to about 90 mole percent, about 20 to about 80 mole percent, about 20 to about 70 mole percent, about 20 to about 60 mole percent, or about 20 to about 50 mole percent, about 30 to about 90 mole percent, about 30 to about 80 mole percent, about 30 to about 70 mole percent, about 30 to about 60 mole percent, or about 30 to about 50 mole percent, about 40 to about 90 mole percent, about 40 to about 80 mole percent, about 40 to about 70 mole percent, about 40 to about 60 mole percent, or about 40 to about 50 mole percent, about 50 to about 90 mole percent, about 50 to about 80 mole percent, about 50 to about 70 mole percent, or about 50 to about 60 mole percent, based on the total moles of acid residues.

In other embodiments, the polyester polyol can include at least about 60, at least about 70, at least about 80, at least about 90, at least about 95, at least about 97, or at least about 99 mole percent of residues of an aliphatic dicarboxylic acid, based on the total moles of acid residues. In some embodiments, all of the acid residues of the polyester polyol can be residues of at least one aliphatic dicarboxylic acid. The ranges above may be applicable to residues of an acyclic aliphatic dicarboxylic acid, an alicyclic aliphatic dicarboxylic acid, or combinations thereof.

Suitable examples of aromatic dicarboxylic acids include, but are not limited to, phthalic acid, terephthalic acid, isophthalic acid, 2,6-naphthalenedicarboxylic acid, or combinations thereof. The 1,4-, 1,5-, and 2,7-isomers of naphthalenedicarboxylic acid or mixtures thereof may be used in addition to the 2,6-isomer. Examples of suitable aliphatic dicarboxylic acids include, but are not limited to, adipic acid, dodecanedioic acid, sebacic acid, azelaic acid, glutaric acid, maleic acid, fumaric acid, succinic acid, 1,4-cyclohexanedicarboxylic acid, 1,3-cyclohexanedicarboxylic acid, hexahydrophthalic acid, tetrahydrophthalic acid, or combinations thereof. If cis and trans isomers are possible, the diacid may be used as a pure cis isomer, a pure trans isomer, or mixtures of cis and trans isomers. In addition to the dicarboxylic acids described herein, the polyester polyol may further comprise residues of at least one monocarboxylic acid or at least one polybasic acid including two or more carboxylic acid groups. For example, the polyester polyol may include residues of benzoic acid, acetic acid, propionic acid, tert-butyl benzoic acid, butanoic acid, trimellitic anhydride, or combinations thereof.

The hydroxyl component of polyester polyols suitable for use in reaction systems as described herein include residues of at least one monomeric polyol. Such polyols have two, three, or four or more reactive hydroxyl groups. In some embodiments, the polyester polyol may include residues of only one monomeric polyol, while, in other embodiments, it may include residues of at least two, at least three, or at least four different monomeric polyols. The monomeric polyols may be aliphatic polyols or aromatic polyols, and can, for example, be selected from the group consisting of acyclic aliphatic polyols, alicyclic aliphatic polyols, and aryl alkyl polyols.

In some embodiments, the hydroxyl component of the polyester polyol can include at least about 10, at least about 15, at least about 20, at least about 25, at least about 30, at least about 35, at least about 40, at least about 45 and/or not more than about 90, not more than about 85, not more than about 75, not more than about 70, not more than about 65, not more than about 60, not more than about 55 mole percent, based on the total moles of monomeric polyol residues, of at least one monomeric polyol having two reactive hydroxyl groups. The hydroxyl component of the polyester polyol can include residues of at least one monomeric polyol having two reactive hydroxyl groups in an amount in the range of from about 10 to about 90 mole percent, about 10 to about 85 mole percent, about 10 to about 75 mole percent, about 10 to about 70 mole percent, about 10 to about 65 mole percent, about 10 to about 60 mole percent, about 10 to about 55 mole percent, about 15 to about 90 mole percent, about 15 to about 85 mole percent, about 15 to about 75 mole percent, about 15 to about 70 mole percent, about 15 to about 65 mole percent, about 15 to about 60 mole percent, about 15 to about 55 mole percent, about 20 to about 90 mole percent, about 20 to about 85 mole percent, about 20 to about 75 mole percent, about 20 to about 70 mole percent, about 20 to about 65 mole percent, about 20 to about 60 mole percent, about 20 to about 55 mole percent, about 25 to about 90 mole percent, about 25 to about 85 mole percent, about 25 to about 75 mole percent, about 25 to about 70 mole percent, about 25 to about 65 mole percent, about 25 to about 60 mole percent, about 25 to about 55 mole percent, about 30 to about 90 mole percent, about 30 to about 85 mole percent, about 30 to about 75 mole percent, about 30 to about 70 mole percent, about 30 to about 65 mole percent, about 30 to about 60 mole percent, about 30 to about 55 mole percent, about 35 to about 90 mole percent, about 35 to about 85 mole percent, about 35 to about 75 mole percent, about 35 to about 70 mole percent, about 35 to about 65

mole percent, about 35 to about 60 mole percent, about 35 to about 55 mole percent, about 40 to about 90 mole percent, about 40 to about 85 mole percent, about 40 to about 75 mole percent, about 40 to about 70 mole percent, about 40 to about 65 mole percent, about 40 to about 60 mole percent, about 40 to about 55 mole percent, about 45 to about 90 mole percent, about 45 to about 85 mole percent, about 45 to about 75 mole percent, about 45 to about 70 mole percent, about 45 to about 65 mole percent, about 45 to about 60 mole percent, or about 45 to about 55 mole percent, based on the total moles of monomeric polyol residues.

Some examples of monomeric polyols having two reactive hydroxyl groups include 2,2,4,4-tetramethyl-1,3-cyclobutanediol and 2,2,4-trimethyl-1,3-pentanediol, 2,4-diethyl-1,5-pentanediol, 2-butyl-2-ethyl-1,3-propanediol, 3-hydroxy-2,2,4,4-tetramethylcyclobutanone, and combinations thereof. When used to form a polyester polyol described herein, these monomeric polyols may be in a pure cis monomer, a pure trans monomer, or as a combination of cis and trans monomers. In some embodiments, the polyester polyol can include at least about 10, at least about 20, at least about 30, at least about 40 and/or not more than about 90, not more than about 80, not more than about 70, or not more than about 60 mole percent of a monomeric polyol including, but not limited to, 2,2,4,4-tetramethyl-1,3-cyclobutanediol, 2,2,4-trimethyl-1,3-pentanediol, 2,4-diethyl-1,5-pentanediol, 2-butyl-2-ethyl-1 ,3-propanediol, 3-hydroxy-2,2,4,4-tetramethylcyclobutanone, and combinations thereof, based on the total moles of monomeric polyol residues of the polyester polyol.

Optionally, the polyester polyol may include not more than about 90, not more than about 80, not more than about 70 mole percent of one or more monomeric polyols other than 2,2,4,4-tetramethyl-1,3-cyclobutanediol, 2,2,4-trimethyl-1,3-pentanediol, 2,4-diethyl-1,5-pentanediol, 3-hydroxy-2,2,4,4-tetramethylcyclobutanone, and 2-butyl-2-ethyl-1,3-propanediol, based on the total moles of monomeric polyol residues, that include two reactive hydroxyl groups. Examples of suitable monomeric polyols having two reactive hydroxyl groups, other than those listed previously, can include, but are not limited to, neopentyl glycol, ethylene glycol, propylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, 1,3-propanediol, 2,4-dimethyl-2-ethyl-hexane-1,3-diol, 2,2-dimethyl-1,2-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, thiodiethanol, 1,2-cyclohexanedimethanol, 1,3-cyclohexanedimethanol, 1,4-cyclohexanedimethanol, 2,2,4-trimethyl 1,3-pentanediol, p-xylenediol, hydroxypivalyl hydroxypivalate, 1,10-decanediol and hydrogenated bisphenol A. In some embodiments, the polyester polyol can comprise residues of a monomeric polyol selected from the group consisting of 2,2,4,4-tetramethyl-1,3-cyclobutanediol, 2,2,4-trimethyl-1,3-pentanediol, and combinations thereof, in combination with residues of neopentyl glycol.

Additionally, in some embodiments, the polyester polyol can include at least about 10, at least about 15, at least about 20, at least about 25, at least about 30, at least about 35, at least about 40, at least about 45 mole percent and/or not more than about 90, not more than about 85, not more than about 75, not more than about 70, not more than about 65, not more than about 60, not more than about 55 mole percent of at least one monomeric polyol having three or more reactive hydroxyl groups, based on the total moles of monomeric polyol residues.

The hydroxyl component of the polyester polyol can include residues of at least one monomeric polyol having three or more reactive hydroxyl groups in an amount in the range of from about 10 to about 90 mole percent, about 10 to about 85 mole percent, about 10 to about 75 mole percent, about 10 to about 70 mole percent, about 10 to about 65 mole percent, about 10 to about 60 mole percent, about 10 to about 55 mole percent, about 15 to about 90 mole percent, about 15 to about 85 mole percent, about 15 to about 75 mole percent, about 15 to about 70 mole percent, about 15 to about 65 mole percent, about 15 to about 60 mole percent, about 15 to about 55 mole percent, about 20 to about 90 mole percent, about 20 to about 85 mole percent, about 20 to about 75 mole percent, about 20 to about 70 mole percent, about 20 to about 65 mole percent, about 20 to about 60 mole percent, about 20 to about 55 mole percent, about 25 to about 90 mole percent, about 25 to about 85 mole percent, about 25 to about 75 mole percent, about 25 to about 70 mole percent, about 25 to about 65 mole percent, about 25 to about 60 mole percent, about 25 to about 55 mole percent, about 30 to about 90 mole percent, about 30 to about 85 mole percent, about 30 to about 75 mole percent, about 30 to about 70 mole percent, about 30 to about 65 mole percent, about 30 to about 60 mole percent, about 30 to about 55 mole percent, about 35 to about 90 mole percent, about 35 to about 85 mole percent, about 35 to about 75 mole percent, about 35 to about 70 mole percent, about 35 to about 65 mole percent, about 35 to about 60 mole percent, about 35 to about 55 mole percent, about 40 to about 90 mole percent, about 40 to about 85 mole percent, about 40 to about 75 mole percent, about 40 to about 70 mole percent, about 40 to about 65 mole percent, about 40 to about 60 mole percent, about 40 to about 55 mole percent, about 45 to about 90 mole percent, about 45 to about 85 mole percent, about 45 to about 75 mole percent, about 45 to about 70 mole percent, about 45 to about 65 mole percent, about 45 to about 60 mole percent, or about 45 to about 55 mole percent, based on the total moles of monomeric polyol residues.

Examples of suitable monomeric polyols having three or more reactive hydroxyl groups can include, but are not limited to, trimethylolpropane (TMP), pentaerythritol (PE), trimethylolethane (TME), erythritol, threitol, dipentaerythritol, sorbitol, glycerin, and the like. In some embodiments, the polyester polyol can comprise residues of at least one monomeric polyol selected from the group consisting of trimethylolpropane, pentaerythritol, trimethylolethane, erythritol,

threitol, dipentaerythritol, sorbitol, and glycerin. In some embodiments, the polyester polyol can comprise residues of trimethylolpropane.

Polyester polyols as described above can be prepared according to any suitable method. For example, in some embodiments, the acid reactant, or reactants, and the monomeric polyol reactant, or reactants, can be combined and heated until a polymeric polyol of the desired molecular weight, hydroxyl number, or acid number is produced. In some embodiments, the reactants may be heated at a temperature of about 150°C to about 250°C, while recovering alcohol (if an ester exchange reaction) or water (if a direct condensation reaction) as a by-product. The reaction may be performed at or below atmospheric pressure. When more than two monomers are condensed to form the polyester polyol, at least two of the reactants may be partially reacted prior to adding the additional reactants, or all of the reactants may be combined at once. The reaction may optionally be performed in the presence of one or more solvents including, for example, a hydrocarbon solvent such as xylene, which, when used, may be present in an amount in the range of from 0.5 to 5 weight percent, based on the total weight of the reaction mixture. Additionally, the reaction may be carried out in the presence of at least one catalyst, such as, for example, a tin-based catalyst, which may be added to the reaction mixture in any suitable amount. The amount of catalyst may, in some embodiments, be present in an amount in the range of from 0.1 to 1 weight percent, based on the total weight of the reaction mixture.

The properties of the polymeric polyols useful in reaction systems as described herein may be selected for compatibility and to impart specific properties or functions to the reaction system, or the cured residues thereof. For example, in some embodiments, the polymeric polyol can have a hydroxyl number of at least about 5, at least about 10, at least about 15, at least about 17, at least about 20, at least about 25, at least about 30, at least about 35, at least about 40, at least about 45, at least about 50, at least about 60, at least about 70, at least about 75, at least about 80, at least about 85, at least about 90, at least about 95, at least about 100, at least about 110, at least about 120, at least about 125, at least about 130, at least about 135, or at least about 140 mg KOH/g of polyol. In some embodiments the polymeric polyol can have a hydroxyl number of not more than about 300, not more than about 290, not more than about 275, not more than about 250, not more than about 230, not more than about 225, not more than about 200, not more than about 175, not more than about 150, not more than about 130, not more than about 125, not more than about 115, not more than about 100, not more than about 90, not more than about 80, not more than about 75, not more than about 60, not more than about 50, not more than about 45, not more than about 40, not more than about 35, not more than about 30, not more than about 25 mg KOH/g.

The hydroxyl number of the polymeric polyol can be in the range of from about 5 to about 300 mg KOH/g, about 5 to about 290 mg KOH/g, about 5 to about 275 mg KOH/g, about 5 to about 250 mg KOH/g, about 5 to about 230 mg KOH/g, about 5 to about 225 mg KOH/g, about 5 to about 200 mg KOH/g, about 5 to about 175 mg KOH/g, about 5 to about 150 mg KOH/g, about 5 to about 130 mg KOH/g, about 5 to about 125 mg KOH/g, about 5 to about 115 mg KOH/g, about 5 to about 100 mg KOH/g, about 5 to about 90 mg KOH/g, about 5 to about 80 mg KOH/g, about 5 to about 70 mg KOH/g, about 5 to about 60 mg KOH/g, about 5 to about 50 mg KOH/g, about 5 to about 40 mg KOH/g, about 5 to about 30 mg KOH/g, about 5 to about 25 mg KOH/g, about 10 to about 300 mg KOH/g, about 10 to about 290 mg KOH/g, about 10 to about 275 mg KOH/g, about 10 to about 250 mg KOH/g, about 10 to about 230 mg KOH/g, about 10 to about 225 mg KOH/g, about 10 to about 200 mg KOH/g, about 10 to about 175 mg KOH/g, about 10 to about 150 mg KOH/g, about 10 to about 130 mg KOH/g, about 10 to about 125 mg KOH/g, about 10 to about 115 mg KOH/g, about 10 to about 100 mg KOH/g, about 10 to about 90 mg KOH/g, about 10 to about 80 mg KOH/g, about 10 to about 70 mg KOH/g, about 10 to about 60 mg KOH/g, about 10 to about 50 mg KOH/g, about 10 to about 40 mg KOH/g, about 10 to about 30 mg KOH/g, about 10 to about 25 mg KOH/g, about 15 to about 300 mg KOH/g, about 15 to about 290 mg KOH/g, about 15 to about 275 mg KOH/g, about 15 to about 250 mg KOH/g, about 15 to about 230 mg KOH/g, about 15 to about 225 mg KOH/g, about 15 to about 200 mg KOH/g, about 15 to about 175 mg KOH/g, about 15 to about 150 mg KOH/g, about 15 to about 130 mg KOH/g, about 15 to about 125 mg KOH/g, about 15 to about 115 mg KOH/g, about 15 to about 100 mg KOH/g, about 15 to about 90 mg KOH/g, about 15 to about 80 mg KOH/g, about 15 to about 70 mg KOH/g, about 15 to about 60 mg KOH/g, about 15 to about 50 mg KOH/g, about 15 to about 40 mg KOH/g, about 15 to about 30 mg KOH/g, about 15 to about 25 mg KOH/g, about 17 to about 300 mg KOH/g, about 17 to about 290 mg KOH/g, about 17 to about 275 mg KOH/g, about 17 to about 250 mg KOH/g, about 17 to about 230 mg KOH/g, about 17 to about 225 mg KOH/g, about 17 to about 200 mg KOH/g, about 17 to about 175 mg KOH/g, about 17 to about 150 mg KOH/g, about 17 to about 130 mg KOH/g, about 17 to about 125 mg KOH/g, about 17 to about 115 mg KOH/g, about 17 to about 100 mg KOH/g, about 17 to about 90 mg KOH/g, about 17 to about 80 mg KOH/g, about 17 to about 70 mg KOH/g, about 17 to about 60 mg KOH/g, about 17 to about 50 mg KOH/g, about 17 to about 40 mg KOH/g, about 17 to about 30 mg KOH/g, about 17 to about 25 mg KOH/g, about 20 to about 300 mg KOH/g, about 20 to about 290 mg KOH/g, about 20 to about 275 mg KOH/g, about 20 to about 250 mg KOH/g, about 20 to about 230 mg KOH/g, about 20 to about 225 mg KOH/g, about 20 to about 200 mg KOH/g, about 20 to about 175 mg KOH/g, about 20 to about 150 mg KOH/g, about 20 to about 130 mg KOH/g, about 20 to about 125 mg KOH/g, about 20 to about 115 mg KOH/g, about 20 to about 100 mg KOH/g, about 20 to about 90 mg KOH/g, about 20 to about 80 mg KOH/g, about 20 to about 70 mg KOH/g, about 20 to about 60 mg KOH/g, about 20 to about 50 mg KOH/g, about 20 to about 40 mg KOH/g, about 20 to

about 30 mg KOH/g, about 20 to about 25 mg KOH/g, about 25 to about 300 mg KOH/g, about 25 to about 290 mg KOH/g, about 25 to about 275 mg KOH/g, about 25 to about 250 mg KOH/g, about 25 to about 230 mg KOH/g, about 25 to about 225 mg KOH/g, about 25 to about 200 mg KOH/g, about 25 to about 175 mg KOH/g, about 25 to about 150 mg KOH/g, about 25 to about 130 mg KOH/g, about 25 to about 125 mg KOH/g, about 25 to about 115 mg KOH/g, about 25 to about 100 mg KOH/g, about 25 to about 90 mg KOH/g, about 25 to about 80 mg KOH/g, about 25 to about 70 mg KOH/g, about 25 to about 60 mg KOH/g, about 25 to about 50 mg KOH/g, about 25 to about 40 mg KOH/g, about 25 to about 30 mg KOH/g, about 30 to about 300 mg KOH/g, about 30 to about 290 mg KOH/g, about 30 to about 275 mg KOH/g, about 30 to about 250 mg KOH/g, about 30 to about 230 mg KOH/g, about 30 to about 225 mg KOH/g, about 30 to about 200 mg KOH/g, about 30 to about 175 mg KOH/g, about 30 to about 150 mg KOH/g, about 30 to about 130 mg KOH/g, about 30 to about 125 mg KOH/g, about 30 to about 115 mg KOH/g, about 30 to about 100 mg KOH/g, about 30 to about 90 mg KOH/g, about 30 to about 80 mg KOH/g, about 30 to about 70 mg KOH/g, about 30 to about 60 mg KOH/g, about 30 to about 50 mg KOH/g, about 30 to about 40 mg KOH/g, about 35 to about 300 mg KOH/g, about 35 to about 290 mg KOH/g, about 35 to about 275 mg KOH/g, about 35 to about 250 mg KOH/g, about 35 to about 230 mg KOH/g, about 35 to about 225 mg KOH/g, about 35 to about 200 mg KOH/g, about 35 to about 175 mg KOH/g, about 35 to about 150 mg KOH/g, about 35 to about 130 mg KOH/g, about 35 to about 125 mg KOH/g, about 35 to about 115 mg KOH/g, about 35 to about 100 mg KOH/g, about 35 to about 90 mg KOH/g, about 35 to about 80 mg KOH/g, about 35 to about 70 mg KOH/g, about 35 to about 60 mg KOH/g, about 35 to about 50 mg KOH/g, about 35 to about 40 mg KOH/g, about 40 to about 300 mg KOH/g, about 40 to about 290 mg KOH/g, about 40 to about 275 mg KOH/g, about 40 to about 250 mg KOH/g, about 40 to about 230 mg KOH/g, about 40 to about 225 mg KOH/g, about 40 to about 200 mg KOH/g, about 40 to about 175 mg KOH/g, about 40 to about 150 mg KOH/g, about 40 to about 130 mg KOH/g, about 40 to about 125 mg KOH/g, about 40 to about 115 mg KOH/g, about 40 to about 100 mg KOH/g, about 40 to about 90 mg KOH/g, about 40 to about 80 mg KOH/g, about 40 to about 70 mg KOH/g, about 40 to about 60 mg KOH/g, about 40 to about 50 mg KOH/g, about 45 to about 300 mg KOH/g, about 45 to about 290 mg KOH/g, about 45 to about 275 mg KOH/g, about 45 to about 250 mg KOH/g, about 45 to about 230 mg KOH/g, about 45 to about 225 mg KOH/g, about 45 to about 200 mg KOH/g, about 45 to about 175 mg KOH/g, about 45 to about 150 mg KOH/g, about 45 to about 130 mg KOH/g, about 45 to about 125 mg KOH/g, about 45 to about 115 mg KOH/g, about 45 to about 100 mg KOH/g, about 45 to about 90 mg KOH/g, about 45 to about 80 mg KOH/g, about 45 to about 70 mg KOH/g, about 45 to about 60 mg KOH/g, about 45 to about 50 mg KOH/g, about 50 to about 300 mg KOH/g, about 50 to about 290 mg KOH/g, about 50 to about 275 mg KOH/g, about 50 to about 250 mg KOH/g, about 50 to about 230 mg KOH/g, about 50 to about 225 mg KOH/g, about 50 to about 200 mg KOH/g, about 50 to about 175 mg KOH/g, about 50 to about 150 mg KOH/g, about 50 to about 130 mg KOH/g, about 50 to about 125 mg KOH/g, about 50 to about 115 mg KOH/g, about 50 to about 100 mg KOH/g, about 50 to about 90 mg KOH/g, about 50 to about 80 mg KOH/g, about 50 to about 70 mg KOH/g, about 50 to about 60 mg KOH/g, about 60 to about 300 mg KOH/g, about 60 to about 290 mg KOH/g, about 60 to about 275 mg KOH/g, about 60 to about 250 mg KOH/g, about 60 to about 230 mg KOH/g, about 60 to about 225 mg KOH/g, about 60 to about 200 mg KOH/g, about 60 to about 175 mg KOH/g, about 60 to about 150 mg KOH/g, about 60 to about 130 mg KOH/g, about 60 to about 125 mg KOH/g, about 60 to about 115 mg KOH/g, about 60 to about 100 mg KOH/g, about 60 to about 90 mg KOH/g, about 60 to about 80 mg KOH/g, about 60 to about 70 mg KOH/g, about 70 to about 300 mg KOH/g, about 70 to about 290 mg KOH/g, about 70 to about 275 mg KOH/g, about 70 to about 250 mg KOH/g, about 70 to about 230 mg KOH/g, about 70 to about 225 mg KOH/g, about 70 to about 200 mg KOH/g, about 70 to about 175 mg KOH/g, about 70 to about 150 mg KOH/g, about 70 to about 130 mg KOH/g, about 70 to about 125 mg KOH/g, about 70 to about 115 mg KOH/g, about 70 to about 100 mg KOH/g, about 70 to about 90 mg KOH/g, about 70 to about 80 mg KOH/g, about 75 to about 300 mg KOH/g, about 75 to about 290 mg KOH/g, about 75 to about 275 mg KOH/g, about 75 to about 250 mg KOH/g, about 75 to about 230 mg KOH/g, about 75 to about 225 mg KOH/g, about 75 to about 200 mg KOH/g, about 75 to about 175 mg KOH/g, about 75 to about 150 mg KOH/g, about 75 to about 130 mg KOH/g, about 75 to about 125 mg KOH/g, about 75 to about 115 mg KOH/g, about 75 to about 100 mg KOH/g, about 75 to about 90 mg KOH/g, about 75 to about 80 mg KOH/g, about 80 to about 300 mg KOH/g, about 80 to about 290 mg KOH/g, about 80 to about 275 mg KOH/g, about 80 to about 250 mg KOH/g, about 80 to about 230 mg KOH/g, about 80 to about 225 mg KOH/g, about 80 to about 200 mg KOH/g, about 80 to about 175 mg KOH/g, about 80 to about 150 mg KOH/g, about 80 to about 130 mg KOH/g, about 80 to about 125 mg KOH/g, about 80 to about 115 mg KOH/g, about 80 to about 100 mg KOH/g, about 80 to about 90 mg KOH/g, about 85 to about 300 mg KOH/g, about 85 to about 290 mg KOH/g, about 85 to about 275 mg KOH/g, about 85 to about 250 mg KOH/g, about 85 to about 230 mg KOH/g, about 85 to about 225 mg KOH/g, about 85 to about 200 mg KOH/g, about 85 to about 175 mg KOH/g, about 85 to about 150 mg KOH/g, about 85 to about 130 mg KOH/g, about 85 to about 125 mg KOH/g, about 85 to about 115 mg KOH/g, about 85 to about 100 mg KOH/g, about 85 to about 90 mg KOH/g, about 90 to about 300 mg KOH/g, about 90 to about 290 mg KOH/g, about 90 to about 275 mg KOH/g, about 90 to about 250 mg KOH/g, about 90 to about 230 mg KOH/g, about 90 to about 225 mg KOH/g, about 90 to about 200 mg KOH/g, about 90 to about 175 mg KOH/g, about 90 to about 150 mg KOH/g, about 90 to about 130 mg KOH/g, about 90 to about 125 mg KOH/g, about 90 to about 115 mg KOH/g, about 90 to about 100 mg KOH/g, about 95 to about 300 mg KOH/g, about 95 to about 290 mg KOH/g, about 95 to about 275 mg KOH/g, about

95 to about 250 mg KOH/g, about 95 to about 230 mg KOH/g, about 95 to about 225 mg KOH/g, about 95 to about 200 mg KOH/g, about 95 to about 175 mg KOH/g, about 95 to about 150 mg KOH/g, about 95 to about 130 mg KOH/g, about 95 to about 125 mg KOH/g, about 95 to about 115 mg KOH/g, about 95 to about 100 mg KOH/g, about 100 to about 300 mg KOH/g, about 100 to about 290 mg KOH/g, about 100 to about 275 mg KOH/g, about 100 to about 250 mg KOH/g, about 100 to about 230 mg KOH/g, about 100 to about 225 mg KOH/g, about 100 to about 200 mg KOH/g, about 100 to about 175 mg KOH/g, about 100 to about 150 mg KOH/g, about 100 to about 130 mg KOH/g, about 100 to about 125 mg KOH/g, about 100 to about 115 mg KOH/g, about 110 to about 300 mg KOH/g, about 110 to about 290 mg KOH/g, about 110 to about 275 mg KOH/g, about 110 to about 250 mg KOH/g, about 110 to about 230 mg KOH/g, about 110 to about 225 mg KOH/g, about 110 to about 200 mg KOH/g, about 110 to about 175 mg KOH/g, about 110 to about 150 mg KOH/g, about 110 to about 130 mg KOH/g, about 110 to about 125 mg KOH/g, about 110 to about 115 mg KOH/g, about 120 to about 300 mg KOH/g, about 120 to about 290 mg KOH/g, about 120 to about 275 mg KOH/g, about 120 to about 250 mg KOH/g, about 120 to about 230 mg KOH/g, about 120 to about 225 mg KOH/g, about 120 to about 200 mg KOH/g, about 120 to about 175 mg KOH/g, about 120 to about 150 mg KOH/g, about 120 to about 130 mg KOH/g, about 120 to about 125 mg KOH/g, about 125 to about 300 mg KOH/g, about 125 to about 290 mg KOH/g, about 125 to about 275 mg KOH/g, about 125 to about 250 mg KOH/g, about 125 to about 230 mg KOH/g, about 125 to about 225 mg KOH/g, about 125 to about 200 mg KOH/g, about 125 to about 175 mg KOH/g, about 125 to about 150 mg KOH/g, about 125 to about 130 mg KOH/g, about 130 to about 300 mg KOH/g, about 130 to about 290 mg KOH/g, about 130 to about 275 mg KOH/g, about 130 to about 250 mg KOH/g, about 130 to about 230 mg KOH/g, about 130 to about 225 mg KOH/g, about 130 to about 200 mg KOH/g, about 130 to about 175 mg KOH/g, about 130 to about 150 mg KOH/g, about 135 to about 300 mg KOH/g, about 135 to about 290 mg KOH/g, about 135 to about 275 mg KOH/g, about 135 to about 250 mg KOH/g, about 135 to about 230 mg KOH/g, about 135 to about 225 mg KOH/g, about 135 to about 200 mg KOH/g, about 135 to about 175 mg KOH/g, about 135 to about 150 mg KOH/g, about 140 to about 300 mg KOH/g, about 140 to about 290 mg KOH/g, about 140 to about 275 mg KOH/g, about 140 to about 250 mg KOH/g, about 140 to about 230 mg KOH/g, about 140 to about 225 mg KOH/g, about 140 to about 200 mg KOH/g, about 140 to about 175, or about 140 to about 150 mg KOH/g. Hydroxyl number is measured by esterifying a sample of the resin by reaction with excess acetic anhydride in pyridine, and then decomposing the unreacted anhydride with water. The resulting acetic acid is then titrated with a standard solution of potassium hydroxide (KOH). The mass, in milligrams, of KOH require to neutralize the acetic acid released from one gram of sample in the above procedure is reported as the hydroxyl number of the polyol.

For example, in some embodiments, the polymeric polyol can have a hydroxyl number of at least about 5, at least about 10, at least about 15, at least about 17, at least about 20 mg KOH/g of polyol and/or not more than about 50, not more than about 45, not more than about 40, not more than about 35, not more than about 30 mg KOH/g of polyol, or the hydroxyl number can be in the range of from about 5 to about 50 mg KOH/g, about 5 to about 45 mg KOH/g, about 5 to about 40 mg KOH/g, about 5 to about 35 mg KOH/g, about 5 to about 30 mg KOH/g, about 10 to about 50 mg KOH/g, about 10 to about 45 mg KOH/g, about 10 to about 40 mg KOH/g, about 10 to about 35 mg KOH/g, about 10 to about 30 mg KOH/g, about 15 to about 50 mg KOH/g, about 15 to about 45 mg KOH/g, about 15 to about 40 mg KOH/g, about 15 to about 35 mg KOH/g, about 15 to about 30 mg KOH/g, about 17 to about 50 mg KOH/g, about 17 to about 45 mg KOH/g, about 17 to about 40 mg KOH/g, about 17 to about 35 mg KOH/g, about 17 to about 30 mg KOH/g, about 20 to about 50 mg KOH/g, about 20 to about 45 mg KOH/g, about 20 to about 40 mg KOH/g, about 20 to about 35 mg KOH/g, or about 20 to about 30 mg KOH/g.

In some embodiments, the polymeric polyol can have a hydroxyl number of at least about 50, at least about 60, at least about 70, at least about 75 and/or not more than about 200, not more than about 175, not more than about 150, not more than about 130, not more than about 125, not more than about 115 mg KOH/g of polyol, or the hydroxyl number can be in the range of from about 50 to about 200 mg KOH/g, about 50 to about 175 mg KOH/g, about 50 to about 150 mg KOH/g, about 50 to about 130 mg KOH/g, about 50 to about 125 mg KOH/g, about 50 to about 115 mg KOH/g, about 60 to about 200 mg KOH/g, about 60 to about 175 mg KOH/g, about 60 to about 150 mg KOH/g, about 60 to about 130 mg KOH/g, about 60 to about 125 mg KOH/g, about 60 to about 115 mg KOH/g, about 70 to about 200 mg KOH/g, about 70 to about 175 mg KOH/g, about 70 to about 150 mg KOH/g, about 70 to about 130 mg KOH/g, about 70 to about 125 mg KOH/g, about 70 to about 115 mg KOH/g, about 75 to about 200 mg KOH/g, about 75 to about 175 mg KOH/g, about 75 to about 150 mg KOH/g, about 75 to about 130 mg KOH/g, about 75 to about 125 mg KOH/g, or about 75 to about 115 mg KOH/g.

In some embodiments, the polymeric polyol can have a hydroxyl number of at least about 20, at least about 30, at least about 40 mg KOH/g and/or not more than about 150, not more than about 125, not more than about 115, not more than about 100, or not more than about 75 mg KOH/g of polyol, or the hydroxyl number can be in the range of from about 20 to about 150 mg KOH/g, about 20 to about 125 mg KOH/g, about 20 to about 115 mg KOH/g, about 20 to about 100 mg KOH/g, about 20 to about 75 mg KOH/g, about 30 to about 150 mg KOH/g, about 30 to about 125 mg KOH/g, about 30 to about 115 mg KOH/g, about 30 to about 100 mg KOH/g, about 30 to about 75 mg KOH/g, about 40 to about 150 mg KOH/g, about 40 to about 125 mg KOH/g, about 40 to about 115 mg KOH/g, about 40 to about 100

mg KOH/g, or about 40 to about 75 mg KOH/g.

In other embodiments, the polymeric polyol can have hydroxyl number of at least about 100, at least about 110, at least about 115, at least about 120, at least about 125, at least about 130, at least about 135, at least about 140 mg KOH/g and/or not more than about 300, not more than about 290, not more than about 275, not more than about 250, not more than about 230, not more than about 225 mg KOH/g of polyol. The hydroxyl number can be in the range of from about 100 to about 300 mg KOH/g, about 100 to about 290 mg KOH/g, about 100 to about 275 mg KOH/g, about 100 to about 250 mg KOH/g, about 100 to about 230 mg KOH/g, about 100 to about 225 mg KOH/g, about 110 to about 300 mg KOH/g, about 110 to about 290 mg KOH/g, about 110 to about 275 mg KOH/g, about 110 to about 250 mg KOH/g, about 110 to about 230 mg KOH/g, about 110 to about 225 mg KOH/g, about 115 to about 300 mg KOH/g, about 115 to about 290 mg KOH/g, about 115 to about 275 mg KOH/g, about 115 to about 250 mg KOH/g, about 115 to about 230 mg KOH/g, about 115 to about 225 mg KOH/g, about 120 to about 300 mg KOH/g, about 120 to about 290 mg KOH/g, about 120 to about 275 mg KOH/g, about 120 to about 250 mg KOH/g, about 120 to about 230 mg KOH/g, about 120 to about 225 mg KOH/g, about 125 to about 300 mg KOH/g, about 125 to about 290 mg KOH/g, about 125 to about 275 mg KOH/g, about 125 to about 250 mg KOH/g, about 125 to about 230 mg KOH/g, about 125 to about 225 mg KOH/g, about 130 to about 300 mg KOH/g, about 130 to about 290 mg KOH/g, about 130 to about 275 mg KOH/g, about 130 to about 250 mg KOH/g, about 130 to about 230 mg KOH/g, about 130 to about 225 mg KOH/g, about 135 to about 300 mg KOH/g, about 135 to about 290 mg KOH/g, about 135 to about 275 mg KOH/g, about 135 to about 250 mg KOH/g, about 135 to about 230 mg KOH/g, about 135 to about 225 mg KOH/g, about 140 to about 300 mg KOH/g, about 140 to about 290 mg KOH/g, about 140 to about 275 mg KOH/g, about 140 to about 250 mg KOH/g, about 140 to about 230 mg KOH/g, or about 140 to about 225 mg KOH/g.

The polymeric polyol may include both primary and secondary hydroxyl groups. As used herein, the term "primary hydroxyl group" refers to a hydroxyl functional group bonded to a carbon atom, which itself is bonded to only one other carbon atom. As used herein, the term "secondary hydroxyl group" refers to a hydroxyl functional group bonded to a carbon atom, which itself is bonded to two other carbon atoms. The presence and amount of primary and secondary hydroxyl groups can be determined using $^{31}$P NMR, according to the following procedure, or its equivalent. A complete description of the method is found in the following publication: Spyros, A, (2002), "Quantitative determination of the distribution of free hydroxylic and carboxylic groups in unsaturated polyester and alkyd resins by 31P-NMR spectroscopy," Journal of Applied Polymer Science, 83(8), 1635-1642.

A solvent solution is prepared by combining, a nominal 0.0060 grams of cyclohexanol, with a nominal 0.0008 g of chromium (III) acetylacetonate. The exact weights of both components are recorded. To the same mixture, 6.15 mL of pyridine and 3.85 mL of deuterated chloroform are added, to give a total of 10 mL of solvent solution. A PTFE-coated magnetic stirring bar is added and the solution is allowed to mix thoroughly. A sample of the polymer being tested is weighed out to a mass of approximately 0.0300 +/- 0.005 grams and the exact mass of the sample is recorded. Using a calibrated pipette, exactly 1 mL of the solvent solution is added to the polymer sample, and the combination is allowed to stir at room temperature until the polymer sample dissolves. Once the polymer has dissolved, 35 μL of 2-chloro-4,4,5,5-tetramethyl-1,3,2-dioxaphospholane, is added to the solution via calibrated pipette and the resulting mixture is capped with a septum-containing cap. The mixture is then allowed to stir for 30 minutes at room temperature before being transferred to a 5 mm NMR tube.

The sample is then subjected to $^{31}$P NMR analysis, using the parameters summarized in Table 1, below.

**Table 1: NMR Parameters for $^{31}$P NMR Hydroxyl and Acid Number Analysis**

| Parameter | Value |
|---|---|
| Pulse program | s2pul |
| Number of Points | 20361 |
| Number of Transients | 64 |
| Relaxation Delay | 10s |
| Pulse Angle | 45 degrees |
| 1H decoupling | decoupled - NOE |
| Temperature | 26.0°C |
| Spectrum width | 128.1 to 178.1 |

Upon completion of the analysis, the resulting spectrum is phased and baseline corrected, and then the adjusted spectrum is referenced to the large water/2-chloro-4,4,5,5-tetramethyl-cyclohexanol peak at 132.2 ppm. The area of the

peak of the internal standard, cyclohexanol, is set to 1, and the remaining peaks are integrated according to the ranges summarized in Table 2, below.

**Table 2: Integration Ranges for $^{31}$P NMR Hydroxyl and Acid Number Analysis**

| Component | Range |
|---|---|
| Carboxylic acids | 135.00 to 135.45 ppm |
| Cyclohexanol (area = 1) | 145.00 to 145.35 ppm |
| Secondary Hydroxyls | 146.00 to 146.80 ppm |
| Primary Hydroxyls | 146.80 to 148.00 ppm |

The primary hydroxyl number and secondary hydroxyl number, each in units of mg KOH per g of polymer, are calculated according to the following equation:

$$OH\ \# = \frac{Area\ of\ sample\ at\ desired\ range}{Area\ of\ cyclohexanol} \times \frac{Mass\ cyclohexanol(g)}{100.158(\frac{g}{mol})} \times \frac{1}{Sample\ mass(g)} * 56111 \quad (1).$$

In some embodiments, the polymeric polyol used in reaction systems of the present invention can have a primary hydroxyl number, measured as described above, of at least about 5, at least about 10, at least about 15, at least about 20, at least about 25, at least about 30, at least about 35, at least about 40 mg KOH per g of polymer and/or not more than about 120, not more than about 110, not more than about 100, not more than about 90, not more than about 80, not more than about 75, not more than about 60 mg KOH per g of polymer, measured as described previously.

The primary hydroxyl number may be in the range of from about 5 to about 120 mg KOH/g, about 5 to about 110 mg KOH/g, about 5 to about 100 mg KOH/g, about 5 to about 90 mg KOH/g, about 5 to about 80 mg KOH/g, about 5 to about 75 mg KOH/g, about 5 to about 60 mg KOH/g, about 10 to about 120 mg KOH/g, about 10 to about 110 mg KOH/g, about 10 to about 100 mg KOH/g, about 10 to about 90 mg KOH/g, about 10 to about 80 mg KOH/g, about 10 to about 75 mg KOH/g, about 10 to about 60 mg KOH/g, about 15 to about 120 mg KOH/g, about 15 to about 110 mg KOH/g, about 15 to about 100 mg KOH/g, about 15 to about 90 mg KOH/g, about 15 to about 80 mg KOH/g, about 15 to about 75 mg KOH/g, about 15 to about 60 mg KOH/g, about 20 to about 120 mg KOH/g, about 20 to about 110 mg KOH/g, about 20 to about 100 mg KOH/g, about 20 to about 90 mg KOH/g, about 20 to about 80 mg KOH/g, about 20 to about 75 mg KOH/g, about 20 to about 60 mg KOH/g, about 25 to about 120 mg KOH/g, about 25 to about 110 mg KOH/g, about 25 to about 100 mg KOH/g, about 25 to about 90 mg KOH/g, about 25 to about 80 mg KOH/g, about 25 to about 75 mg KOH/g, about 25 to about 60 mg KOH/g, about 30 to about 120 mg KOH/g, about 30 to about 110 mg KOH/g, about 30 to about 100 mg KOH/g, about 30 to about 90 mg KOH/g, about 30 to about 80 mg KOH/g, about 30 to about 75 mg KOH/g, about 30 to about 60 mg KOH/g, about 35 to about 120 mg KOH/g, about 35 to about 110 mg KOH/g, about 35 to about 100 mg KOH/g, about 35 to about 90 mg KOH/g, about 35 to about 80 mg KOH/g, about 35 to about 75 mg KOH/g, about 35 to about 60 mg KOH/g, about 40 to about 120 mg KOH/g, about 40 to about 110 mg KOH/g, about 40 to about 100 mg KOH/g, about 40 to about 90 mg KOH/g, about 40 to about 80 mg KOH/g, about 40 to about 75 mg KOH/g, or about 40 to about 60 mg KOH/g.

The secondary hydroxyl number of the polymer polyol can be at least about 5, at least about 10, at least about 15, at least about 20, at least about 25, at least about 30, at least about 35, at least about 40 mg KOH per g of polymer and/or not more than about 120, not more than about 110, not more than about 100, not more than about 90, not more than about 80, not more than about 75, not more than about 60 mg KOH per g of polymer, also measured as described previously.

The secondary hydroxyl number may be in the range of from about 5 to about 120 mg KOH/g, about 5 to about 110 mg KOH/g, about 5 to about 100 mg KOH/g, about 5 to about 90 mg KOH/g, about 5 to about 80 mg KOH/g, about 5 to about 75 mg KOH/g, about 5 to about 60 mg KOH/g, about 10 to about 120 mg KOH/g, about 10 to about 110 mg KOH/g, about 10 to about 100 mg KOH/g, about 10 to about 90 mg KOH/g, about 10 to about 80 mg KOH/g, about 10 to about 75 mg KOH/g, about 10 to about 60 mg KOH/g, about 15 to about 120 mg KOH/g, about 15 to about 110 mg KOH/g, about 15 to about 100 mg KOH/g, about 15 to about 90 mg KOH/g, about 15 to about 80 mg KOH/g, about 15 to about 75 mg KOH/g, about 15 to about 60 mg KOH/g, about 20 to about 120 mg KOH/g, about 20 to about 110 mg KOH/g, about 20 to about 100 mg KOH/g, about 20 to about 90 mg KOH/g, about 20 to about 80 mg KOH/g, about 20 to about 75 mg KOH/g, about 20 to about 60 mg KOH/g, about 25 to about 120 mg KOH/g, about 25 to about 110 mg

KOH/g, about 25 to about 100 mg KOH/g, about 25 to about 90 mg KOH/g, about 25 to about 80 mg KOH/g, about 25 to about 75 mg KOH/g, about 25 to about 60 mg KOH/g, about 30 to about 120 mg KOH/g, about 30 to about 110 mg KOH/g, about 30 to about 100 mg KOH/g, about 30 to about 90 mg KOH/g, about 30 to about 80 mg KOH/g, about 30 to about 75 mg KOH/g, about 30 to about 60 mg KOH/g, about 35 to about 120 mg KOH/g, about 35 to about 110 mg KOH/g, about 35 to about 100 mg KOH/g, about 35 to about 90 mg KOH/g, about 35 to about 80 mg KOH/g, about 35 to about 75 mg KOH/g, about 35 to about 60 mg KOH/g, about 40 to about 120 mg KOH/g, about 40 to about 110 mg KOH/g, about 40 to about 100 mg KOH/g, about 40 to about 90 mg KOH/g, about 40 to about 80 mg KOH/g, about 40 to about 75 mg KOH/g, or about 40 to about 60 mg KOH/g.

In some embodiments, the polymeric polyol can have a weight ratio of secondary hydroxyl groups to primary hydroxyl of greater than 5:95, at least about 10:90, at least about 20:80, at least about 25:75, at least about 30:70, at least about 40:60, at least about 45:55, at least about 50:50, at least about 60:40, at least about 70:30, at least about 80:20, at least about 90:10, or at least about 95:5. The weight ratio of primary hydroxyl groups to secondary hydroxyl groups can be determined according to the following formula (2):

$$Secondary\ OH\ \#: Primary\ OH\ \# = \frac{Secondary\ OH\ \#}{Primary\ OH\ \#} \qquad (2).$$

The polymeric polyol may include at least about 5, at least about 10, at least about 15, at least about 20, at least about 25, at least about 30, at least about 40, at least about 45, at least about 50, at least about 60, at least about 70, at least about 80, at least about 90, or at least about 95 weight percent of secondary hydroxyl groups, based on the total number of primary and secondary hydroxyl groups, calculated according to the following formula (3):

$$Percent\ Secondary\ OH = \frac{Secondary\ OH\ \#}{Secondary\ OH\ \# + Primary\ OH\ \#} \times 100 \qquad (3).$$

The polymeric polyol can comprise not more than about 95, not more than about 90, not more than about 80, not more than about 70, not more than about 60, or not more than about 50 weight percent of secondary hydroxyl groups, based on the total number of primary and secondary hydroxyl groups, calculated as shown above. The polymeric polyol may include secondary hydroxyl groups in an amount in the range of from about 5 to about 95 weight percent, about 5 to about 90 weight percent, about 5 to about 80 weight percent, about 5 to about 70 weight percent, about 5 to about 60 weight percent, about 5 to about 50 weight percent, about 10 to about 95 weight percent, about 10 to about 90 weight percent, about 10 to about 80 weight percent, about 10 to about 70 weight percent, about 10 to about 60 weight percent, about 10 to about 50 weight percent, about 15 to about 95 weight percent, about 15 to about 90 weight percent, about 15 to about 80 weight percent, about 15 to about 70 weight percent, about 15 to about 60 weight percent, about 15 to about 50 weight percent, about 20 to about 95 weight percent, about 20 to about 90 weight percent, about 20 to about 80 weight percent, about 20 to about 70 weight percent, about 20 to about 60 weight percent, about 20 to about 50 weight percent, about 25 to about 95 weight percent, about 25 to about 90 weight percent, about 25 to about 80 weight percent, about 25 to about 70 weight percent, about 25 to about 60 weight percent, about 25 to about 50 weight percent, about 30 to about 95 weight percent, about 30 to about 90 weight percent, about 30 to about 80 weight percent, about 30 to about 70 weight percent, about 30 to about 60 weight percent, about 30 to about 50 weight percent, about 35 to about 95 weight percent, about 35 to about 90 weight percent, about 35 to about 80 weight percent, about 35 to about 70 weight percent, about 35 to about 60 weight percent, about 35 to about 50 weight percent, about 40 to about 95 weight percent, about 40 to about 90 weight percent, about 40 to about 80 weight percent, about 40 to about 70 weight percent, about 40 to about 60 weight percent, about 40 to about 50 weight percent, about 45 to about 95 weight percent, about 45 to about 90 weight percent, about 45 to about 80 weight percent, about 45 to about 70 weight percent, about 45 to about 60 weight percent, about 45 to about 50 weight percent, about 50 to about 95 weight percent, about 50 to about 90 weight percent, about 50 to about 80 weight percent, about 50 to about 70 weight percent, about 50 to about 60 weight percent, about 60 to about 95 weight percent, about 60 to about 90 weight percent, about 60 to about 80 weight percent, about 60 to about 70 weight percent, about 70 to about 95 weight percent, about 70 to about 90 weight percent, about 70 to about 80 weight percent, about 80 to about 95 weight percent, about 80 to about 90 weight percent, about 85 to about 95 weight percent, about 85 to about 90 weight percent, or about 90 to about 95 weight percent. In some embodiments, the polymeric polyol can comprise at least about 97 or at least 99 weight percent secondary hydroxyl groups, or it may include all (100 weight percent) secondary hydroxyl groups.

In some embodiments, the polymeric polyol may include not more than about 95, not more than about 90, not more than about 85, not more than about 80, not more than about 75, not more than about 70, not more than about 65, not more than about 60, not more than about 55, not more than about 50, not more than about 45, not more than about

40, not more than about 35, not more than about 30, not more than about 25, not more than about 20, not more than about 15, not more than about 10, or not more than about 5 weight percent of primary hydroxyl groups, based on the total number of primary and secondary hydroxyl groups according to the following formula (4):

$$Percent\ Primary\ OH = \frac{Primary\ OH\ \#}{Secondary\ OH\ \# + Primary\ OH\ \#} \times 100 \qquad (4).$$

The above-described procedure may also be used to calculate the acid number of polymeric polyols described herein, using the equation (1), above, but modified to include the area of the sample calculated in carboxylic acid integration range between 135.00 and 135.45 ppm.

In some embodiments, the polymeric polyol can have an acid number of at least about 0, at least about 1, at least about 2, at least about 3, at least about 4, at least about 6, at least about 8, or at least about 10 mg KOH/g. In some embodiments, the polymeric polyol can have an acid number of not more than about 40, not more than about 30, not more than about 25, not more than about 20, not more than about 18, not more than about 15, not more than about 10, or not more than about 8 mg KOH/g, measured as described above.

The polymeric polyol can have an acid number in the range of from 0 to about 40 mg KOH/g, 0 to about 30 mg KOH/g, 0 to about 25 mg KOH/g, 0 to 20 mg KOH/g, 0 to 18 mg KOH/g, 0 to 15 mg KOH/g, 0 to 10 mg KOH/g, 0 to 8 mg KOH/g, about 1 to about 40 mg KOH/g, about 1 to about 30 mg KOH/g, about 1 to about 25 mg KOH/g, about 1 to about 20 mg KOH/g, about 1 to about 18 mg KOH/g, about 1 to about 15 mg KOH/g, about 1 to about 10 mg KOH/g, about 1 to about 8 mg KOH/g, about 2 to about 40 mg KOH/g, about 2 to about 30 mg KOH/g, about 2 to about 25 mg KOH/g, about 2 to about 20 mg KOH/g, about 2 to about 18 mg KOH/g, about 2 to about 15 mg KOH/g, about 2 to about 10 mg KOH/g, about 2 to about 8 mg KOH/g, about 3 to about 40 mg KOH/g, about 3 to about 30 mg KOH/g, about 3 to about 25 mg KOH/g, about 3 to about 20 mg KOH/g, about 3 to about 18 mg KOH/g, about 3 to about 15 mg KOH/g, about 3 to about 10 mg KOH/g, about 3 to about 8 mg KOH/g, about 4 to about 40 mg KOH/g, about 4 to about 30 mg KOH/g, about 4 to about 25 mg KOH/g, about 4 to about 20 mg KOH/g, about 4 to about 18 mg KOH/g, about 4 to about 15 mg KOH/g, about 4 to about 10 mg KOH/g, about 4 to about 8 mg KOH/g, about 6 to about 40 mg KOH/g, about 6 to about 30 mg KOH/g, about 6 to about 25 mg KOH/g, about 6 to about 20 mg KOH/g, about 6 to about 18 mg KOH/g, about 6 to about 15 mg KOH/g, about 6 to about 10 mg KOH/g, about 6 to about 8 mg KOH/g, about 8 to about 40 mg KOH/g, about 8 to about 30 mg KOH/g, about 8 to about 25 mg KOH/g, about 8 to about 20 mg KOH/g, about 8 to about 18 mg KOH/g, about 8 to about 15 mg KOH/g, about 8 to about 10 mg KOH/g, about 10 to about 40 mg KOH/g, about 10 to about 30 mg KOH/g, about 10 to about 25 mg KOH/g, about 10 to about 20 mg KOH/g, about 10 to about 18 mg KOH/g, or about 10 to about 15 mg KOH/g.

The polymeric polyols used in reaction systems of the present invention are non-linear polyols and can have a theoretical hydroxyl functionality of at least about 2.25, at least about 2.40, at least about 2.5, at least about 2.75, at least about 2.80, or at least about 3 and not more than about 10, not more than about 9, not more than about 8, not more than about 7, not more than about 6, not more than about 5, not more than about 4, not more than about 3.75, not more than about 3.5, not more than about 3. As used herein, the term "non-linear" used in reference to a polyol refers to polyols having a theoretical hydroxyl functionality greater than 2.2.

The theoretical hydroxyl functionality of the polymeric polyol are in the range of from about 2.25 to about 10, about 2.25 to about 9, about 2.25 to about 8, about 2.25 to about 7, about 2.25 to about 6, about 2.25 to about 5, about 2.25 to about 4, about 2.25 to about 3.75, about 2.25 to about 3.5, about 2.25 to about 3, about 2.40 to about 10, about 2.40 to about 9, about 2.40 to about 8, about 2.40 to about 7, about 2.40 to about 6, about 2.40 to about 5, about 2.40 to about 4, about 2.40 to about 3.75, about 2.40 to about 3.5, about 2.40 to about 3, about 2.5 to about 10, about 2.5 to about 9, about 2.5 to about 8, about 2.5 to about 7, about 2.5 to about 6, about 2.5 to about 5, about 2.5 to about 4, about 2.5 to about 3.75, about 2.5 to about 3.5, about 2.5 to about 3, about 2.75 to about 10, about 2.75 to about 9, about 2.75 to about 8, about 2.75 to about 7, about 2.75 to about 6, about 2.75 to about 5, about 2.75 to about 4, about 2.75 to about 3.75, about 2.75 to about 3.5, about 2.75 to about 3, about 2.8 to about 10, about 2.8 to about 9, about 2.8 to about 8, about 2.8 to about 7, about 2.8 to about 6, about 2.8 to about 5, about 2.8 to about 4, about 2.8 to about 3.75, about 2.8 to about 3.5, about 2.8 to about 3, about 3 to about 10, about 3 to about 9, about 3 to about 8, about 3 to about 7, about 3 to about 6, about 3 to about 5, about 3 to about 4, about 3 to about 3.75, or about 3 to about 3.5.

The molecular weight of the polymeric polyol can vary and may be selected, at least in part, based on the desired end use or application of the reaction system. As used herein, the term "molecular weight," refers to the number average molecular weight ($M_n$) of the polymeric polyol, measured by gel permeation chromatography using an Agilent 1100 Series GPC-SEC system with a refractive index detector and polystyrene standards.

In some embodiments, the polymeric polyol can have a number average molecular weight of at least about 250, at least about 400, at least about 500, at least about 750, at least about 1000, at least about 1250, at least about 1500, at least about 2000, at least about 2500, at least about 3500, at least about 5000, at least about 7500, or at least

about 10,000 Daltons. In some embodiments, the number average molecular weight of the polymeric polyol can be not more than about 50,000, not more than about 40,000, not more than about 35,000, not more than about 25,000, not more than about 20,000, not more than about 15,000, not more than about 10,000, not more than about 8500, not more than about 7500, not more than about 5000, not more than about 4000, not more than about 3000, not more than about 2500, not more than about 2000, not more than about 1750 Daltons.

The polymeric polyol can have a number average molecular weight in the range of from about 250 to about 50,000 Daltons, about 250 to about 40,000 Daltons, about 250 to about 35,000 Daltons, about 250 to about 25,000 Daltons, about 250 to about 20,000 Daltons, about 250 to about 15,000 Daltons, about 250 to about 10,000 Daltons, about 250 to about 8500 Daltons, about 250 to about 7500 Daltons, about 250 to about 5000 Daltons, about 250 to about 4000 Daltons, about 250 to about 3000 Daltons, about 250 to about 2500 Daltons, about 250 to about 2000 Daltons, about 250 to about 1750 Daltons, about 400 to about 50,000 Daltons, about 400 to about 40,000 Daltons, about 400 to about 35,000 Daltons, about 400 to about 25,000 Daltons, about 400 to about 20,000 Daltons, about 400 to about 15,000 Daltons, about 400 to about 10,000 Daltons, about 400 to about 8500 Daltons, about 400 to about 7500 Daltons, about 400 to about 5000 Daltons, about 400 to about 4000 Daltons, about 400 to about 3000 Daltons, about 400 to about 2500 Daltons, about 400 to about 2000 Daltons, about 400 to about 1750 Daltons, about 500 to about 50,000 Daltons, about 500 to about 40,000 Daltons, about 500 to about 35,000 Daltons, about 500 to about 25,000 Daltons, about 500 to about 20,000 Daltons, about 500 to about 15,000 Daltons, about 500 to about 10,000 Daltons, about 500 to about 8500 Daltons, about 500 to about 7500 Daltons, about 500 to about 5000 Daltons, about 500 to about 4000 Daltons, about 500 to about 3000 Daltons, about 500 to about 2500 Daltons, about 500 to about 2000 Daltons, about 500 to about 1750 Daltons, about 750 to about 50,000 Daltons, about 750 to about 40,000 Daltons, about 750 to about 35,000 Daltons, about 750 to about 25,000 Daltons, about 750 to about 20,000 Daltons, about 750 to about 15,000 Daltons, about 750 to about 10,000 Daltons, about 750 to about 8500 Daltons, about 750 to about 7500 Daltons, about 750 to about 5000 Daltons, about 750 to about 4000 Daltons, about 750 to about 3000 Daltons, about 750 to about 2500 Daltons, about 750 to about 2000 Daltons, about 750 to about 1750 Daltons, about 1000 to about 50,000 Daltons, about 1000 to about 40,000 Daltons, about 1000 to about 35,000 Daltons, about 1000 to about 25,000 Daltons, about 1000 to about 20,000 Daltons, about 1000 to about 15,000 Daltons, about 1000 to about 10,000 Daltons, about 1000 to about 8500 Daltons, about 1000 to about 7500 Daltons, about 1000 to about 5000 Daltons, about 1000 to about 4000 Daltons, about 1000 to about 3000 Daltons, about 1000 to about 2500 Daltons, about 1000 to about 2000 Daltons, about 1000 to about 1750 Daltons, about 1250 to about 50,000 Daltons, about 1250 to about 40,000 Daltons, about 1250 to about 35,000 Daltons, about 1250 to about 25,000 Daltons, about 1250 to about 20,000 Daltons, about 1250 to about 15,000 Daltons, about 1250 to about 10,000 Daltons, about 1250 to about 8500 Daltons, about 1250 to about 7500 Daltons, about 1250 to about 5000 Daltons, about 1250 to about 4000 Daltons, about 1250 to about 3000 Daltons, about 1250 to about 2500 Daltons, about 1250 to about 2000 Daltons, about 1250 to about 1750 Daltons, about 1500 to about 50,000 Daltons, about 1500 to about 40,000 Daltons, about 1500 to about 35,000 Daltons, about 1500 to about 25,000 Daltons, about 1500 to about 20,000 Daltons, about 1500 to about 15,000 Daltons, about 1500 to about 10,000 Daltons, about 1500 to about 8500 Daltons, about 1500 to about 7500 Daltons, about 1500 to about 5000 Daltons, about 1500 to about 4000 Daltons, about 1500 to about 3000 Daltons, about 1500 to about 2500 Daltons, about 1500 to about 2000 Daltons, about 1500 to about 1750 Daltons, about 2000 to about 50,000 Daltons, about 2000 to about 40,000 Daltons, about 2000 to about 35,000 Daltons, about 2000 to about 25,000 Daltons, about 2000 to about 20,000 Daltons, about 2000 to about 15,000 Daltons, about 2000 to about 10,000 Daltons, about 2000 to about 8500 Daltons, about 2000 to about 7500 Daltons, about 2000 to about 5000 Daltons, about 2000 to about 4000 Daltons, about 2000 to about 3000 Daltons, about 2000 to about 2500 Daltons, about 2500 to about 50,000 Daltons, about 2500 to about 40,000 Daltons, about 2500 to about 35,000 Daltons, about 2500 to about 25,000 Daltons, about 2500 to about 20,000 Daltons, about 2500 to about 15,000 Daltons, about 2500 to about 10,000 Daltons, about 2500 to about 8500 Daltons, about 2500 to about 7500 Daltons, about 2500 to about 5000 Daltons, about 2500 to about 4000 Daltons, about 2500 to about 3000 Daltons, about 3500 to about 50,000 Daltons, about 3500 to about 40,000 Daltons, about 3500 to about 35,000 Daltons, about 3500 to about 25,000 Daltons, about 3500 to about 20,000 Daltons, about 3500 to about 15,000 Daltons, about 3500 to about 10,000 Daltons, about 3500 to about 8500 Daltons, about 3500 to about 7500 Daltons, about 3500 to about 5000 Daltons, about 3500 to about 4000 Daltons, about 5000 to about 50,000 Daltons, about 5000 to about 40,000 Daltons, about 5000 to about 35,000 Daltons, about 5000 to about 25,000 Daltons, about 5000 to about 20,000 Daltons, about 5000 to about 15,000 Daltons, about 5000 to about 10,000 Daltons, about 5000 to about 8500 Daltons, about 5000 to about 7500 Daltons, about 7500 to about 50,000 Daltons, about 7500 to about 40,000 Daltons, about 7500 to about 35,000 Daltons, about 7500 to about 25,000 Daltons, about 7500 to about 20,000 Daltons, about 7500 to about 15,000 Daltons, about 7500 to about 10,000 Daltons, about 7500 to about 8500 Daltons, about 10,000 to about 50,000 Daltons, about 10,000 to about 40,000 Daltons, about 10,000 to about 35,000 Daltons, about 10,000 to about 25,000 Daltons, about 10,000 to about 20,000 Daltons, or about 10,000 to about 15,000 Daltons.

According to some embodiments, the polymeric polyol can have a number average molecular weight of at least about 250, at least about 400, at least about 500, or at least about 750 Daltons and/or not more than about 25,000, not

more than about 20,000, not more than about 15,000, not more than about 10,000, not more than about 5000, not more than about 3000, not more than about 2500, or not more than about 2000 Daltons.

The polymeric polyol can have a number average molecular weight in the range of from about 250 to about 25,000 Daltons, about 250 to about 20,000 Daltons, about 250 to about 15,000 Daltons, about 250 to about 10,000 Daltons, about 250 to about 5000 Daltons, about 250 to about 3000 Daltons, about 250 to about 2500 Daltons, about 250 to about 2000 Daltons, about 400 to about 25,000 Daltons, about 400 to about 20,000 Daltons, about 400 to about 15,000 Daltons, about 400 to about 10,000 Daltons, about 400 to about 5000 Daltons, about 400 to about 3000 Daltons, about 400 to about 2500 Daltons, about 400 to about 2000 Daltons, about 500 to about 25,000 Daltons, about 500 to about 20,000 Daltons, about 500 to about 15,000 Daltons, about 500 to about 10,000 Daltons, about 500 to about 5000 Daltons, about 500 to about 3000 Daltons, about 500 to about 2500 Daltons, about 500 to about 2000 Daltons, about 750 to about 25,000 Daltons, about 750 to about 20,000 Daltons, about 750 to about 15,000 Daltons, about 750 to about 10,000 Daltons, about 750 to about 5000 Daltons, about 750 to about 3000 Daltons, about 750 to about 2500 Daltons, or about 750 to about 2000 Daltons.

In other embodiments, the polymeric polyol can have a number average molecular weight of at least about 1000, at least about 1500, or at least about 2000 Daltons and/or not more than about 50,000, not more than about 40,000, not more than about 25,000, not more than about not more than about 15,000, not more than about 10,000, or not more than about 8500 Daltons. The polymeric polyol can have a number average molecular weight in the range of from about 1000 to about 50,000 Daltons, about 1000 to about 40,000 Daltons, about 1000 to about 25,000 Daltons, about 1000 to about 15,000 Daltons, about 1000 to about 10,000 Daltons, about 1000 to about 8500 Daltons, about 1500 to about 50,000 Daltons, about 1500 to about 40,000 Daltons, about 1500 to about 25,000 Daltons, about 1500 to about 15,000 Daltons, about 1500 to about 10,000 Daltons, about 1500 to about 8500 Daltons, about 2000 to about 50,000 Daltons, about 2000 to about 40,000 Daltons, about 2000 to about 25,000 Daltons, about 2000 to about 15,000 Daltons, about 2000 to about 10,000 Daltons, or about 2000 to about 8500 Daltons.

The reaction systems includes both a monomeric and a polymeric polyol in similar or different amounts. For example, when the reaction system includes both a monomeric polyol and a polymeric polyol, the monomeric polyol may be present in an amount of at least about 1, at least about 5, at least about 10, at least about 15, at least about 20 weight percent and/or not more than about 60, not more than about 50, not more than about 40, or not more than about 30 weight percent, based on the total weight of the monomeric and polymeric polyol.

The amount of monomeric polyol can be in the range of from about 1 to about 60 weight percent, about 5 to about 60 weight percent, about 10 to about 60 weight percent, about 15 to about 60 weight percent, about 20 to about 60 weight percent, about 1 to about 50 weight percent, about 5 to about 50 weight percent, about 10 to about 50 weight percent, about 15 to about 50 weight percent, about 20 to about 50 weight percent, about 1 to about 40 weight percent, about 5 to about 40 weight percent, about 10 to about 40 weight percent, about 15 to about 40 weight percent, about 20 to about 40 weight percent, about 1 to about 30 weight percent, about 5 to about 30 weight percent, about 10 to about 30 weight percent, about 15 to about 30 weight percent, or about 20 to about 30 weight percent, based on the total weight of the monomeric and polymeric polyols.

In addition to at least one polyol and at least one isocyanate, the reaction systems formulated according to embodiments of the present invention can include at least one catalyst for enhancing the cure rate between the polymeric polyol and isocyanate. As discussed previously, it has unexpectedly been found that a zinc-containing catalyst may unexpectedly enhance the reaction rate or the cure rate of isocyanates with various types of polyols, including, for example, polyols with secondary hydroxyl groups and, in some embodiments, polyols with one or more hindered secondary hydroxyl groups.

In some embodiments, the catalyst employed in the polyurethane reaction systems as described herein can comprise a zinc-containing catalyst. Alternatively, or in addition, the metal component of the catalyst may include one or more other metals selected from the group consisting of lithium, sodium, magnesium, barium, potassium, calcium, bismuth, cadmium, aluminum, zirconium, tin, hafnium, titanium, lanthanum, vanadium, niobium, tantalum, tellurium, molybdenum, tungsten, cesium, and various combinations of two or more thereof. Several examples of zinc-containing catalysts suitable for use in the reaction systems of the present invention are described in U.S. Patent No. 8,088,846, which is incorporated herein by reference in its entirety to the extent not inconsistent with the present disclosure.

When the catalyst comprises a zinc-containing catalyst, it may include one or more organic ligands. In some embodiment, at least one of the ligands may comprise an amidine ligand and/or at least one of the ligands may comprise a carboxylate ligand. In some embodiments, the zinc-containing catalyst may include both an amidine ligand and a carboxylate ligand. Additionally, diketone and/or alkylacetoacetate ligands may also be used, along with the amidine ligand, when present. When the catalyst includes both an amidine and carboxylate ligand, the molar ratio of carboxylate ligands to amidine ligands present in the zinc-containing catalyst can be at least about 1:2, or it can be 1:1.

In some embodiments, the amidine ligand may comprise a substituted amidine ligand that comprises alkyl, aralkyl, or aryl residues and in which the carbon-nitrogen double bond of the amidine structure may be arranged as part of an open-chain molecule or as a constituent of a cyclic or bicyclic system. The substituted amines can include N,N-disubstituted amidines, N,N'-disubstituted amidines, N,N,N'-trisubstituted amidines, or combinations thereof.

Examples of suitable substituted amidines include, but are not limited to, 1,1,3,3-tetramethylguanidine, N,N-dimethyl-N'-phenylformamidine, N,N,N'-trimethylformamidine, 1-methylimidazole, 1,2-dimethylimidazole, 4,4-dimethyl-2-imidazoline, 2-methyltetrahydropyrimidines, 1,5-diazabicyclo[4.3.0]non-5-ene (DBN), 1,8-diazabicyclo[5.4.0]undec-7-ene (DBU). The carbon-nitrogen double bond may also be present exocyclically on a ring system, such as 2-methylimino-1-methylpyrrolidone. Mixtures of one or more of the above amidines may also be used.

Other examples of suitable amidines can include, but are not limited to, N'-cyclohexyl-N,N-dimethylformamidine, N'-methyl-N,N-di-n-butylacetamidine, N'-octadecyll-N,N-dimethylformamidine, N'-cyclohexyl-N,N-dimethylvaleramidine, 1-methyl-2-cyclohexyliminopyrrolidine, 3-butyl-3,4,5,6-tetrahydropyrimidine, N-(hexyliminomethyl)morpholine, N-($\alpha$-(decylimino ethyl)ethyl)pyrrolidine, N'-decyl-N,N-dimethylformamidine, N'-dodecyl-N,N-dimethylformamidine, N'-cyclohexyl-N,N-acetamidine, 1,5-diazabicyclo(4.3.0)none-5-ene, 1,8-diazabicyclo(5.4.0)undec-7-ene, 1,4-diazabicyclo(3.3.0)oct-4-ene, 2-methyl-1,5-diazabicyclo(4.3.0)none-5-ene, 2,7,8-trimethyl-1,5-diazabicyclo(4.3.0)none-5-ene, 2-butyl-1,5-diazabicyclo(4.3.0)none-5-ene, 1,9-diazabicyclo(6.5.0)tridec-8-ene, imidazoline, imidazole, tetrahydropyrimidine, dihydropyrimidine, pyrimidine rings, and combinations thereof.

Exemplary imidazoline ligands can include, but are not limited to, 1H-Imidazole-1-ethanol, 2-(8Z)-8-heptadecenyl-4,5-dihydro, 1H-Imidazole-1-ethanol, 2-(8Z)-8-heptadecenyl-4,5-dihydro, monoacetate salt, 1H-Imidazole-1-ethanol, -4,5-dihydro,-2-(9Z)-9-octadecenyl, 1H-Imidazole, 4,5-dihydro,-2-(9Z)-9-octadecenyl, oleyl hydroxyethyl imidazoline, 1H-Imidazole-1-ethanol, 4,5-dihydro-2-undecyl-, 1H-Imidazole-1-ethanol, 2(-8-heptadecenyl)-4,5-dihydro, 1-(2-hydroxyethyl)-2-tall oil alkyl-2-imidazoline, azelaic acid salt, 1H-Imidazole-1-ethanol, 2-heptadecyl-4,5-dihydro, 1H-Imidazole-1-ethanol, 2-nonyl-4,5-dihydro, 1H-Imidazole-1-ethanol, 4,5-dihydro-2-$C_{15-17}$-unsaturated alkyl derivatives, 1H-Imidazole-1-ethanol, 4,5-dihydro-2-norcoco alkyl derivatives, 1H-Imidazole-1-ethanol, 4,5-dihydro-2-nortall-oil alkyl derivatives, reaction product of 4,5-dihydro-2-nonyl 1H-Imidazole-1-ethanol, and 4,5-dihydro-2-heptyl 1H-Imidazole-1-ethanol with 2-propenoic acid, 1-propane sulfonic acid, 3-chloro-2-hydroxy-mono sodium salt reaction products with 2-(8Z)-8-heptadecenyl-4,5-dihydro 1H-Imidazole-1-ethanol, chloroacetic acid sodium salt reaction products with 1H-Imidazole-1-ethanol, 4,5-dihydro-2-norcoco alkyl derivatives, sodium hydroxide, 2-(8-heptadecenyl)-4,5-dihydro 1H-Imidazole-1-ethanamine, 9-octadecenoic acid compound with 2-(8-heptadecenyl)-4,5-dihydro 1H-Imidazole-1-ethanamine, and combinations thereof.

Examples of imidazole structures suitable for use as one or more ligands in the zinc-containing catalyst usable herein can include, for example, N-(2-Hydroxyethyl)imidazole, N-(3-Aminopropyl)imidazole, 4-(hydroxymethyl)Imidazole, 1-(tert-butoxycarbonyl)imidazole, Imidazole-4-propionic acid, 4-carboxyimidazole, 1-butylimidazole, 2-methyl-4-imidazolecarboxylic acid, 4-formyl imidazole, 1-(ethoxycarbonyl)imidazole, reaction product of propylene oxide with imidazole and 2-methyl imidazole, 1-trimethylsilyl imidazole, 4-(hydroxymethyl)Imidazole hydrochloride, copolymer of 1-chloro-2,3-epoxypropane and imidazole, 1(p-toluenesulfonyl)imidazole, 1,1'-carbonylbisimidazole, 1-(2-cyanoethyl)-2-ethyl-4-methylimidazole, 2-phenyl-2-imidazoline pyromellitate, 4-(hydroxymethyl)Imidazole picrate, reaction product of 2-propenoic acid with 4,5-dihydro-2-nonyl-1H-imidazole-1-ethanol and 2-heptyl-4,5-dihydro-1H-imidazole-1-ethanol, disodium salts, 1-(cyanoethyl)-2-undecylimidazole trimellitate, 1-(2-hydroxypropyl)imidazole formate, sodium imidazolate, silver imidazolate, and combinations thereof.

Examples of suitable carboxylate ligands can include, but are not limited to, $C_4$ to $C_{20}$, $C_6$ to $C_{16}$, or $C_6$ to $C_{10}$ aliphatic or aromatic carboxylate ligands. Suitable examples can include, but are not limited to, acetate ligands, formate ligands, 2-ethylhexanoate ligands, and combinations thereof. Additionally, suitable carboxylate ligands may include polymeric ligands, such as acrylic copolymers or acid functional polyesters. Combinations of one or more of the above carboxylates may also be used. Suitable diketone or alkylacetoacetate ligands may include, but are not limited to, 6-methyl-2,4-heptanedione; 2,2,6,6-tetramethyl-3,5-heptanedione; n-valerylacetone; n-hexanoylacetone; n-octanoylacetone; n-nonanoylacetone; n-decanoylacetone, and combinations thereof.

According to some embodiments, the total amount of zinc-containing catalyst present in the reaction system can be at least about 0.01, at least about 0.025, at least about 0.10, at least about 0.25, at least about 0.50, at least about 1, or at least about 1.5 weight percent and/or not more than about 10, not more than about 8, not more than about 5, not more than about 3, not more than about 2, not more than about 1, not more than about 0.5, or not more than about 0.25 weight percent of catalytic metal, based on the total resin solids, measured according to ASTM D-2369.

The reaction system can include a zinc-containing catalyst in an amount in the range of from about 0.01 to about 10, about 0.01 to about 8 weight percent, about 0.01 to about 5 weight percent, about 0.01 to about 3 weight percent, about 0.01 to about 2 weight percent, about 0.01 to about 1 weight percent, about 0.01 to about 0.5 weight percent, about 0.01 to about 0.25 weight percent, about 0.025 to about 10, about 0.025 to about 8 weight percent, about 0.025 to about 5 weight percent, about 0.025 to about 3 weight percent, about 0.025 to about 2 weight percent, about 0.025 to about 1 weight percent, about 0.025 to about 0.5 weight percent, about 0.025 to about 0.25 weight percent, about 0.10 to about 10, about 0.10 to about 8 weight percent, about 0.10 to about 5 weight percent, about 0.10 to about 3 weight percent, about 0.10 to about 2 weight percent, about 0.10 to about 1 weight percent, about 0.10 to about 0.5 weight percent, about 0.10 to about 0.25 weight percent, about 0.25 to about 10, about 0.25 to about 8 weight percent,

about 0.25 to about 5 weight percent, about 0.25 to about 3 weight percent, about 0.25 to about 2 weight percent, about 0.25 to about 1 weight percent, about 0.25 to about 0.5 weight percent, about 0.5 to about 10, about 0.5 to about 8 weight percent, about 0.5 to about 5 weight percent, about 0.5 to about 3 weight percent, about 0.5 to about 2 weight percent, about 0.5 to about 1 weight percent, about 1 to about 10, about 1 to about 8 weight percent, about 1 to about 5 weight percent, about 1 to about 3 weight percent, about 1 to about 2 weight percent, about 1.5 to about 10, about 1.5 to about 8 weight percent, about 1.5 to about 5 weight percent, about 1.5 to about 3 weight percent, or about 1.5 to about 2 weight percent. When the catalyst includes another metal in addition, or alternatively, to the zinc, the total amount of catalyst may fall within one or more of the above-described ranges.

The effectiveness of the zinc-containing catalyst at catalyzing the reaction between the isocyanate and the polyol present in the inventive reaction systems can be characterized by measuring the time required for the reaction system to react or cure and/or the rate at which it reacts or cures at a specified temperature. As used herein, the term "reaction rate" refers to the rate of reaction between the isocyanate and the polyol component and is used when the polyol is a monomeric polyol. As used herein, the term "cure rate" refers to the rate of cure between the isocyanate and the polyol component and is used when the system comprises a polymeric polyol, alone or in combination with a monomeric polyol. It should be understood that the temperatures provided for the following measurements do not limit the temperature at which the reaction systems, or compositions including this system, can be reacted or cured, but, instead, simply provides a reference temperature at which the performance of the inventive system can be characterized.

In some embodiments, when the components of the inventive polyurethane reaction systems are combined, the mixture may exhibit desirable curing behavior, as compared to conventional systems. For example, in some embodiments, when combined and cured at a temperature of at least 55°C, the isocyanate, polyol, and zinc-containing catalyst may have a cure rate that is at least 10 percent, at least 15 percent, or at least 20 percent faster than the cure rate of a comparative system including the same amounts of identical isocyanate, polyol, but including 0.05 weight percent, based on the total resin solids as determined by ASTM D-2369, of dibutyl tin dilaurate in the place of the zinc-containing catalyst. The method of measuring the cure rate of a reaction system is described in Example 3, below.

When combined at a temperature of 55°C, the polyol, which may be a polymeric polyol, the isocyanate, and the zinc-containing catalyst may exhibit a cure rate of at least about 0.045, at least about 0.050, at least about 0.055, at least about 0.060, at least about 0.065, at least about 0.070, at least about 0.075 $min^{-1}$, measured as described in Example 3, below.

According to some embodiments, when combined and cured at a temperature of 55°C, the polyol, which may be a polymeric polyol, the isocyanate, and the zinc-containing catalyst of the present invention may have a gelation time, or gel time, of not more than about 30 minutes. As used herein, the term "gel time" refers to the amount of time required for the combination to combine, or gel, and is measured as described in Example 3, below. In some embodiments, the gel time of the inventive reaction system, measured at a temperature of 55°C, can be not more than about 29, not more than about 28, not more than about 27, not more than about 26, not more than about 25, or not more than about 24 minutes, measured as described below.

In some embodiments, the above cure rate and/or gel times may be achievable by reaction systems as described herein, even with relatively low levels of zinc-containing catalyst. For example, reaction systems of the present invention may achieve the above cure rates and/or gel times with a catalyst loading of not more than about 1500, not more than about 1250, not more than about 1000, not more than about 750, or not more than about 500 ppm of zinc metal per resin solids. In some embodiments, the ratio of catalyst metal to resin solids can be not more than about 0.0015:1, not more than about 0.00125:1, not more than about 0.001:1, or not more than about 0.00075:1.

According to various embodiments of the present invention, the reaction system for forming a urethane and/or polyurethane can include at least two parts - an isocyanate-containing part and a polyol-containing part. When combined, the isocyanate and polyol react, in the presence of the catalyst, to form the desired urethane or polyurethane. The catalyst may be present in either part, but, in may be present in the polyol-containing part. Additionally, one or more solvents or additives may also be present in the reaction system and these may also be included in the isocyanate-containing part and/or the polyol-containing part. In some embodiments, the ratio of isocyanate to polyol, measured as the molar ratio of isocyanate to hydroxyl functional groups (NCO:OH) in the reaction system, can be at least about 0.5:1, at least about 0.75:1, at least about 0.85:1, at least about 1:1, at least about 1.1:1, at least about 1.15:1 and/or not more than about 2:1, not more than about 1.8:1, not more than about 1.75:1, not more than about 1.5:1, or not more than about 1.25:1.

The NCO:OH ratio of the reaction system can be in the range of from about 0.5:1 to about 2:1, about 0.5:1 to about 1.8:1, about 0.5:1 to about 1.75:1, about 0.5:1 to about 1.5:1, about 0.5:1 to about 1.25:1, about 0.75:1 to about 2:1, about 0.75:1 to about 1.8:1, about 0.75:1 to about 1.75:1, about 0.75:1 to about 1.5:1, about 0.75:1 to about 1.25:1, about 0.85:1 to about 2:1, about 0.85:1 to about 1.8:1, about 0.85:1 to about 1.75:1, about 0.85:1 to about 1.5:1, about 0.85:1 to about 1.25:1, about 1:1 to about 2:1, about 1:1 to about 1.8:1, about 1:1 to about 1.75:1, about 1:1 to about 1.5:1, about 1:1 to about 1.25:1, about 1.1:1 to about 2:1, about 1.1:1 to about 1.8:1, about 1.1:1 to about 1.75:1, about 1.1:1 to about 1.5:1, about 1.1:1 to about 1.25:1, about 1.15:1 to about 2:1, about 1.15:1 to about 1.8:1, about 1.15:1 to

about 1.75:1, about 1.15:1 to about 1.5:1, or about 1.15:1 to about 1.25:1.

When the two parts of a reaction system are combined, the reaction may take place at a temperature of at least about 0, at least about 5, at least about 10, at least about 20, at least about 25, at least about 30, at least about 40, at least about 45, at least about 50, at least about 60, at least about 70, or at least about 75°C and/or not more than about 160, not more than about 140, not more than about 120, not more than about 110, not more than about 105, not more than about 100, not more than about 95, not more than about 90, not more than about 85, not more than about 80, not more than about 75, not more than about 70, not more than about 65, not more than about 60, not more than about 55, not more than about 50, not more than about 45, not more than about 40, not more than about 35, not more than about 30, not more than about 25°C.

The reaction may take place at a temperature in the range of from about 0 to about 160°C, about 0 to about 140°C, about 0 to about 120°C, about 0 to about 110°C, about 0 to about 105°C, about 0 to about 100°C, about 0 to about 95°C, about 0 to about 90°C, about 0 to about 85°C, about 0 to about 80°C, about 0 to about 75°C, about 0 to about 70°C, about 0 to about 65°C, about 0 to about 60°C, about 0 to about 55°C, about 0 to about 50°C, about 0 to about 45°C, about 0 to about 40°C, about 0 to about 35°C, about 0 to about 30°C, about 0 to about 25°C, about 5 to about 160°C, about 5 to about 140°C, about 5 to about 120°C, about 5 to about 110°C, about 5 to about 105°C, about 5 to about 100°C, about 5 to about 95°C, about 5 to about 90°C, about 5 to about 85°C, about 5 to about 80°C, about 5 to about 75°C, about 5 to about 70°C, about 5 to about 65°C, about 5 to about 60°C, about 5 to about 55°C, about 5 to about 50°C, about 5 to about 45°C, about 5 to about 40°C, about 5 to about 35°C, about 5 to about 30°C, about 5 to about 25°C, about 10 to about 160°C, about 10 to about 140°C, about 10 to about 120°C, about 10 to about 110°C, about 10 to about 105°C, about 10 to about 100°C, about 10 to about 95°C, about 10 to about 90°C, about 10 to about 85°C, about 10 to about 80°C, about 10 to about 75°C, about 10 to about 70°C, about 10 to about 65°C, about 10 to about 60°C, about 10 to about 55°C, about 10 to about 50°C, about 10 to about 45°C, about 10 to about 40°C, about 10 to about 35°C, about 10 to about 30°C, about 10 to about 25°C, about 20 to about 160°C, about 20 to about 140°C, about 20 to about 120°C, about 20 to about 110°C, about 20 to about 105°C, about 20 to about 100°C, about 20 to about 95°C, about 20 to about 90°C, about 20 to about 85°C, about 20 to about 80°C, about 20 to about 75°C, about 20 to about 70°C, about 20 to about 65°C, about 20 to about 60°C, about 20 to about 55°C, about 20 to about 50°C, about 20 to about 45°C, about 20 to about 40°C, about 20 to about 35°C, about 20 to about 30°C, about 20 to about 25°C, about 25 to about 160°C, about 25 to about 140°C, about 25 to about 120°C, about 25 to about 110°C, about 25 to about 105°C, about 25 to about 100°C, about 25 to about 95°C, about 25 to about 90°C, about 25 to about 85°C, about 25 to about 80°C, about 25 to about 75°C, about 25 to about 70°C, about 25 to about 65°C, about 25 to about 60°C, about 25 to about 55°C, about 25 to about 50°C, about 25 to about 45°C, about 25 to about 40°C, about 25 to about 35°C, about 25 to about 30°C, about 30 to about 160°C, about 30 to about 140°C, about 30 to about 120°C, about 30 to about 110°C, about 30 to about 105°C, about 30 to about 100°C, about 30 to about 95°C, about 30 to about 90°C, about 30 to about 85°C, about 30 to about 80°C, about 30 to about 75°C, about 30 to about 70°C, about 30 to about 65°C, about 30 to about 60°C, about 30 to about 55°C, about 30 to about 50°C, about 30 to about 45°C, about 30 to about 40°C, about 30 to about 35°C, about 40 to about 160°C, about 40 to about 140°C, about 40 to about 120°C, about 40 to about 110°C, about 40 to about 105°C, about 40 to about 100°C, about 40 to about 95°C, about 40 to about 90°C, about 40 to about 85°C, about 40 to about 80°C, about 40 to about 75°C, about 40 to about 70°C, about 40 to about 65°C, about 40 to about 60°C, about 40 to about 55°C, about 40 to about 50°C, about 40 to about 45°C, about 45 to about 160°C, about 45 to about 140°C, about 45 to about 120°C, about 45 to about 110°C, about 45 to about 105°C, about 45 to about 100°C, about 45 to about 95°C, about 45 to about 90°C, about 45 to about 85°C, about 45 to about 80°C, about 45 to about 75°C, about 45 to about 70°C, about 45 to about 65°C, about 45 to about 60°C, about 45 to about 55°C, about 45 to about 50°C, about 50 to about 160°C, about 50 to about 140°C, about 50 to about 120°C, about 50 to about 110°C, about 50 to about 105°C, about 50 to about 100°C, about 50 to about 95°C, about 50 to about 90°C, about 50 to about 85°C, about 50 to about 80°C, about 50 to about 75°C, about 50 to about 70°C, about 50 to about 65°C, about 50 to about 60°C, about 50 to about 55°C, about 60 to about 160°C, about 60 to about 140°C, about 60 to about 120°C, about 60 to about 110°C, about 60 to about 105°C, about 60 to about 100°C, about 60 to about 95°C, about 60 to about 90°C, about 60 to about 85°C, about 60 to about 80°C, about 60 to about 75°C, about 60 to about 70°C, about 60 to about 65°C, about 70 to about 160°C, about 70 to about 140°C, about 70 to about 120°C, about 70 to about 110°C, about 70 to about 105°C, about 70 to about 100°C, about 70 to about 95°C, about 70 to about 90°C, about 70 to about 85°C, about 70 to about 80°C, about 70 to about 75°C, about 75 to about 160°C, about 75 to about 140°C, about 75 to about 120°C, about 75 to about 110°C, about 75 to about 105°C, about 75 to about 100°C, about 75 to about 95°C, about 75 to about 90°C, about 75 to about 85°C, or about 75 to about 80°C.

In some embodiments, the temperature at which the isocyanate and polyol of the reaction systems described herein may react or cure can be at or near ambient temperature. The reaction time or cure time for reaction systems according to embodiments of the present invention can be at least about 1 minute, at least about 2, at least about 5, at least about 15, at least about 30, at least about 45 minutes, at least about 1 hour, at least about 2, at least about 3, or at least about 5 hours, depending on the specific composition, method of application, and/or end use of the reaction

system.

In some embodiments, the reaction system of the present invention can be utilized in a coating composition, as a foam or spray foam, or as a polymer suitable for use in various types of casting and molding applications, including reactive injection molding (RIM). The polyurethanes formed from reaction systems of the present invention are thermoset polyurethanes, and it can include residues of the isocyanate components and polyol components corresponding to amounts within one or more of the ranges provided herein. In some embodiments, the parts of the polyurethane reaction system may be combined prior to being utilized in one or more enduse applications, or, in some embodiments, at least a portion of the reaction between the two parts of the reaction system may occur during the application of the composition to a substrate, or during the injection of the individual component parts into a mold.

According to some embodiments, the urethane or polyurethanes formed from reaction systems as described herein may be utilized in a coating composition. Any type of coating composition can be formed using polyurethane reaction systems as described herein, including, for example, powder coating compositions, waterborne coating compositions, and solvent-based coating compositions. Specific types of coating compositions can include, but are not limited to, paints, primers, functional coatings, and clear coats for automotive and aerospace applications, coatings for cans and coils, industrial primers and coatings, protective primers and coatings, powder coatings, household and industrial paint formulations, and others.

In some embodiments, the coating composition can have a total solids content of at least about 20, at least about 25, at least about 30, at least about 35, at least about 40, at least about 45, at least about 50, at least about 55, at least about 60 weight percent and/or not more than about 80, not more than about 75, not more than about 70, not more than about 65, not more than about 60, not more than about 55, or not more than about 50 weight percent, measured according to ASTM D-2369.

The total solids content of the coating composition can be in the range of from about 20 to about 80 weight percent, about 20 to about 75 weight percent, about 20 to about 70 weight percent, about 20 to about 65 weight percent, about 20 to about 60 weight percent, about 20 to about 55 weight percent, about 20 to about 50 weight percent, about 25 to about 80 weight percent, about 25 to about 75 weight percent, about 25 to about 70 weight percent, about 25 to about 65 weight percent, about 25 to about 60 weight percent, about 25 to about 55 weight percent, about 25 to about 50 weight percent, about 30 to about 80 weight percent, about 30 to about 75 weight percent, about 30 to about 70 weight percent, about 30 to about 65 weight percent, about 30 to about 60 weight percent, about 30 to about 55 weight percent, about 30 to about 50 weight percent, about 35 to about 80 weight percent, about 35 to about 75 weight percent, about 35 to about 70 weight percent, about 35 to about 65 weight percent, about 35 to about 60 weight percent, about 35 to about 55 weight percent, about 35 to about 50 weight percent, about 40 to about 80 weight percent, about 40 to about 75 weight percent, about 40 to about 70 weight percent, about 40 to about 65 weight percent, about 40 to about 60 weight percent, about 40 to about 55 weight percent, about 40 to about 50 weight percent, about 45 to about 80 weight percent, about 45 to about 75 weight percent, about 45 to about 70 weight percent, about 45 to about 65 weight percent, about 45 to about 60 weight percent, about 45 to about 55 weight percent, about 45 to about 50 weight percent, about 50 to about 80 weight percent, about 50 to about 75 weight percent, about 50 to about 70 weight percent, about 50 to about 65 weight percent, about 50 to about 60 weight percent, about 50 to about 55 weight percent, about 55 to about 80 weight percent, about 55 to about 75 weight percent, about 55 to about 70 weight percent, about 55 to about 65 weight percent, about 55 to about 60 weight percent, about 60 to about 80 weight percent, about 60 to about 75 weight percent, about 60 to about 70 weight percent, or about 60 to about 65 weight percent, measured according to ASTM D-2369.

In addition to the components of the reaction systems described previously, when the coating composition is a solvent-based coating composition, it may further include at least one organic solvent. The organic solvent, when present, can be in the coating composition in an amount of at least about 10, at least about 20, at least about 30, at least about 40 weight percent and/or not more than about 95, not more than about 90, not more than about 80, not more than about 70, not more than about 60, not more than about 50 weight percent, based on the total weight of the polyol, the isocyanate, and the catalyst described above.

The solvent may optionally be present in the coating composition in an amount in the range of from about 10 to about 95 weight percent, about 10 to about 90 weight percent, about 10 to about 80 weight percent, about 10 to about 70 weight percent, about 10 to about 60 weight percent, about 10 to about 50 weight percent, about 20 to about 95 weight percent, about 20 to about 90 weight percent, about 20 to about 80 weight percent, about 20 to about 70 weight percent, about 20 to about 60 weight percent, about 20 to about 50 weight percent, about 30 to about 95 weight percent, about 30 to about 90 weight percent, about 30 to about 80 weight percent, about 30 to about 70 weight percent, about 30 to about 60 weight percent, about 30 to about 50 weight percent, about 40 to about 95 weight percent, about 40 to about 90 weight percent, about 40 to about 80 weight percent, about 40 to about 70 weight percent, about 40 to about 60 weight percent, or about 40 to about 50 weight percent, based on the total weight of the polyol, the isocyanate, and the catalyst described above.

Examples of suitable organic solvents can include, but are not limited to, benzene, xylene, mineral spirits,

naphtha, toluene, acetone, methyl ethyl ketone, methyl n-amyl ketone, methyl isoamyl ketone, ethyl acetate, n-butyl acetate, isobutyl acetate, t-butyl acetate, n-propyl acetate, isopropyl acetate, ethyl acetate, methyl acetate, ethanol, n-propanol, isopropanol, n-butanol, sec-butanol, isobutanol, 2-butoxyethanol, ethyl-3-ethoxypropionate, ethylene glycol monobutyl ether, propylene glycol n-butyl ether, propylene glycol methyl ether, propylene glycol monopropyl ether, dipropylene glycol methyl ether, diethylene glycol monobutyl ether, cyclopentanone, cyclohexanone, ethylene glycol mono-octyl ether, diacetone alcohol, 2,2,4-trimethyl-1,3-pentanediol monoisobutyrate (available commercially from Eastman Chemical Co. under the trademark TEXANOL™), or combinations thereof. The coating composition also may comprise reactive solvents such as, for example, diallyl phthalate, SANTOLINK™ XI-100 polyglycidyl alyl ether (available from BASF), and others as described, for example, in U.S. Pat. Nos. 5,349,026 and 5,371,148. In some embodiments, one or more of the above alcohols can be used at relatively low levels, such as, for example, less than about 0.5 weight percent, less than about 0.1 weight percent, or less than about 0.05 weight percent, based on the total weight of the polyol, the isocyanate, and the catalyst described above.

When the coating composition is a waterborne coating composition, it may further include at least about 10, at least about 20, at least about 30, at least about 40 weight percent and/or not more than about 80, not more than about 70, not more than about 60, not more than about 50 weight percent of water, based on the total weight of the isocyanate, polyol, and zinc-containing catalyst. The amount of water in a waterborne coating composition can be in the range of from about 10 to about 80 weight percent, about 10 to about 70 weight percent, about 10 to about 60 weight percent, about 10 to about 50 weight percent, about 20 to about 80 weight percent, about 20 to about 70 weight percent, about 20 to about 60 weight percent, about 20 to about 50 weight percent, about 30 to about 80 weight percent, about 30 to about 70 weight percent, about 30 to about 60 weight percent, about 30 to about 50 weight percent, about 40 to about 80 weight percent, about 40 to about 70 weight percent, about 40 to about 60 weight percent, or about 40 to about 50 weight percent, based on the total weight of the polyol, the isocyanate, and the catalyst.

In some embodiments, when the coating composition is a waterborne composition, it may optionally include a co-solvent in an amount of at least about 5, at least about 10, at least about 15, at least about 20 weight percent and/or not more than about 50, not more than about 40, not more than about 35, not more than about 25, not more than about 20, not more than about 15 weight percent, based on the total amount of isocyanate, polyol, and zinc-containing catalyst. The co-solvent may be present in the coating composition in an amount in the range of from about 5 to about 50 weight percent, about 5 to about 40 weight percent, about 5 to about 35 weight percent, about 5 to about 25 weight percent, about 5 to about 20 weight percent, about 5 to about 15 weight percent, about 10 to about 50 weight percent, about 10 to about 40 weight percent, about 10 to about 35 weight percent, about 10 to about 25 weight percent, about 10 to about 20 weight percent, about 10 to about 15 weight percent, about 15 to about 50 weight percent, about 15 to about 40 weight percent, about 15 to about 35 weight percent, about 15 to about 25 weight percent, about 15 to about 20 weight percent, about 20 to about 50 weight percent, about 20 to about 40 weight percent, about 20 to about 35 weight percent, or about 20 to about 25 weight percent. Suitable co-solvents can include any of the organic solvents listed above, alone or in various combinations of two or more thereof.

When the coating composition is a powder coating composition, it may not include a solvent, but instead, may include at least one binder and/or at least one filler. In some embodiments, when the coating composition is a powder coating composition, it may include not more than about 15, not more than about 10, not more than about 5, not more than about 2, not more than about 1, or not more than about 0.5 weight percent of an organic solvent or water, based on the total weight of the isocyanate, the polyol, and the zinc-containing catalysts.

The reaction systems described herein further include at least one cross-linking agent, or cross-linker, in addition to the isocyanate and polyol components. Any suitable cross-linker can be selected depending on the properties of the reaction components and/or end use of the coating material. The reaction systems described herein include at least about 2, at least about 3, at least about 5, at least about 6, at least about 8, at least about 10, at least about 20, at least about 30, or at least about 40 weight percent and not more than about 60, not more than about 50, not more than about 40, not more than about 30 weight percent of one or more cross-linkers, based on the total weight of the polyurethane and cross-linker. The cross-linker is present in addition to the isocyanate, the polyol, and the zinc-containing catalyst.

The cross-linker is present in the coating composition in an amount in the range of from about 2 to about 60 weight percent, about 2 to about 50 weight percent, about 2 to about 40 weight percent, about 2 to about 30 weight percent, about 3 to about 60 weight percent, about 3 to about 50 weight percent, about 3 to about 40 weight percent, about 3 to about 30 weight percent, about 5 to about 60 weight percent, about 5 to about 50 weight percent, about 5 to about 40 weight percent, about 5 to about 30 weight percent, about 6 to about 60 weight percent, about 6 to about 50 weight percent, about 6 to about 40 weight percent, about 6 to about 30 weight percent, about 8 to about 60 weight percent, about 8 to about 50 weight percent, about 8 to about 40 weight percent, about 8 to about 30 weight percent, about 10 to about 60 weight percent, about 10 to about 50 weight percent, about 10 to about 40 weight percent, about 10 to about 30 weight percent, about 20 to about 60 weight percent, about 20 to about 50 weight percent, about 20 to about 40 weight percent, about 20 to about 30 weight percent, about 30 to about 60 weight percent, about 30 to about 50 weight percent, about 30 to about 40 weight percent, about 30 to about 30 weight percent, about 40 to about 60

weight percent, about 40 to about 50 weight percent, about 40 to about 40 weight percent, about 40 to about 30 weight percent, based on the total weight of the polyurethane and crosslinker.

In some embodiments, the cross-linker may be selected from the group consisting of an amino resin, a blocked isocyanate resin, a phenolic resin, melamine resin, an epoxy resin, an epoxidized phenolic resin, melamine-formaldehyde resin, phenol-formaldehyde, isocyanurates, and various combinations of one or more thereof. In some embodiments, the coating composition may be a powder coating composition and may include a cross-linker selected from the group consisting of an amino resin, a blocked isocyanate resin, a phenolic resin, an epoxy resin, an epoxidized phenolic resin, and combinations thereof. When the coating composition is a solvent-based composition, the cross-linker may be selected from the group consisting of an amino resin, a phenolic resin, an isocyanate resin, an epoxy resin, and combinations thereof, and when the coating composition is a waterborne coating composition, the cross-linker may be selected from the group consisting of an amino resin, a phenolic resin, an isocyanate resin, an epoxy resin, and combinations thereof.

Amino resin cross-linkers can include, for example, melamine-formaldehyde type agent having a plurality of --$N(CH_2OR^3)_2$ functional groups, wherein $R^3$ is a $C_1$ to $C_4$ alkyl group and, in some embodiments, a methyl group. Other cross-linking agents, such as modified melamine-formaldehyde type resins, including, for example, toluene sulfonamide modified melamine-formaldehyde resins, may also be used. Examples of suitable amino resin cross-linking agents can include, but are not limited to, hexamethoxymethylmelamine, tetramethoxymethylbenzoguanamine, tetramethoxy-methylurea, mixed butoxy/methoxy substituted melamines, and combinations thereof. In some embodiments, the cross-linking agent can be hexamethoxymethylmelamine. Alternatively, a toluene sulfonamide methylated melaminformaldehyde resin powder may be utilized as a crosslinking agent.

The cross-linking agent may also comprise a blocked or nonblocked isocyanate or an isocyanurate. Examples of suitables of isocyanates and isocyanurates include, but are not limited to, toluene diisocyanate, isocyanurates of toluene diisocyanate, diphenylmethane 4,4'-diisocyanate, isocyanurates of 4,4'-diisocyanate, methylenebis-4,4'-isocyanatocyclohexane, isophorone diisocyanate, isocyanurates of isophorone diisocyanate, the biuret of 1,6-hexamethylene diisocyanate, 1,6-hexamethylene diisocyanate, isocyanurates of 1,6-hexamethylene diisocyanate, 1,4-cyclohexane diisocyanate, p-phenylene diisocyanate, and triphenylmethane 4,4',4"-triisocyanate, tetramethyl xylene diisocyanate, metaxylene diisocyanate, polyisocyanates, 1,4-butylene diisocyanate, and methylene bis(4-cyclohexyl isocyanate), isophorone diisocyanate, and combinations thereof.

The cross-linking agent may comprise a phenolic resin. Examples of suitable phenolic resin cross-linking agents can include, for example, condensation products of phenols with aldehydes such as formaldehyde and acetaldehyde. Various phenols, such as phenol, cresol, p-alkylphenol, p-phenylphenol, and resorcinol, may be used. The phenolic resin may be a resole or a novolac type. Examples of suitable commercial phenolic resins include PHENODUR® PR 516/60B, PHENODUR® PR 371/70B, and PHENODUR® PR 612/80B (commercially available from Allnex), as well as those having a DUREZ ® a VARCUM® trade name (commercially available from Durex Corp.), and those having a Bakelite® trade name (commercially available from MOMENTIVE). In some embodiments, the cross-linking agent may also comprise an epoxidized phenolic resin, such as, for example, the reaction product of epichlorohydrin and phenol-formaldehyde novolac, such as D.E.N.- 431, -438, -439, or D.E.R. 354 (commercially available from the Dow Chemical Company).

Optionally, the coating composition can further comprise at least one cross-linking catalyst. Examples of crosslinking catalysts can include carboxylic acids, sulfonic acids, tertiary amines, tertiary phosphines, tin compounds, or combinations of these compounds. Some specific examples of crosslinking catalysts are one or more compounds chosen from p-toluenesulfonic acid, dodecylbenzene sulfonic acid, dinonylnaphthalene sulfonic acid, and dinonylnaphthalene disulfonic acid, benzoic acid, triphenylphosphine, dibutyltindilaurate, and dibutyltindiacetate. The specific crosslinking catalyst employed can depend on the type of crosslinker that is used in the coating composition. Some of these catalysts are available commercially under trademarks such as, for example, NACURE™ 155, 5076, 1051, and 5225 (available from King Industries), BYK-CATALYSTS™ (available from BYK-Chemie USA), and CYCAT™ catalysts (available from BASF).

In some embodiments, the coating compositions as described herein may include one or more additional additives. For example, the coating compositions described herein can include one or more additives selected from the group consisting of ultra violet (UV) absorbers, UV light stabilizers, dispersing agents, neutralizing agents, flatting agents, viscosity agents, suspension agents, flow control agents, pigments, wetting agents, leveling agents, pigment wetting and dispersing agents, blowing agents, defoaming agents, anti-settling agents, anti-sag and bodying agents, antiskinning agents, anti-flooding and anti-floating agents, fungicides, mildewicides, corrosion inhibitors, thickening agents, coalescing agents, surfactants, flow aides, and surfactants. In some embodiments, the coating composition may include at least one pigment.

Typically, one or more of the above additives may be present in the coating or paint composition in a relatively minor proportion, as compared to the other components. For example, in some embodiments, the coating composition may include one or more of the additives listed above in an amount of at least about 0.05, at least about 0.10, at least about 0.50, at least about 1 weight percent and/or not more than about 20, not more than about 10, not more than about

8, not more than about 5, not more than about 4, not more than about 3, not more than about 2 weight percent, based on the total weight of the composition.

One or more of the above-listed additives may be present in an amount in the range of from about 0.05 to 20 weight percent, about 0.05 to about 10 weight percent, about 0.05 to about 8 weight percent, about 0.05 to about 5 weight percent, about 0.05 to about 4 weight percent, about 0.05 to about 3 weight percent, about 0.05 to about 2 weight percent, about 0.10 to about 20 weight percent, about 0.10 to about 10 weight percent, about 0.10 to about 8 weight percent, about 0.10 to about 5 weight percent, about 0.10 to about 4 weight percent, about 0.10 to about 3 weight percent, about 0.10 to about 2 weight percent, about 0.50 to about 20 weight percent, about 0.50 to about 10 weight percent, about 0.50 to about 8 weight percent, about 0.50 to about 5 weight percent, about 0.50 to about 4 weight percent, about 0.50 to about 3 weight percent, about 0.50 to about 2 weight percent, about 1 to about 20 weight percent, about 1 to about 10 weight percent, about 1 to about 8 weight percent, about 1 to about 5 weight percent, about 1 to about 4 weight percent, about 1 to about 3 weight percent, about 1 to about 2 weight percent, based on the total weight of the composition.

In addition, in some embodiments, with or without other additives, pigments may be present in the coating composition in an amount of at least about 0.05, at least about 0.10, at least about 0.50, at least about 1 weight percent and/or not more than about 60, not more than about 40, not more than about 20, not more than about 10, not more than about 5, not more than about 2 weight percent, based on the total weight of the composition.

One or more pigments may be present in the coating composition in an amount in the range of from about 0.05 to about 60 weight percent, about 0.05 to about 40 weight percent, about 0.05 to about 20 weight percent, about 0.05 to about 10 weight percent, about 0.05 to about 5 weight percent, about 0.05 to about 2 weight percent, about 0.10 to about 60 weight percent, about 0.10 to about 40 weight percent, about 0.10 to about 20 weight percent, about 0.10 to about 10 weight percent, about 0.10 to about 5 weight percent, about 0.10 to about 2 weight percent, about 0.50 to about 60 weight percent, about 0.50 to about 40 weight percent, about 0.50 to about 20 weight percent, about 0.50 to about 10 weight percent, about 0.50 to about 5 weight percent, about 0.50 to about 2 weight percent, about 1 to about 60 weight percent, about 1 to about 40 weight percent, about 1 to about 20 weight percent, about 1 to about 10 weight percent, about 1 to about 5 weight percent, or about 1 to about 2 weight percent, based on the total weight of the composition.

Examples of UV absorbers and UV light stabilizers include substituted benzophenone, substituted benzotriazoles, substituted benzotriazines, hindered amines, and hindered benzoates, available from BASF as CYASORB® UV, and available from Ciba Specialty Chemicals as TINUVIN®; diethyl-3acetyl-4-hydroxy-benzyl-phosphonate, 4-dodecyloxy-2-hydroxy benzophenone, and resorcinol monobenzoate.

Examples of dispersing agents include, but are not limited to, sodium bis(tridecyl)sulfosuccinate, di(2-ethyl hexyl)sodium sulfosuccinate, sodium dihexyl-sulfosuccinate, sodium dicyclohexyl sulfosuccinate, diamyl sodium sulfosuccinate, sodium dusobutyl sulfosuccinate, disodium isodecyl sulfosuccinate, disodium ethoxylated alcohol half ester of sulfosuccinic acid, disodium alkyl amido polyethoxy sulfosuccinate, tetra-sodium N-(1,2-dicarboxyethyl)-N-octadecyl sulfosuccinamate, disodium N-octasulfosuccinamate, sulfated ethoxylated nonylphenol, , and combinations thereof.

Neutralizing agents may be amines or inorganic bases. Examples of suitable amines include, trimethylamine, triethylamine, ethyldimethyl amine, propyldimethyl amine and the like. Suitable inorganic bases include those derived from alkali metals and alkaline earth metals such as, for example, sodium, potassium, magnesium, calcium, and other basic metal compounds. Exemplary inorganic bases include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

Examples of flatting agents can include, but are not limited to, synthetic silica, available from the Davison Chemical Division of W. R. Grace & Company as SYLOID™; polypropylene, available from Hercules Inc., as HERCOFLAT™; and synthetic silicate, available from J. M. Huber Corporation, as ZEOLEX™.

Examples of viscosity, suspension, and flow control agents may include polyaminoamide phosphate, high molecular weight carboxylic acid salts of polyamine amides, and alkylene amine salts of an unsaturated fatty acid, all commercially available from BYK Chemie USA as ANTI TERRA™. Further examples include, but are not limited to, polysiloxane copolymers, polyacrylate solution, cellulose esters, polyamide wax, polyolefin wax, and the like.

Several proprietary antifoaming agents are commercially available and include, but are not limited to, BUBREAK™, available from Buckman Laboratories Inc., BYK™, available from BYK Chemie, U.S.A., FOAMASTER™ and NOPCO™, available from Henkel Corporation Coating Chemicals, DREWPLUS™, available from the Drew Industrial Division of Ashland Chemical Company, TROYSOL™ and TROYKYD™, available from Troy Chemical Corporation, and SAG™, available from Union Carbide Corporation.

Examples of leveling agents include polyvinyl acrylate, polybutyl acrylate, and combinations thereof, as well as leveling agents based on polysilicones. Suitable color pigments can include titanium dioxide, iron oxides, and the like, as well as color stabilizers, such as trialkyl and triaryl phosphites, optionally including inert substituents such as

triethyl phosphite, triphenyl phosphite and trisnonylphenyl phosphite, in order to prevent yellowing.

The coating compositions described herein may be two part coating compositions that can be applied to a substrate according to any suitable means. Several types of substrates may be coated including, for example, paper, polymer films such as polyethylene or polypropylene, wood, metals such as aluminum, steel or galvanized steel, glass, urethane elastomers, primed (painted) substrates, and the like.

In some embodiments, the coating compositions may be spray compositions, applied to the surface of a substrate using a suitable spray applicator. In some embodiments, the substrate to be coated can be dipped into the coating compositions, while, in other embodiments, the coating composition may be wiped, rolled, or brushed onto all or a portion of the substrate. Other suitable methods for applying the coating composition to a substrate include, but are not limited to, draw down, roll-coating, and other methods including those described in U.S. Patent Nos. 4,737,551 and 4,698,391 and 3,345,313, and 4,423,166.

According to some embodiments, the polyurethane formed from the reaction systems described herein may be a thermoset polyurethane used in a reaction injection molding (RIM) application. When used in RIM, the polyol-containing part of the reaction system and the isocyanate-containing part of the reaction system may be injected, individually or in combination, into an injection molding apparatus, whereupon the curing reaction takes place within the mold as the polyurethane-containing article is formed.

The following examples are given to illustrate the invention and to enable any person skilled in the art to make and use the invention. It should be understood, however, that the invention is not to be limited to the specific conditions or details described in these examples. The patentable scope of the invention is defined by the claims, and may include other examples that occur to those skilled in the art.

## EXAMPLES

### Example 1

Several polyester polyols were formed using various amounts of 2,2,4,4-tetramethylcyclobutanediol (TMCD), neopentyl glycol (NPG), trimethylolpropane (TMP), and hexahydrophthalic anhydride (HHPA), and several properties, including theoretical functionality, hydroxyl number, and the weight ratio of primary hydroxyl groups to secondary hydroxyl groups, were determined for each, according to the methods described previously. Table 3, below, summarizes the composition of each polyol, along with the results of the analyses.

**Table 3: Properties and Compositions of Polyols**

| Polyol | Theoretical Functionality | Ratio of Primary to Secondary OH Groups | Hydroxyl No. | Molar Percent in Polyol | | | |
|---|---|---|---|---|---|---|---|
| | | | | *TMCD* | *NPG* | *TMP* | *HHPA* |
| P-1 | 2.75 | 96:4 | 166 | 0 | 43 | 13 | 44 |
| P-2 | 2.25 | 78:22 | 152 | 26 | 25 | 7 | 42 |
| P-3 | 2.75 | 57:43 | 150 | 21 | 21 | 14 | 44 |

### Example 2

A polyol-containing master batch, Master Batch A (MB-A), and an isocyanate-containing master batch, Master Batch B (MB-B), were formulated by blending the components in the amounts shown in Table 4, below. The NCO:OH ratio for the resulting reaction system was 0.96.

**Table 4: Master Batch and Solvent Compositions**

| Master Batch A | | |
|---|---|---|
| **Component** | **Parts by Weight** | **Weight Percent** |
| Polyol P-2 | 126.76 | 95.0% |
| UV Additive[1] | 2.6 | 1.9% |
| Hindered-Amine Light Stabilizer[2] | 2.6 | 1.9% |
| Flow Additive[3] | 1.5 | 1.1% |
| **Total MB-A** | 133.46 | 100.0% |

(continued)

| Master Batch B | | |
|---|---|---|
| **Component** | **Parts by Weight** | **Weight Percent** |
| isocyanurate of hexamethylene diisocyanate | 47.83 | 100.0% |
| **Total MB-B** | 47.83 | 100.0% |
| **Solvent** | | |
| **Component** | **Parts by Weight** | **Weight Percent** |
| Ethylbutyl acetate | 14.68 | 21.6% |
| N-butyl acetate | 19.75 | 29.1% |
| Methyl n-amyl ketone | 33.43 | 49.3% |
| **Total Solvent** | 67.86 | 100.0% |

Notes:
1. TINUVIN® 1130, commercially available from BASF.
2. TINUVIN® 292, commercially available from BASF.
3. Tolonate™ HDT-LV, commercially available from Vencorex.

Several coating compositions were formulated by combining 201.1 grams of Master Batch A with one of the catalysts listed in Table 5, below, under agitation. The amount of catalyst used in each coating composition is summarized in Table 6. Then, 47.8 grams of Master Batch B was added, and the resulting combination was allowed to stir until the consistency of the mixture was uniform. Each of the resulting coating compositions were applied to an electro-coated steel test panel, with the total time between mixing and application being limited to less than 30 minutes. Each coating composition was adjusted to a total resin solids content, measured according to ASTM D-2369, of 50.5 weight percent by adding the appropriate amount of solvent blend, and the coatings were applied to each test panel using a 4-mil drawdown bar.

**Table 5: Summary of Polyurethane Catalysts Tested**

| Catalyst | Catalyst Type |
|---|---|
| A | dibutyl tin dilaurate diluted in n-butyl aldehyde (1% W/W)[1] |
| B | tertiary amine catalyst[2] |
| C | 1,4-diazabicyclo[2.2.2]octane[3] |
| D | zinc deodecanoate-based catalyst[4] |
| E | zircoinum chelate[5] |
| F | bismith neodecanoate-based catalyst[6] |
| G | calcium/zinc hexanoate-based catalyst[7] |
| 1 | zinc 2-ethylhexanoate/1-methyimidazole[8] |

Notes:
1. Commercially available from Air Products & Chemicals, Inc. as DABCO® T-12.
2. Commercially available from BASF as Desmorapid™ PP.
3. Commercially available from Air Products & Chemicals, Inc. as DABCO® 33 LV.
4. Commercially available from Borchers-OMG as Borchi Kat® 15.
5. Commercially available from King Industries as K-Kat ® 4205.
6. Commercially available from Borchers-OMG as Borchi Kat® 315.
7. Commercially available from Borchers-OMG as Borchi Kat® 245.
8. Commercially available from King Industries as K-Kat® XK635.

**Table 6: Textile and Cotton Free Times for Several Coating Formulations**

| Coating | Composition | | Catalyst | | | Performance | |
|---|---|---|---|---|---|---|---|
| | MB-A (g) | MB-B (g) | Type | Amount (g) | % Active Catalyst on Total Solids | Textile Test (at 55°C for 30 min) | Cotton Free Time (s) |
| C-1 | 201.1 | 47.8 | B | 0.60 | 0.400 | 1 | 283 |
| C-2 | 201.1 | 47.8 | C | 0.50 | 0.030 | 2 | 371 |
| C-3 | 201.1 | 47.8 | D | 0.05 | 0.030 | 1 | 380 |
| C-4 | 201.1 | 47.8 | E | 2.00 | 1.340 | 1 | 362 |
| C-5 | 201.1 | 47.8 | F | 0.04 | 2.680 | 2 | 349 |
| C-6 | 201.1 | 47.8 | G | 0.30 | 0.200 | 0 | 358 |
| C-7 | 201.1 | 47.8 | A | 3.64 | 0.024 | 2 | > 200 |
| C-8 | 201.1 | 47.8 | 1 | 0.71 | 0.480 | 7 | 184 |
| C-9 | 201.1 | 47.8 | 1 | 1.40 | 0.938 | 7 | 75 |

The performance of the coating compositions after exposure to a thermal cure and a room-temperature cure were then tested as follows. One set of test panels was created, as described above, for each of the coating compositions shown in Table 6. Each panel was then subjected to the textile test to evaluate the hardness of the film after exposure to a thermal cure. After the test panel was coated with each of the compositions shown in Table 6, the panel was placed in a 55°C oven for 30 minutes. Immediately after removal from the oven, a 1-inch by 1-inch square of cheese cloth was placed on the warm, coated surface and a 450-gram weight was placed on top of the cheese cloth. After 5 minutes, the weight and cheese cloth were removed, and a visual review of the resulting surface was performed. The reviewer visually analyzed the surface that had been covered by the cheese cloth and rated each sample on a scale of 0 to 10, with 10 indicating that the cheesecloth left no visual effect on the coated surface and 0 indicating deep imprints of the cheese cloth with portions of the substrate surface were visible.

The results of the textile test, performed after a thermal cure at 55°C for 30 minutes for each of coating compositions C-1 through C-9 are summarized in Table 6, above.

Another set of test panels was created, as described above, for each of the coating compositions shown in Table 6. Each panel was then subjected to the cotton free test to evaluate the hardness of the film after exposure to a room temperature cure. After coating each panel, a cotton ball was placed onto the coated surface for 10 seconds, and the panel was then inverted. When the cotton ball dropped freely from the painted surface without leaving any residual cotton, the painted surface was deemed "cotton free." The time between the inversion of the panel and when the cotton ball dropped from the surface was recorded as the "cotton free" time. The results of the cotton free text for each of coating compositions C-1 through C-9 are also provided in Table 6, above. The results of the textile test and the cotton free test for coating compositions C1 through C-6 and C-8 are also shown graphically in FIGS. 1 and 2, respectively, while FIGS. 3 and 4 present a graphical comparison of the results of the textile text and cotton free text for coating compositions C-7 through C-9.

As shown in Table 6, above, coating compositions C-8 and C-9, which both utilized a zinc 2-ethylhexanoate/1-methylimidazole catalyst exhibited both a better hardness after thermal cure at 55°C for 30 minutes (*i.e.,* a higher textile rating) and a better air cure time (i.e., a shorter cotton free time) than coating compositions formed from reaction systems employing other catalysts, including dibutyl tin dilaurate.

**Example 3**

Several coating compositions were formed by combining a polyester polyol, a catalyst, and a solvent, of the types and in the amounts shown in Table 7 below, with an isocyanate. Two of the coating compositions, C-10 and C-12, utilized the polyester polyol P-1 shown in Table 3, above, and two of the compositions, C-11 and C-13, utilized polyester polyol P-3 shown in Table 3 above. Two of the compositions, C-10 and C-11, included 0.025 weight percent, based on the total resin solids, of a conventional dibutyl tin dilaurate catalyst (commercially available from Air Products & Chemicals as DABCO® T-12), and two of the compositions, C-12 and C-13, included 0.5 weight percent, based on the total weight of resin solids, of a zinc 2-ethylhexanoate/1-methylimidazole catalyst (commercially available as K-Kat® XK635 from King Industries, Inc.). A control composition was also formulated using a polyester polyol Setalux® 1603 (commercially available from Nuplex) and the dibutyl tin dilaurate catalyst (commercially available from Air Products & Chemicals as DABCO® T-12). All compositions utilized n-butyl acetate as the solvent and the polyisocyanate Tolonate™ HDT-LV (commercially available from Vencorex). Each of the coating compositions were combined and mixed in a similar manner as described above in Example 2. The NCO:OH ratio of the each of resulting compositions was 1.1:1

and each composition had a total resin solids content of 60 weight percent, measured according to ASTM D-2369.

**Table 7: Coating Formulations with Polyester Polyols**

| Coating | Part A | | | | | | Part B | |
|---|---|---|---|---|---|---|---|---|
| | Polyol | | Catalyst | | Solvent | Total Part A (g) | Polyisocyanate Amount (g) | Total Part B (g) |
| | *Type* | *Amount (g)* | *Type* | *Amount (g)* | *Amount (g)* | | | |
| C-10 | P-1 | 2.2385 | A | 0.0670 | 1.1593 | 3.4648 | 1.000 | 1.000 |
| C-11 | P-3 | 2.4772 | A | 0.0715 | 1.2146 | 3.7633 | 1.000 | 1.000 |
| C-12 | P-1 | 2.2385 | 1 | 0.1346 | 1.0935 | 3.4665 | 1.000 | 1.000 |
| C-13 | P-3 | 2.4772 | 1 | 0.1436 | 1.1443 | 3.7651 | 1.000 | 1.000 |
| C-14 | Control | 2.0835 | A | 0.0258 | 1.1299 | 3.3058 | 1.000 | 1.000 |

The cure rate for each of the coating compositions shown in Table 7 above was measured according to the following method. A Cary 680 FTIR instrument (commercially available from Agilent) equipped with a Smart Orbit ATR having diamond crystal and heat stage, was used to monitor the progress of the isocyanate-polyol reaction upon combination of Part A and Part B for each composition shown in Table 7, above. The reaction of the isocyanate group (NCO) with the hydroxyl group (OH) of the polyol was monitored by tracking the reduction in the NCO stretching peak at 2270 $cm^{-1}$, and the formation of the resulting urethane linkage was reflected in the growth of a urethane (N-H) stretching peak at 3385 $cm^{-1}$. The FTIR spectrum of the control sample, which is shown in FIG. 5, was measured at 60°C. The FTIR spectra of coating compositions C-10 through C-13 were measured at 55°C.

Based on second order kinetics, the cure rate of the system was measured by monitoring the reduction of the NCO peak as a function of time and, in particular, through calculation of the slope of a linear plot of the reciprocal of the normalized isocyanate peak area as a function of cure time. The time-dependent NCO peak area was normalized by dividing by the area of the C-H stretching peaks (at 2780 to 3050 cm-1), which were internal reference peaks. Examples of the FTIR spectrum measured at 60°C and the plot of the reciprocal of the normalized isocyanate peak area as a function of curing time at both 50°C and 60°C for the control formulation, C-14, are shown in FIGS. 5 and 6, respectively. FIG. 8 illustrates the cure rates, measured at 55°C, for each of coating compositions C-10 through C-13 shown in Table 7, above.

The gelation time, or "gel" time, of each composition C-10 through C-14 was also measured. Gel time was identified as the sweep time cross over point of storage shear modulus (G') and loss shear modulus (G"). Dynamic rheometry used for this procedure was performed on an AR 2000 rheometer (available from TA Instruments) with a 40 mm alumina fixture and 60 $\mu$m gap at 25 rad/s angular frequency. For each coating, the formulation was free-dropped on the heat stage and preheated to 55°C (for coating compositions C-10 through C-13) or 60°C (for coating composition C-14) for 6.5 minutes prior to closing the plates to the 60 $\mu$m gap. The gel time was determined by the time at which the G' curve intersected the G" curve, plus the total preheat time. For example, as shown on FIG. 7, which provides the graph of the storage shear modulus (G') and loss shear modulus (G") for the comparative coating composition C-14, the G' curve crossed the G" curve at a time of 47.8 minutes. Thus, the gel time for the control sample in FIG. 7 was 47.8 minutes plus the 6.5 minute preheat, for a total time of 54.3 min, measured at 60°C. The gel times for each of coating compositions C-10 through C-13, measured at 55°C, are shown in FIG. 9.

As shown in FIGS. 8 and 9, use of the zinc 2-ethylhexanoate/1-methylimidazole catalyst results in a 75 percent improvement in cure rate at 55°C for the system that included polyol P-3 (i.e., coating composition C-13), as compared to the system that employed the zinc 2-ethylhexanoate/1-methylimidazole catalyst but included polyol P-1 (i.e., coating composition C-12). As shown in Table 3, 43 weight percent of the hydroxyl groups in polyol P-3 are secondary hydroxyl groups, while only 4 weight percent of the hydroxyl groups in polyol P-1 are secondary hydroxyl groups. Thus, it can be concluded that the zinc 2-ethylhexanoate/1-methylimidazole catalyst is more effective at catalyzing the reaction of an isocyanate and a polyol having secondary hydroxyl groups than it is at catalyzing the reaction of an isocyanate and polyol having primary secondary hydroxyl groups. Further, as shown in Table 3, polyol P-3 includes residues of an alcohol, TMCD, that includes hindered secondary hydroxyl groups, while none of the alcohols used to formulate polyol P-1 include hindered secondary hydroxyl groups.

**Example 4**

The reaction kinetics of isocyanates with various types of hydroxyl groups were tested by reacting several different alcohols with cyclohexyl isocyanate and monitoring the rate of reaction using a ReactIR ic15 equipped with a

fiberoptic cable and a diamond tipped probe (commercially available from Mettler-Toledo). The reactions were performed in a 25 mm x 250 mm test tube equipped with a magnetic stirrer and a nitrogen purge and situated in an oil bath for controlling the temperature. For each reaction, the flask was charged with 5 mmol of the alcohol, 2.5 mL of the solvent DMF, and the type of catalyst shown in Table 8, below. For each reaction, the catalyst loading was 0.15 weight percent active catalyst metal, based on the total weight of solids. The reactor was purged with nitrogen and heated to 60°C with the contents of the reactor under agitation. An *in situ* FTIR probe was inserted into the reactor and into the solution. Then 5 mmol (0.626 grams) of cyclohexyl isocyanate was added to the reactor, and the reactor was covered to prevent solvent evaporation. The reaction was allowed to proceed for 2 hours, over which time the FTIR probe recorded data.

Upon collection of the FTIR data, a plot of the normalized concentration of NCO as a function of time was prepared. The initial slope of the curve was used to compare the relative rate of reaction of each system, with lower slopes indicating slower reactions. Four different reactions were performed using the alcohols listed in Table 8 below. The type of catalyst used was either a zinc 2-ethylhexanoate/1-methylimidazole catalyst (commercially available from King Industries, Inc. as K-KAT® XK635) or a dibutyl tin dilaurate catalyst (commercially available from Air Products & Chemicals as DABCO® T-12). The graphical depiction of the normalized concentration of NCO as a function of time are shown in FIG. 10, and the initial slopes of each of the curves shown in FIG. 10 are summarized in Table 8, below.

**Table 8: Reaction rates of Various Primary and Secondary Alcohols with Cyclohexyl isocyanate**

| Reaction | Alcohol | Isocyanate | Alcohol structure | Cataly st metal | Rate Constant, k ($s^{-1}$)[3] |
|---|---|---|---|---|---|
| Reaction 1 | 3-hydroxy-2,2,4,4-tetramethyl cyclobutanone | Cyclohexyl isocyanate | Secondar y, hindered | Zn[1] | $3.9 \times 10^{-4}$ |
| Reaction 2 | Neopentyl alcohol | Cyclohexyl isocyanate | Primary | Zn[1] | $7.1 \times 10^{-5}$ |
| Reaction 3 | Cyclohexanol | Cyclohexyl isocyanate | Secondary, unhindere d | Zn[1] | $1.0 \times 10^{-4}$ |
| Reaction 4 | 3-hydroxy-2,2,4,4-tetramethyl cyclobutanone | Cyclohexyl isocyanate | Secondar y, hindered | Sn[1] | $6.3 \times 10^{-5}$ |

Notes:
1. Commercially available from King Industries as K-Kat® XK635.
2. Commercially available from Air Products & Chemicals as DABCO® T-12.
3. Determined using the method of initial rates.

As shown by comparing Reactions 1 through 4 in Table 8 above and in FIG. 10, the zinc 2-ethylhexanoate/1-methylimidazole catalyst is more effective for catalyzing reactions between cyclohexyl isocyanate and 3-hydroxy-2,2,4,4-tetramethylcyclobutanone, which includes hindered secondary hydroxyl groups, than between cyclohexyl isocyanate and neopentyl alcohol, which includes primary hydroxyl groups, and between cyclohexyl isocyanate and cyclohexanol, which includes unhindered secondary hydroxyl groups.

It will further be understood that any of the ranges, values, or characteristics given for any single component of the present disclosure can be used interchangeably with any ranges, values or characteristics given for any of the other components of the disclosure, where compatible, to form an embodiment having defined values for each of the components, as given herein throughout. For example, an interlayer can be formed comprising poly(vinyl butyral) having a residual hydroxyl content in any of the ranges given in addition to comprising a plasticizers in any of the ranges given to form many permutations that are within the scope of the present disclosure, but that would be cumbersome to list. Further, ranges provided for a genus or a category, such as phthalates or benzoates, can also be applied to species within the genus or members of the category, such as dioctyl terephthalate, unless otherwise noted.

**Claims**

**1.** A reaction system for forming a urethane and/or polyurethane, said reaction system comprising:

(a) at least one of a monomeric polyol having a secondary hydroxyl group wherein said monomeric polyol is defined by the following formula (1):

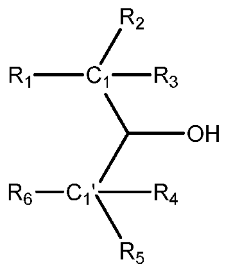

(1)

,

wherein at least three of $R_1$ through $R_6$ are not hydrogen and wherein at least one of $R_1$ through $R_6$ comprises a hydroxyl group or a hydroxyl-substituted hydrocarbon group,
wherein when not hydrogen the groups $R_1$ through $R_6$ may each independently be an alkyl or aryl group,
wherein further compound of formula (1) may itself be cyclic, such that at least one of the groups $R_1$ through $R_3$ and at least one of the groups $R_4$ through $R_6$ are part of the same substituent, separated from each another by at least one additional carbon atom,
and a polymeric polyol comprising residues of said monomeric polyol;

(b) an isocyanate; and
(c) a zinc-containing catalyst, wherein said zinc-containing catalyst comprises at least one imidazole ligand and at least one carboxylate ligand.

2. The system of claim 1, wherein component (a) comprises said polymeric polyol, wherein said polymeric polyol comprises a plurality of primary hydroxyl groups and a plurality of secondary hydroxyl groups, wherein at least 5 weight percent of the total amount of said primary hydroxyl groups and said secondary hydroxyl groups of said polymeric polyol are secondary hydroxyl groups.

3. The system of claim 2, wherein said polymeric polyol is a polyester polyol and wherein said polyester polyol comprises about 5 to about 65 weight percent of said residues of said monomeric polyol.

4. The system of claim 3, wherein at least 15 weight percent of the total amount of said primary hydroxyl groups and said secondary hydroxyl groups of said polymeric polyol are secondary hydroxyl groups, wherein said isocyanate is an aliphatic isocyanate.

5. The system of claim 1, wherein in said monomeric polyol at least four of $R_1$ through $R_6$ are not hydrogen and wherein at least one of $R_1$ through $R_6$ comprises a hydroxyl group or a hydroxyl-substituted hydrocarbon group.

6. The system of claim 1, wherein said monomeric polyol is selected from the group consisting of 2,2,4,4-tetramethyl-1,3-cyclobutanediol, 2,2,4-trimethyl-1,3-pentanediol, 2,4-diethyl-1,5-pentanediol, 2-butyl-2-ethyl-1,3-propanediol, and combinations thereof.

7. The system of claim 1, wherein component (a) comprises said polymeric polyol and wherein said polymeric polyol has an acid number in the range of from 1 to 20 mg KOH/g.

8. The system of claim 1, wherein component (a) comprises said polymeric polyol and wherein said polymeric polyol has a hydroxyl number of less than 40 mg KOH/g.

9. The system of claim 1, wherein component (a) comprises said polymeric polyol and wherein said polymeric polyol has a hydroxyl number of at least 60 mg KOH/g.

10. The system of claim 1, wherein component (a) comprises said polymeric polyol and wherein said polymeric polyol has a number average molecular weight ($M_n$) of less than 10,000 Daltons.

11. The reaction system of claim 1 wherein, when combined and cured at a temperature of 55°C, components (a) through (c) react at a cure rate of at least 0.045 $min^{-1}$.

12. The system of claim 1, wherein said components (a) and (b) are present in said reaction system in amounts sufficient to provide an NCO:OH molar ratio of about 0.5:1 to about 2:1.

**Patentansprüche**

1. Reaktionssystem zur Bildung eines Urethans und/oder Polyurethans, wobei das Reaktionssystem aufweist:

(a) mindestens ein monomeres Polyol mit einer sekundären Hydroxylgruppe, wobei das monomere Polyol durch die folgende Formel (1) definiert ist:

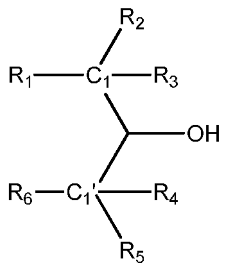

(1)

,

wobei mindestens drei von $R_1$ bis $R_6$ nicht Wasserstoff sind und wobei mindestens einer von $R_1$ bis $R_6$ eine Hydroxylgruppe oder eine Hydroxyl-substituierte Kohlenwasserstoffgruppe umfasst,
wobei die Gruppen $R_1$ bis $R_6$, wenn sie nicht Wasserstoff sind, jeweils unabhängig voneinander eine Alkyl- oder Arylgruppe sein können,
wobei eine weitere Verbindung der Formel (1) selbst cyclisch sein kann, so dass mindestens eine der Gruppen $R_1$ bis $R_3$ und mindestens eine der Gruppen $R_4$ bis $R_6$ Teil desselben Substituenten sind, die durch mindestens ein zusätzliches Kohlenstoffatom voneinander getrennt sind,
und ein polymeres Polyol, das Reste des genannten monomeren Polyols enthält;

(b) ein Isocyanat und
(c) einen zinkhaltigen Katalysator, wobei der zinkhaltige Katalysator mindestens einen Imidazol-Liganden und mindestens einen Carboxylat-Liganden umfasst.

2. System nach Anspruch 1, wobei Komponente (a) das polymere Polyol umfasst, wobei das polymere Polyol eine Vielzahl von primären Hydroxylgruppen und eine Vielzahl von sekundären Hydroxylgruppen umfasst, wobei mindestens 5 Gewichtsprozent der Gesamtmenge der primären Hydroxylgruppen und der sekundären Hydroxylgruppen des polymeren Polyols sekundäre Hydroxylgruppen sind.

3. System nach Anspruch 2, wobei das polymere Polyol ein Polyesterpolyol ist und wobei das Polyesterpolyol etwa 5 bis etwa 65 Gewichtsprozent der Reste des monomeren Polyols umfasst.

4. System nach Anspruch 3, wobei mindestens 15 Gewichtsprozent der Gesamtmenge der primären Hydroxylgruppen und der sekundären Hydroxylgruppen des polymeren Polyols sekundäre Hydroxylgruppen sind, wobei das Isocyanat ein aliphatisches Isocyanat ist.

5. System nach Anspruch 1, wobei in dem monomeren Polyol mindestens vier von $R_1$ bis $R_6$ nicht Wasserstoff sind und wobei mindestens einer von $R_1$ bis $R_6$ eine Hydroxylgruppe oder eine Hydroxyl-substituierte Kohlenwasserstoffgruppe umfasst.

6. System nach Anspruch 1, wobei das monomere Polyol ausgewählt ist aus der Gruppe bestehend aus 2,2,4,4-Tetramethyl-1,3-cyclobutandiol, 2,2,4-Trimethyl-1,3-pentandiol, 2,4-Diethyl-1,5-pentandiol, 2-Butyl-2-ethyl-1,3-propandiol und Kombinationen davon.

7. System nach Anspruch 1, wobei Komponente (a) das polymere Polyol umfasst und wobei das polymere Polyol eine Säurezahl im Bereich von 1 bis 20 mg KOH/g aufweist.

8. System nach Anspruch 1, wobei Komponente (a) das polymere Polyol umfasst und wobei das polymere Polyol eine Hydroxylzahl von weniger als 40 mg KOH/g aufweist.

9. System nach Anspruch 1, wobei Komponente (a) das polymere Polyol umfasst und wobei das polymere Polyol eine Hydroxylzahl von weniger als 60 mg KOH/g aufweist.

**10.** System nach Anspruch 1, wobei Komponente (a) das polymere Polyol umfasst und wobei das polymere Polyol ein zahlenmittleres Molekulargewicht ($M_n$) von weniger als 10.000 Dalton aufweist.

**11.** Reaktionssystem nach Anspruch 1, wobei die Komponenten (a) bis (c), wenn sie kombiniert und bei einer Temperatur von 55°C gehärtet werden, mit einer Härtungsgeschwindigkeit von mindestens 0,045 $min^{-1}$ reagieren.

**12.** System nach Anspruch 1, wobei die Komponenten (a) und (b) in dem Reaktionssystem in ausreichenden Mengen vorhanden sind, um ein NCO:OH-Molverhältnis von etwa 0,5:1 bis etwa 2:1 bereitzustellen.

## Revendications

**1.** Système réactionnel visant à former un uréthane et/ou un polyuréthane, ledit système réactionnel comprenant :

(a) au moins un polyol monomère ayant un groupe hydroxyle secondaire dans lequel ledit polyol monomère est défini par la formule suivante (1) :

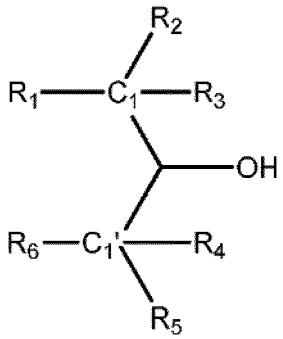

(1)

,

dans lequel au moins trois des $R_1$ à $R_6$ ne sont pas de l'hydrogène et dans lequel au moins un des $R_1$ à $R_6$ comprend un groupe hydroxyle ou un groupe hydrocarbure substitué par un hydroxyle,
dans lequel lorsque les groupes $R_1$ à $R_6$ ne sont pas de l'hydrogène, ils peuvent être chacun indépendamment un groupe alkyle ou aryle,
dans lequel un autre composé de formule (1) peut lui-même être cyclique, de telle sorte qu'au moins un des groupes $R_1$ à $R_3$ et au moins un des groupes $R_4$ à $R_6$ font partie du même substituant, séparés l'un de l'autre par au moins un atome de carbone supplémentaire,
et un polyol polymère comprenant des résidus dudit polyol monomère ;

(b) un isocyanate ; et
(c) un catalyseur contenant du zinc, dans lequel ledit catalyseur contenant du zinc comprend au moins un ligand imidazole et au moins un ligand carboxylate.

**2.** Système selon la revendication 1, dans lequel le composant (a) comprend ledit polyol polymère, dans lequel ledit polyol polymère comprend une pluralité de groupes hydroxyles primaires et une pluralité de groupes hydroxyles secondaires, dans lequel au moins 5 pour cent en poids de la quantité totale desdits groupes hydroxyles primaires et desdits groupes hydroxyles secondaires dudit polyol polymère sont des groupes hydroxyles secondaires.

**3.** Système selon la revendication 2, dans lequel ledit polyol polymère est un polyester polyol et dans lequel ledit polyester polyol comprend environ 5 à environ 65 pour cent en poids desdits résidus dudit polyol monomère.

**4.** Système selon la revendication 3, dans lequel au moins 15 pour cent en poids de la quantité totale desdits groupes hydroxyles primaires et desdits groupes hydroxyles secondaires dudit polyol polymère sont des groupes hydroxyles secondaires, dans lequel ledit isocyanate est un isocyanate aliphatique.

**5.** Système selon la revendication 1, dans lequel dans ledit polyol monomère au moins quatre des $R_1$ à $R_6$ ne sont pas de l'hydrogène et dans lequel au moins un des $R_1$ à $R_6$ comprend un groupe hydroxyle ou un groupe hydrocarbure substitué par un hydroxyle.

6. Système selon la revendication 1, dans lequel ledit polyol monomère est choisi parmi le groupe constitué de 2,2,4,4-tétraméthyl-1,3-cyclobutanediol, 2,2,4-triméthyl-1,3-pentanediol, 2,4-diéthyl-1,5-pentanediol, 2-butyl-2-éthyl-1,3-propanediol et combinaisons de ceux-ci.

7. Système selon la revendication 1, dans lequel le composant (a) comprend ledit polyol polymère et dans lequel ledit polyol polymère a un indice d'acide compris entre 1 et 20 mg KOH/g.

8. Système selon la revendication 1, dans lequel le composant (a) comprend ledit polyol polymère et dans lequel ledit polyol polymère a un indice d'hydroxyle inférieur à 40 mg KOH/g.

9. Système selon la revendication 1, dans lequel le composant (a) comprend ledit polyol polymère et dans lequel ledit polyol polymère a un indice d'hydroxyle d'au moins 60 mg KOH/g.

10. Système selon la revendication 1, dans lequel le composant (a) comprend ledit polyol polymère et dans lequel ledit polyol polymère a un poids moléculaire moyen en nombre ($M_n$) inférieur à 10 000 Daltons.

11. Système réactionnel selon la revendication 1 dans lequel, lorsque combinés et polymérisés à une température de 55 °C, les composants (a) à (c) réagissent à une vitesse de polymérisation d'au moins 0,045 $min^{-1}$.

12. Système selon la revendication 1, dans lequel lesdits composants (a) et (b) sont présents dans ledit système réactionnel dans des quantités suffisantes pour fournir un rapport molaire NCO : OH d'environ 0,5 : 1 à environ 2 : 1.

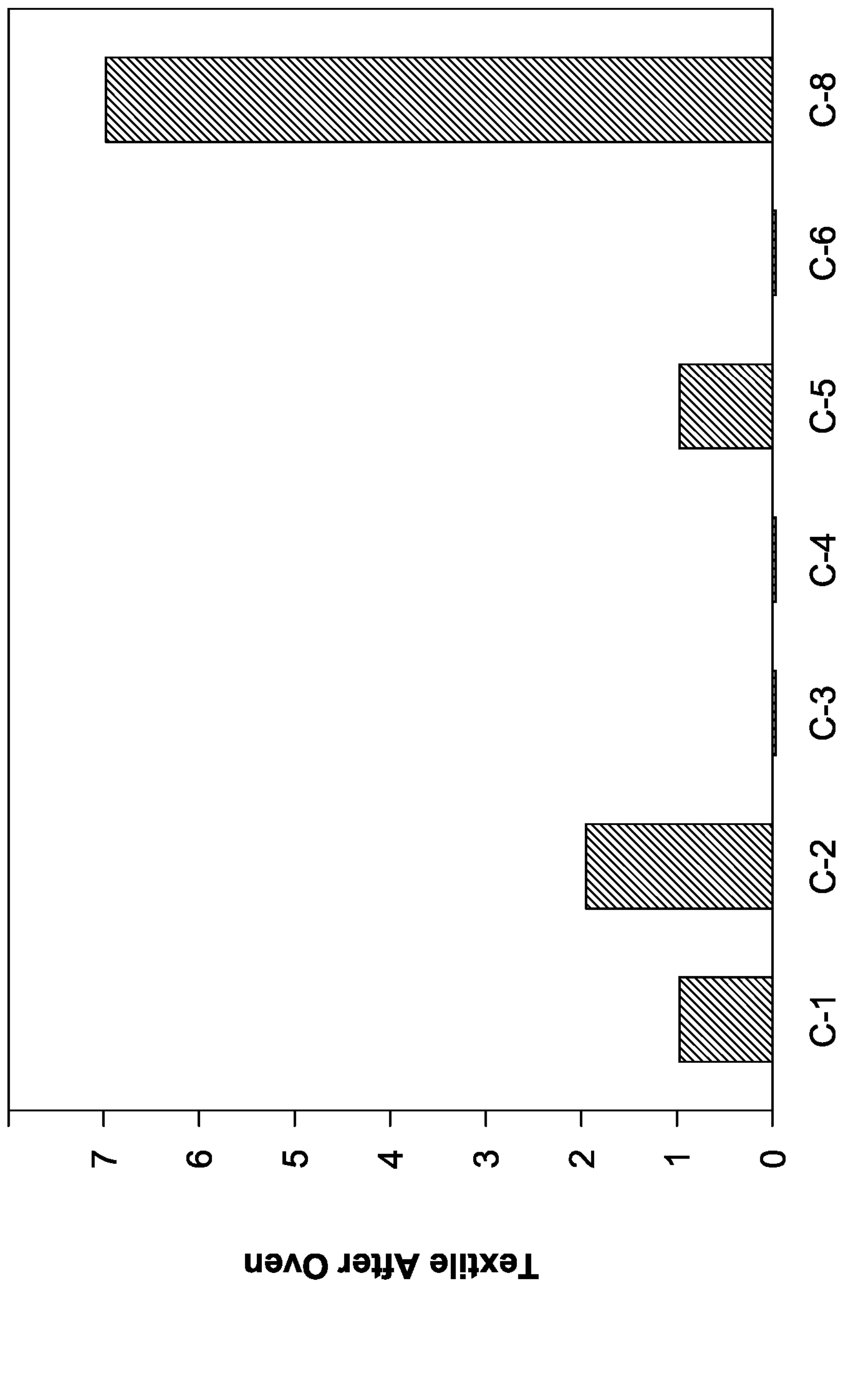


FIG. 1

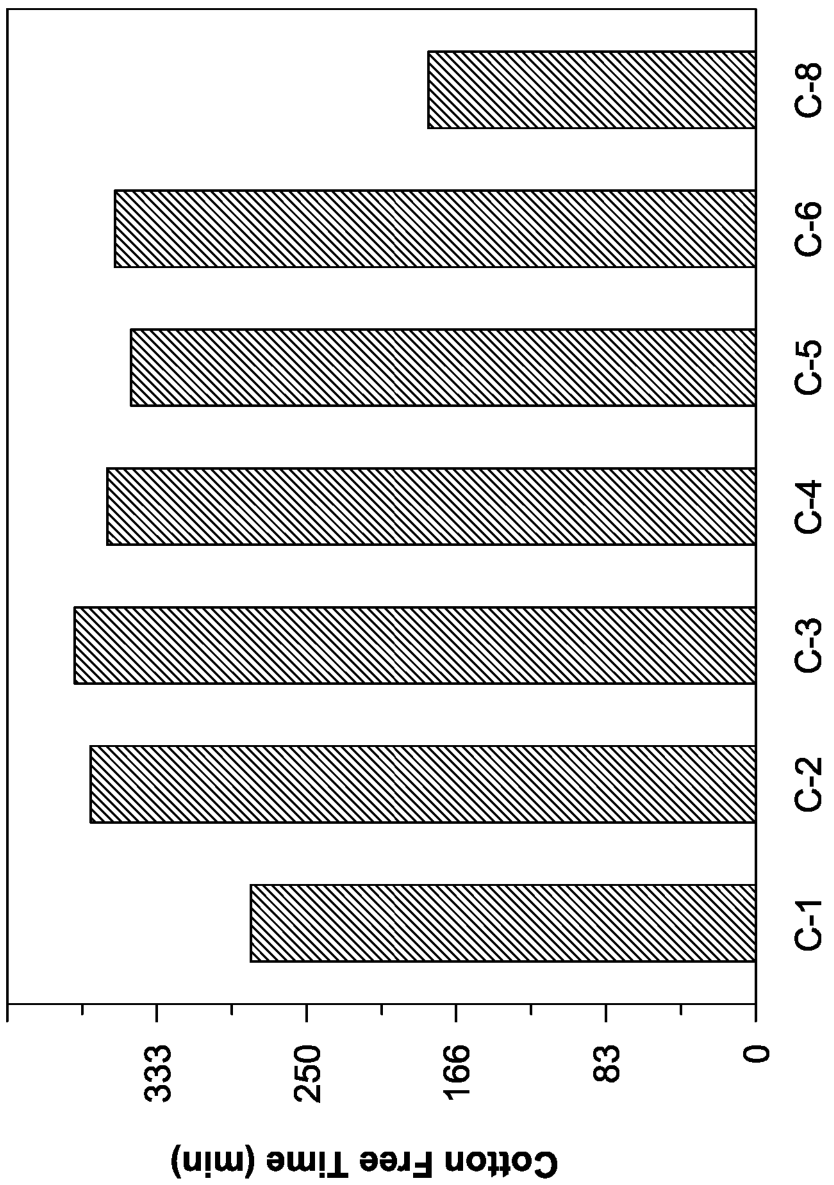


FIG. 2

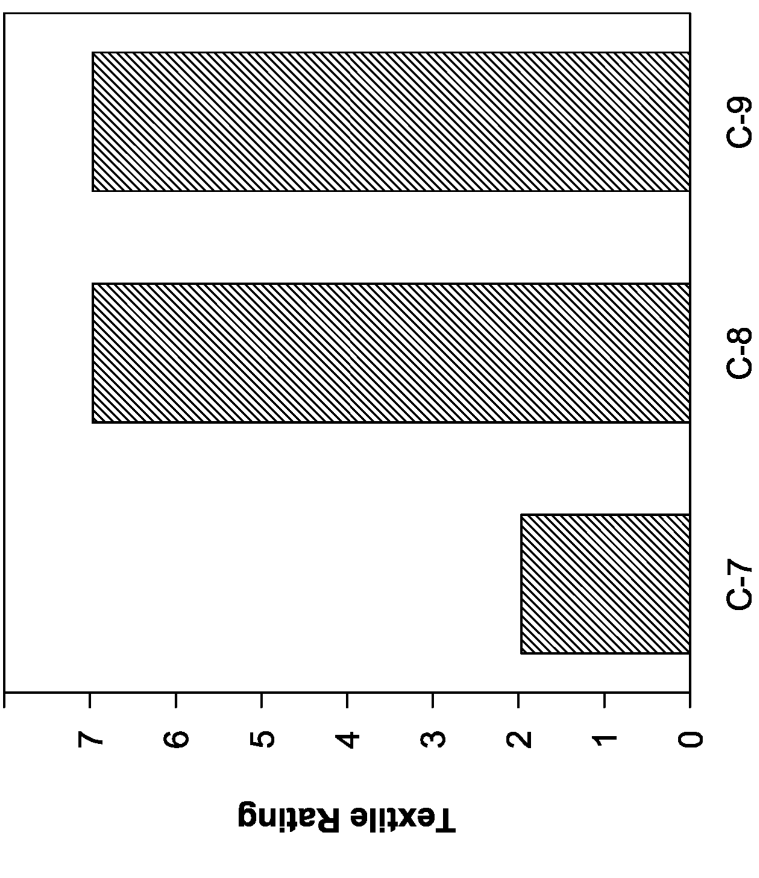
Textile Rating
0
1
2
3
4
5
6
7
C-7
C-8
C-9

FIG. 3

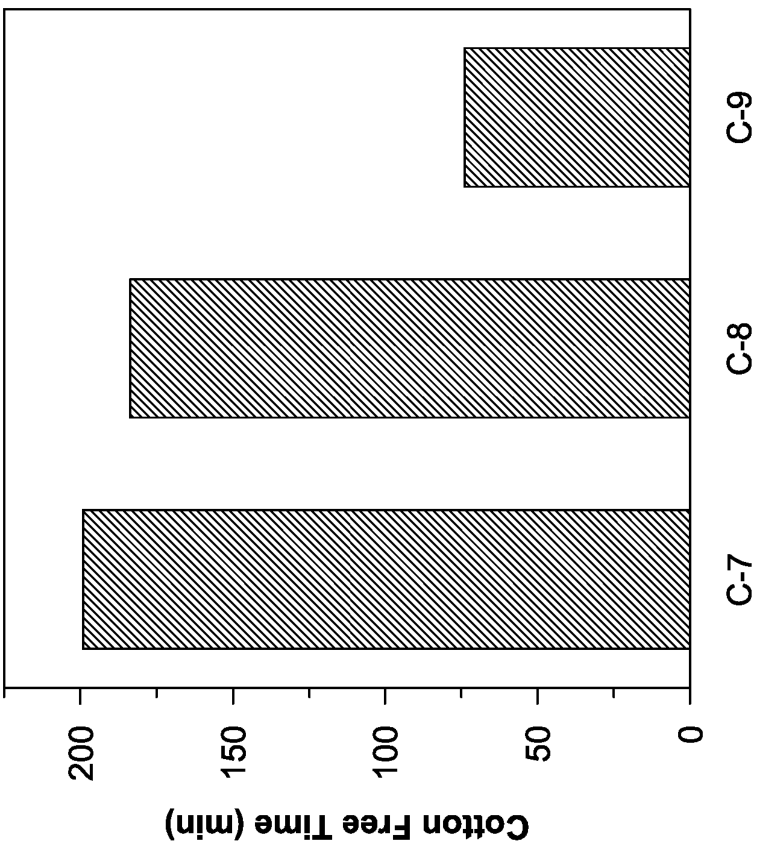
Cotton Free Time (min)
0
50
100
150
200
C-7
C-8
C-9

FIG. 4

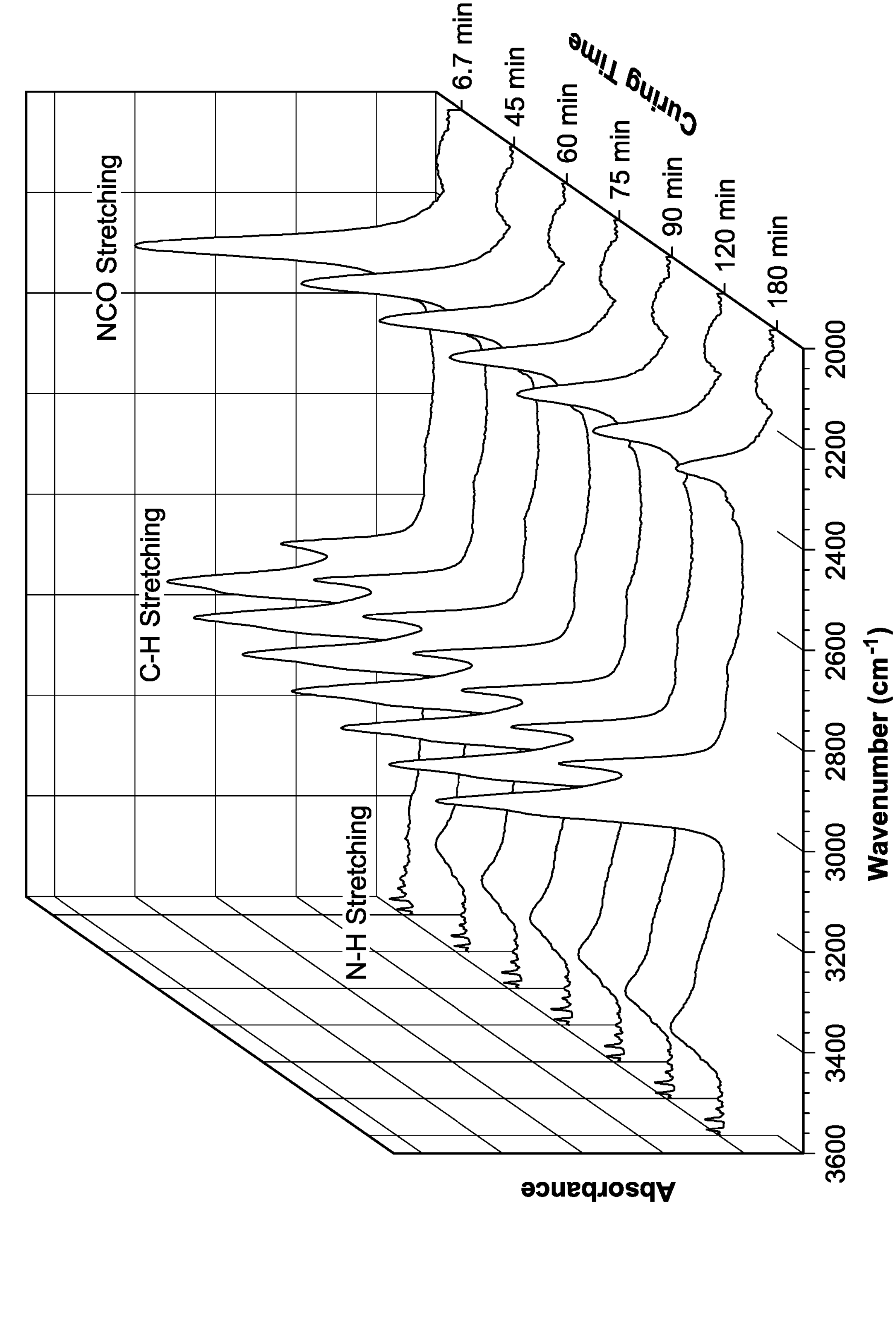
NCO Stretching
C-H Stretching
N-H Stretching
Curing Time
6.7 min
45 min
60 min
75 min
90 min
120 min
180 min
Absorbance
Wavenumber (cm-1)
3600
3400
3200
3000
2800
2600
2400
2200
2000

FIG. 5

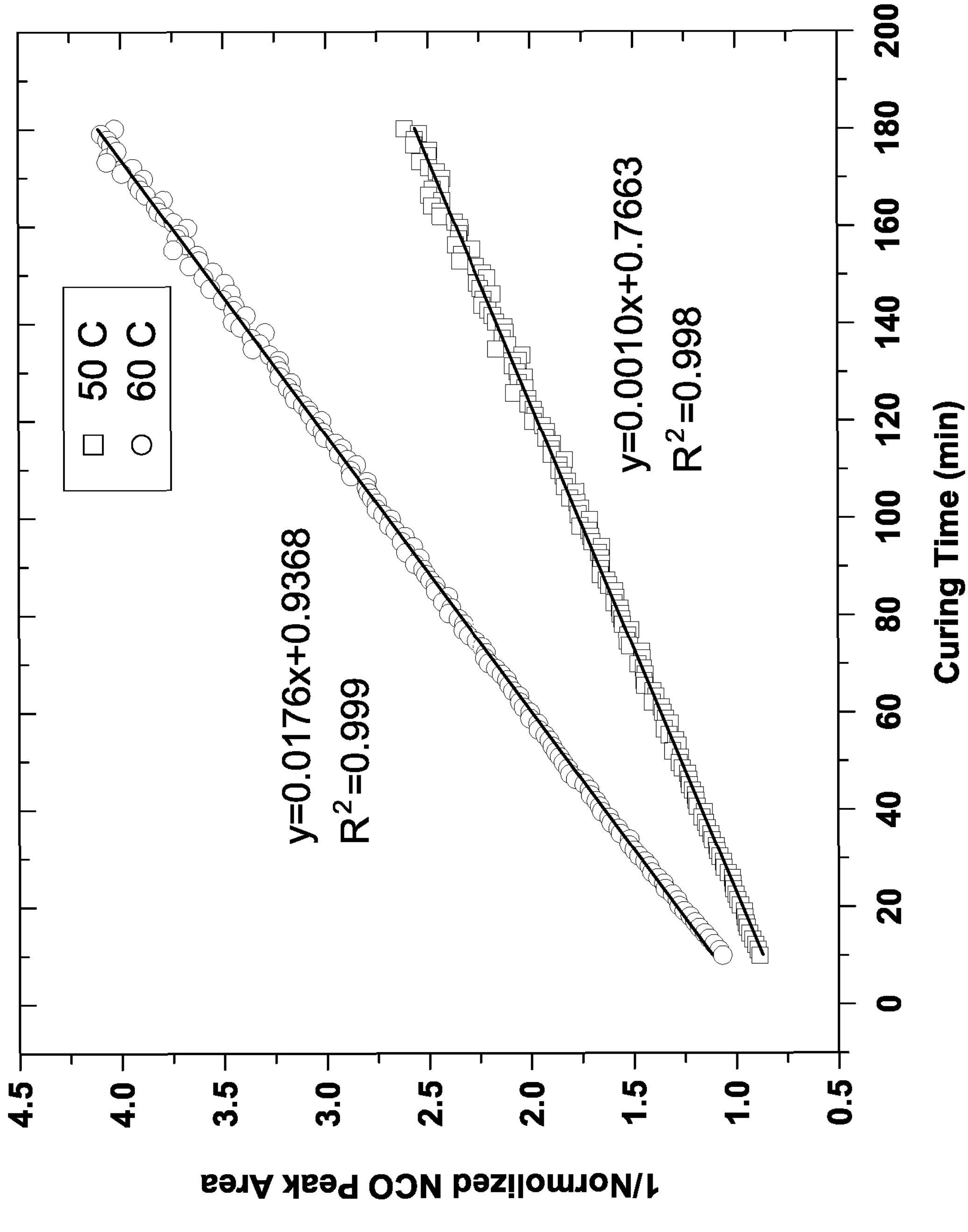
50 C
60 C
y=0.0176x+0.9368
R^2=0.999
y=0.0010x+0.7663
R^2=0.998
Curing Time (min)
1/Normolized NCO Peak Area
0
20
40
60
80
100
120
140
160
180
200
0.5
1.0
1.5
2.0
2.5
3.0
3.5
4.0
4.5

FIG. 6

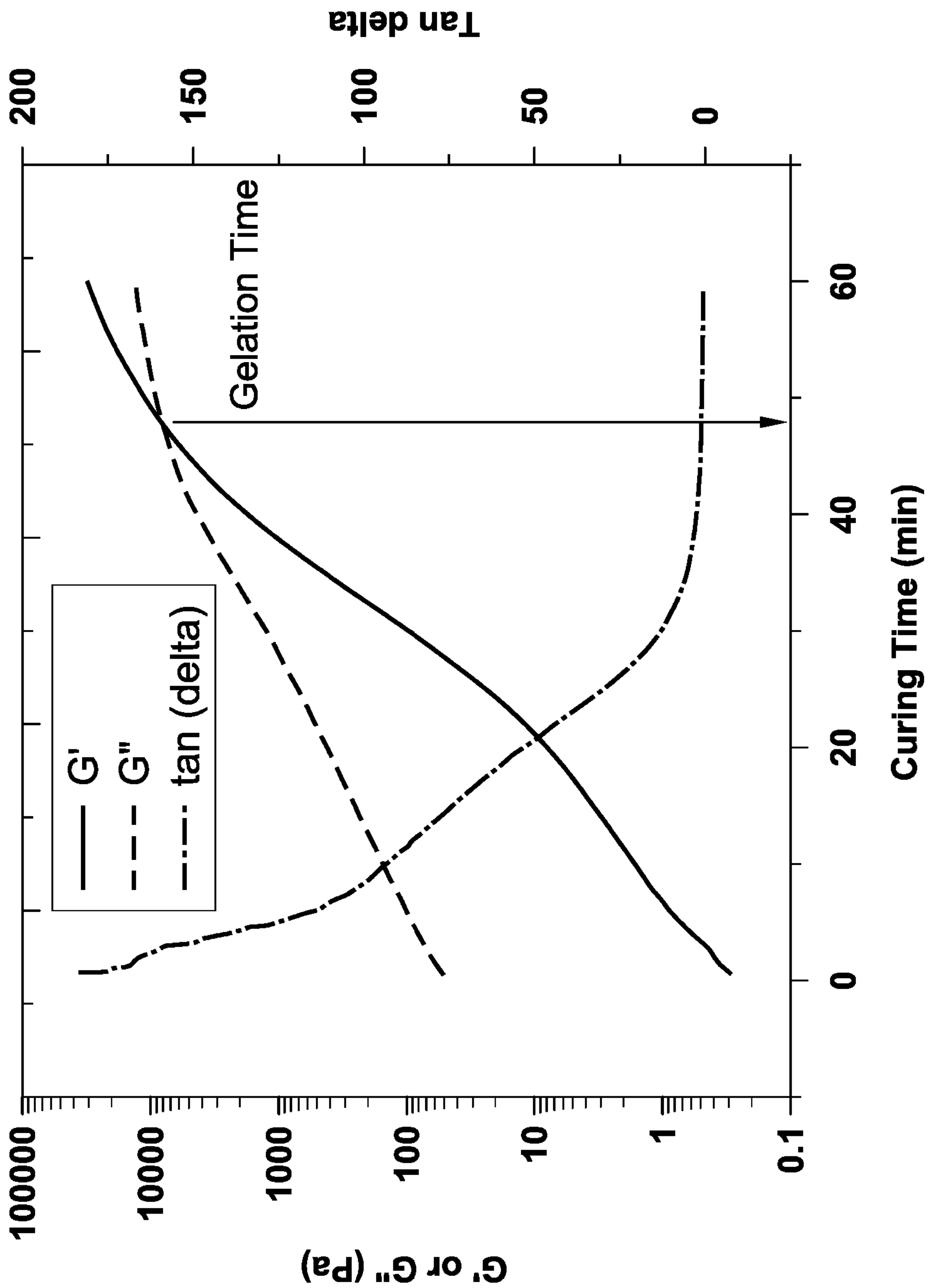
Tan delta
200
150
100
50
0
G' or G" (Pa)
100000
10000
1000
100
10
1
0.1
Curing Time (min)
0
20
40
60
G'
G"
tan (delta)
Gelation Time

FIG. 7

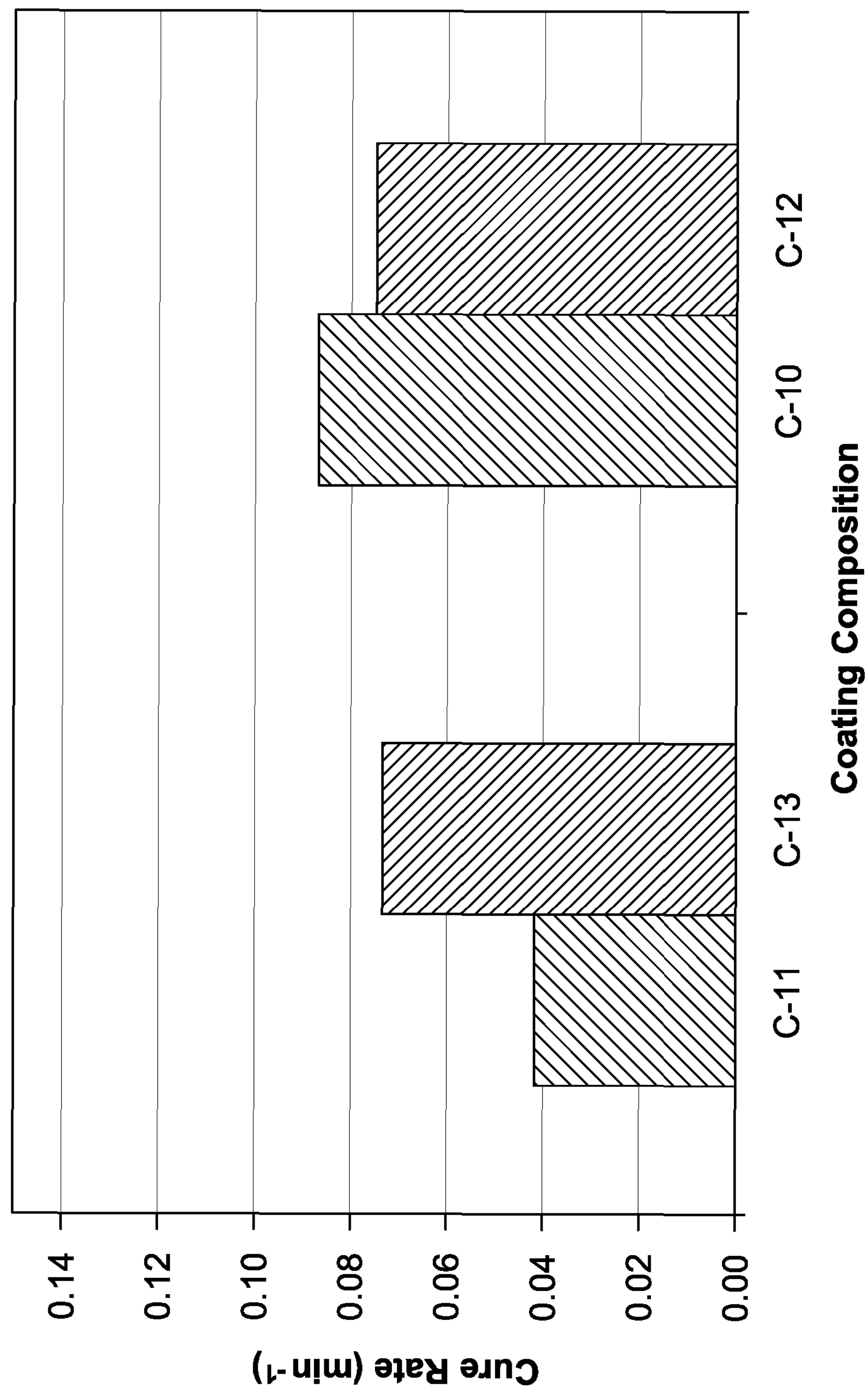
Cure Rate (min-1)
0.14
0.12
0.10
0.08
0.06
0.04
0.02
0.00
C-11
C-13
C-10
C-12
Coating Composition

FIG. 8

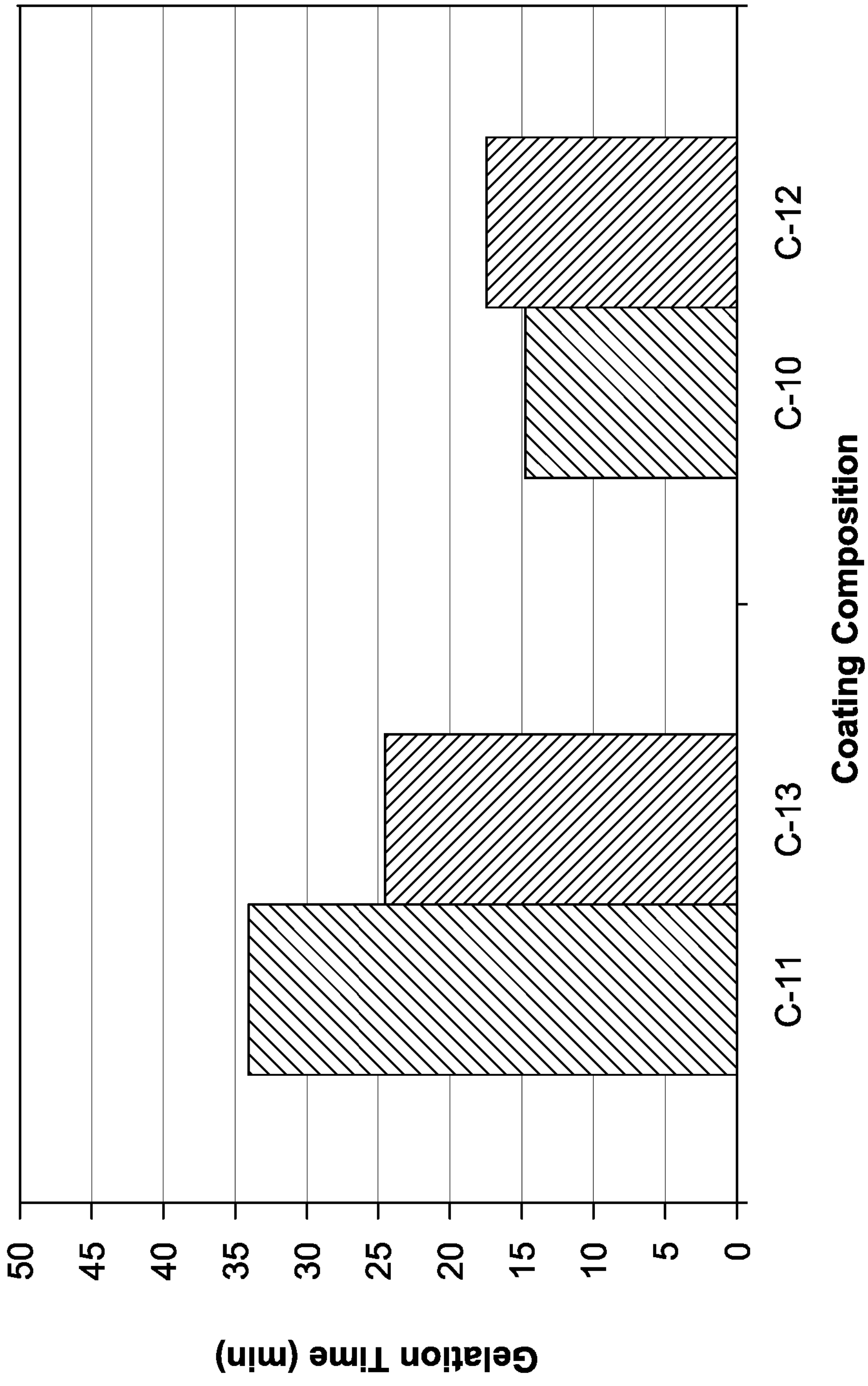

Gelation Time (min)
0
5
10
15
20
25
30
35
40
45
50
C-11
C-13
C-10
C-12
Coating Composition


FIG. 9

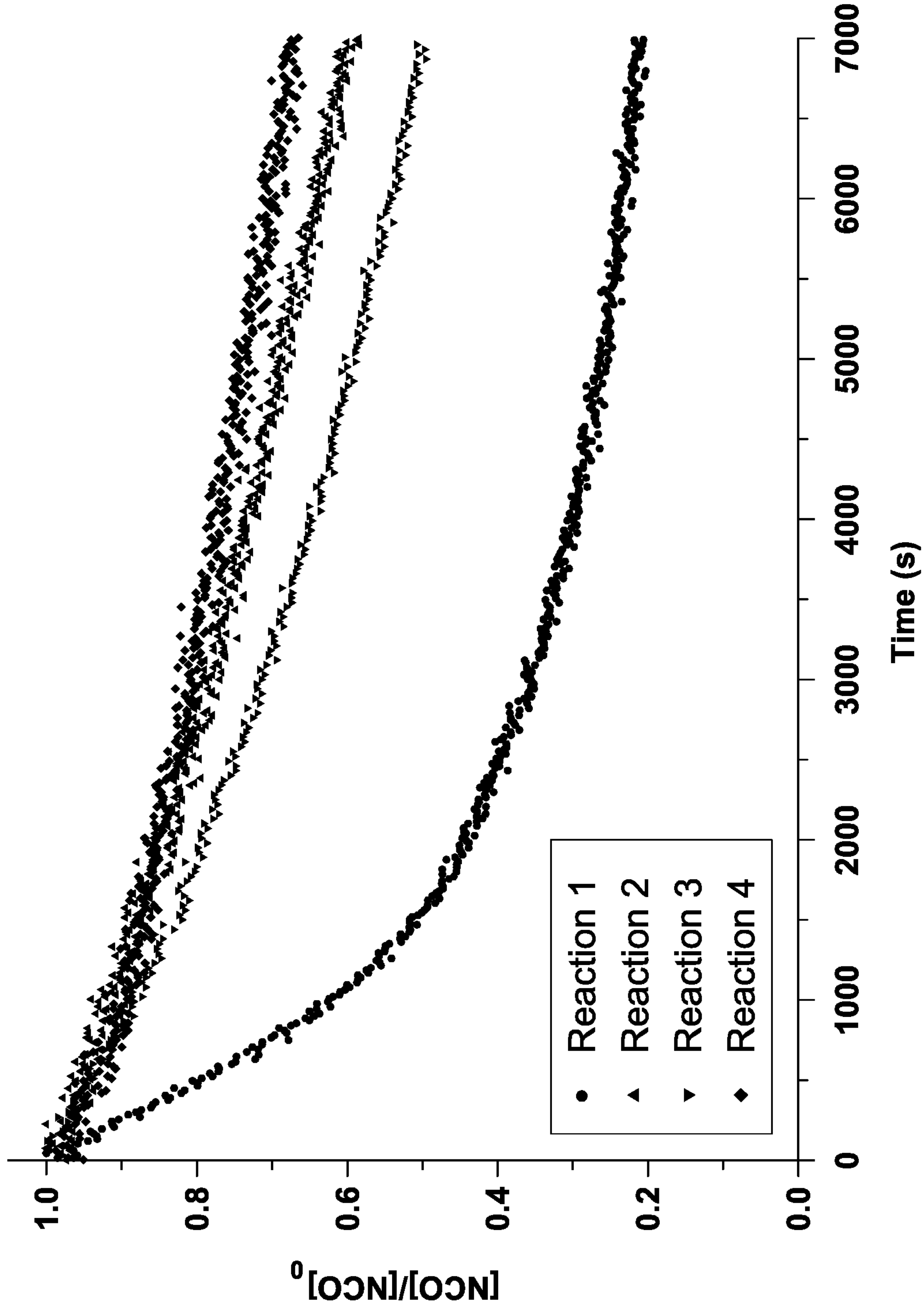
[NCO]/[NCO]0
Time (s)
0
1000
2000
3000
4000
5000
6000
7000
0.0
0.2
0.4
0.6
0.8
1.0
Reaction 1
Reaction 2
Reaction 3
Reaction 4

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 117806 A1
- EP 2746311 A1
- DE 4401544 A1
- US 2010204363 A
- US 2009011124 A
- US 8088846 B
- US 5349026 A
- US 5371148 A
- US 4737551 A
- US 4698391 A
- US 3345313 A
- US 4423166 A
- AR 2000

### Non-patent literature cited in the description

- **SPYROS, A.** Quantitative determination of the distribution of free hydroxylic and carboxylic groups in unsaturated polyester and alkyd resins by P-NMR spectroscopy. *Journal of Applied Polymer Science,* 2002, vol. 83 (8), 1635-1642